(19) **Europäisches Patentamt / European Patent Office / Office européen des brevets**

(11) **EP 4 561 196 A1**

(12) **EUROPEAN PATENT APPLICATION**
published in accordance with Art. 153(4) EPC

(43) Date of publication:
28.05.2025 Bulletin 2025/22

(21) Application number: 23851294.1

(22) Date of filing: 12.05.2023

(51) International Patent Classification (IPC):
*H04W 52/18* $^{(2009.01)}$

(52) Cooperative Patent Classification (CPC):
H04W 52/18

(86) International application number:
PCT/CN2023/094058

(87) International publication number:
WO 2024/032064 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.08.2022 CN 202210968894

(71) Applicant: Huawei Technologies Co., Ltd.
Shenzhen, Guangdong 518129 (CN)

(72) Inventors:
• YU, Yingjie
Shenzhen, Guangdong 518129 (CN)
• HUANG, Su
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **POWER CONTROL METHOD AND COMMUNICATION APPARATUS**

(57) According to a power control method and a communication apparatus provided in embodiments of this application, a power control solution for a terminal device to send a reference signal can be optimized, to improve positioning accuracy. The method includes: A first terminal device determines a ratio relationship between target transmit power corresponding to a first frequency domain unit and target transmit power corresponding to a second frequency domain unit, and determines, based on the ratio relationship, target transmit power corresponding to a first frequency domain resource and target transmit power corresponding to a second frequency domain resource. The first frequency domain unit is the first frequency domain resource, and the second frequency domain unit is the second frequency domain resource; or the first frequency domain unit is a frequency domain sub-resource of the first frequency domain resource, and the second frequency domain unit is a frequency domain sub-resource of the second frequency domain resource; and the first frequency domain resource and the second frequency domain resource are used to send a reference signal.

FIG. 8

## Description

This application claims priority to Chinese Patent Application No. 202210968894.8, filed with the China National Intellectual Property Administration on August 12, 2022 and entitled "POWER CONTROL METHOD AND COMMUNICATION APPARATUS", which is incorporated herein by reference in its entirety.

## TECHNICAL FIELD

This application relates to the field of wireless communication, and in particular, to a power control method and a communication apparatus.

## BACKGROUND

In a wireless communication system, a time difference-based positioning technology may mean that a network device measures a reference signal from a terminal device to obtain time difference information of arrival of the reference signal at the network device, and positions the terminal device based on the time difference information. Positioning accuracy of the time difference-based positioning technology is related to a bandwidth and power for sending a sounding reference signal (sounding reference signal, SRS) by the terminal device.

Currently, with development of wireless communication technologies, mobile services have increasingly high requirements on positioning accuracy. However, a current power control solution for sending a reference signal by a terminal device that is defined in the 3rd generation partnership project (3rd generation partnership project, 3GPP) technical standard (technical standard, TS) 38.213 cannot satisfy the requirements of the mobile services for positioning accuracy. Therefore, how to optimize the power control solution for sending a reference signal by a terminal device to improve positioning accuracy is an urgent problem to be resolved currently.

## SUMMARY

According to a power control method and a communication apparatus provided in embodiments of this application, a power control solution for a terminal device to send a reference signal can be optimized, to improve positioning accuracy.

To achieve the foregoing objective, the following technical solutions are used in embodiments of this application.

According to a first aspect, a power control method is provided. The method may be performed by a first terminal device; or may be performed by a component of the first terminal device, for example, a processor, a chip, or a chip system of the first terminal device; or may be implemented by a logical module or software that can implement all or some functions of the first terminal device. The following uses an example in which the method is performed by the first terminal device for description. The method includes: The first terminal device determines a ratio relationship between target transmit power corresponding to a first frequency domain unit and target transmit power corresponding to a second frequency domain unit, and determines, based on the ratio relationship, target transmit power corresponding to a first frequency domain resource and target transmit power corresponding to a second frequency domain resource. In this embodiment of this application, the first terminal device may determine a ratio relationship between target transmit power corresponding to all of a plurality of frequency domain units for sending a reference signal, and determine, based on the ratio relationship, target transmit power corresponding to each of a plurality of frequency domain resources. This can avoid that the terminal device preferentially configures, for a frequency domain resource corresponding to a PCell, transmit power for sending the reference signal, thereby avoiding an excessively large difference between transmit power corresponding to all of the plurality of frequency domain resources, so that a position estimation error can be reduced, and positioning accuracy can be improved. Therefore, based on the power control method provided in this embodiment of this application, a power control solution for a terminal device to send a reference signal can be optimized, to improve positioning accuracy.

In a possible implementation, the power control method provided in the first aspect further includes:
the first terminal device receives first indication information from a second device, where the first indication information indicates the first terminal device to determine, based on the ratio relationship, the target transmit power corresponding to the first frequency domain resource and the target transmit power corresponding to the second frequency domain resource.

In a possible implementation, the first indication information includes the ratio relationship between the target transmit power corresponding to the first frequency domain unit and the target transmit power corresponding to the second frequency domain unit.

In a possible implementation, before the first terminal device receives the first indication information from the second device, the power control method provided in the first aspect further includes:
the first terminal device sends capability information to the second device, where the capability information indicates that the first terminal device has a capability of sending the reference signal based on a ratio relationship between target transmit power corresponding to different frequency domain units.

In a possible implementation, the power control method provided in the first aspect further includes:
the first terminal device sends the reference signal on the first frequency domain resource at the target transmit power corresponding to the first frequency domain resource, and sends the reference signal on the second frequency domain resource at the target transmit power corresponding to the second frequency domain resource.

In a possible implementation, the first frequency domain resource is a resource corresponding to an active bandwidth part BWP of a first cell to which the first terminal device is connected, and the second frequency domain resource is a resource corresponding to an active BWP of a second cell to which the first terminal device is connected; or the first frequency domain resource is a frequency domain resource corresponding to a first carrier to which the first terminal device is connected, and the second frequency domain resource is a frequency domain resource corresponding to a second carrier to which the first terminal device is connected.

In a possible implementation, a frequency domain sub-resource is a resource block RB or a resource element RE.

In a possible implementation, that the first terminal device determines, based on the ratio relationship, the target transmit power corresponding to the first frequency domain resource and the target transmit power corresponding to the second frequency domain resource includes:

the first terminal device obtains information corresponding to the first frequency domain resource and/or the second frequency domain resource; and
the first terminal device determines, based on the information corresponding to the first frequency domain resource and/or the second frequency domain resource and the ratio relationship, the target transmit power corresponding to the first frequency domain resource and the target transmit power corresponding to the second frequency domain resource.

In a possible implementation, the ratio relationship between the target transmit power corresponding to the first frequency domain unit and the target transmit power corresponding to the second frequency domain unit includes that the target transmit power corresponding to the first frequency domain unit is the same as the target transmit power corresponding to the second frequency domain unit.

In a possible implementation, the first frequency domain unit is the first frequency domain resource, and the second frequency domain unit is the second frequency domain resource; and that the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource includes:
the first terminal device determines, based on transmit power corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource, where the target transmit power corresponding to the second frequency domain resource is the same as the target transmit power corresponding to the first frequency domain resource, and the target transmit power corresponding to the first frequency domain resource is a smallest value in first transmit power and second transmit power.

The first frequency domain resource is the resource corresponding to the active BWP of the first cell to which the first terminal device is connected, the second frequency domain resource is the resource corresponding to the active BWP of the second cell to which the first terminal device is connected, and the first transmit power is allowed maximum average transmit power of the first terminal device on a transmission occasion i.

Alternatively, the first frequency domain resource is the frequency domain resource corresponding to the first carrier to which the first terminal device is connected, the second frequency domain resource is the frequency domain resource corresponding to the second carrier to which the first terminal device is connected, and the first transmit power is allowed maximum average transmit power of the first terminal device.

The second transmit power is an average value of or a largest value in the transmit power corresponding to the first frequency domain resource and the transmit power corresponding to the second frequency domain resource; or the second transmit power is the transmit power corresponding to the first frequency domain resource or the second frequency domain resource; or the second transmit power is determined by the first terminal device based on the transmit power corresponding to the first frequency domain resource or the second frequency domain resource.

In a possible implementation, the first frequency domain unit is the first frequency domain resource, and the second frequency domain unit is the second frequency domain resource; and that the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource includes: The first terminal device determines, based on transmit power corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource, where the target transmit power corresponding to the second frequency domain resource is the same as the target transmit power corresponding to the first frequency domain resource, and the target transmit power corresponding to the first frequency domain resource is a smallest value in first transmit power and second transmit power.

The first transmit power is maximum average transmit power determined based on allowed maximum transmit power of the first terminal device, or the first transmit power is remaining average transmit power determined based on transmit power allocated to at least one signal or channel whose priority is higher than that of the reference signal and the allowed maximum transmit power of the first terminal device. The second transmit power is an average value of or a largest value in the transmit power corresponding to the first frequency domain resource and the transmit power corresponding to the second frequency domain resource; or the second transmit power is the transmit power corresponding to the first frequency domain resource or the second frequency domain resource; or the second transmit power is determined by the first terminal device based on the transmit power corresponding to the first frequency domain resource or the second frequency domain resource.

In a possible implementation, the first frequency domain resource is the resource corresponding to the active BWP of the first cell to which the first terminal device is connected, the second frequency domain resource is the resource corresponding to the active BWP of the second cell to which the first terminal device is connected, and the first transmit power is maximum average transmit power determined based on allowed maximum transmit power of the first terminal device on a transmit occasion i for sending the reference signal, or the first transmit power is remaining average transmit power determined based on transmit power allocated to at least one signal or channel whose priority is higher than that of the reference signal and allowed maximum transmit power of the first terminal device on a transmit occasion i.

In a possible implementation, the first frequency domain resource is the frequency domain resource corresponding to the first carrier to which the first terminal device is connected, the second frequency domain resource is the frequency domain resource corresponding to the second carrier to which the first terminal device is connected, and the first transmit power is maximum average transmit power determined based on allowed maximum transmit power of the first terminal device, or the first transmit power is remaining average transmit power determined based on transmit power allocated to at least one signal or channel whose priority is higher than that of the reference signal and allowed maximum transmit power of the first terminal device.

In a possible implementation, the first transmit power is determined based on allocable transmit power of the first terminal device. The allocable transmit power of the first terminal device is allowed maximum transmit power of the first terminal device, or the allocable transmit power of the first terminal device is remaining transmit power determined based on transmit power allocated to at least one signal or channel whose priority is higher than that of the reference signal and the allowed maximum transmit power of the first terminal device.

In a possible implementation, the allocable transmit power of the first terminal device is remaining transmit power determined based on transmit power allocated to at least one signal or channel whose priority is higher than that of the reference signal.

The at least one signal or channel whose priority is higher than that of the reference signal may include a physical random access channel (physical random access channel, PRACH), a channel for transmitting channel state information (channel state information, CSI), a PUSCH for transmitting hybrid automatic repeat request (hybrid automatic repeat request, HARQ) acknowledgement (acknowledgement, ACK) information, or the like.

Alternatively, the at least one signal or channel whose priority is higher than that of the reference signal may include a PSCCH for transmitting CSI, a PSSCH, a PSFCH, or the like. Alternatively, the at least one signal or channel whose priority is higher than that of the reference signal may be a signal or a channel agreed on in an SL-related protocol; or the at least one signal or channel whose priority is higher than that of the reference signal may be configured by the second device for the first terminal device.

In a possible implementation, the allocable transmit power of the first terminal device is remaining transmit power determined based on a power offset. The power offset may be agreed on in a protocol, or may be negotiated by the first terminal device and the second device in advance, or may be preconfigured by the first terminal device.

In a possible implementation, the allocable transmit power of the first terminal device may be remaining transmit power determined based on a power offset and allowed maximum transmit power of the first terminal device. For example, the allocable transmit power of the first terminal device may be a difference between or a product of the allowed maximum transmit power of the first terminal device and the power offset.

In a possible implementation, the allocable transmit power of the first terminal device may be remaining transmit power determined based on a power offset, allowed maximum transmit power of the first terminal device, and transmit power allocated to at least one signal or channel whose priority is higher than that of the reference signal. For example, the allocable transmit power of the first terminal device may be a largest value in a first difference and a second difference. The first difference is a difference between the allowed maximum transmit power of the first terminal device and the power offset, and the second difference is a difference between the allowed maximum transmit power of the first terminal device and the transmit power allocated to the at least one signal or channel whose priority is higher than that of the reference signal.

In a possible implementation, the first frequency domain unit is a frequency domain sub-resource of the first frequency domain resource, and the second frequency domain unit is a frequency domain sub-resource of the second frequency domain resource; and that the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource includes:

the first terminal device determines, based on size information of the first frequency domain resource, size information of the second frequency domain resource, and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource.

The first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource includes a quantity of frequency domain sub-resources in the active BWP of the first cell, and the size information of the second frequency domain resource includes a quantity of frequency domain sub-resources in the active BWP of the second cell.

Alternatively, the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource includes a quantity of frequency domain sub-resources of the first carrier, and the size information of the second frequency domain resource includes a quantity of frequency domain sub-resources of the second carrier.

In a possible implementation, the first frequency domain unit is a frequency domain sub-resource of the first frequency domain resource, and the second frequency domain unit is a frequency domain sub-resource of the second frequency domain resource; and that the first terminal device determines, based on the information corresponding to the first frequency domain resource and/or the second frequency domain resource and the ratio relationship, the target transmit power corresponding to the first frequency domain resource and the target transmit power corresponding to the second frequency domain resource includes: The first terminal device determines, based on a ratio relationship between a quantity of frequency domain sub-resources of the first frequency domain resource and a total quantity corresponding to a plurality of frequency domain sub-resources, a ratio relationship between a quantity of frequency domain sub-resources of the second frequency domain resource and the total quantity corresponding to the plurality of frequency domain sub-resources, and allocable transmit power of the first terminal device, the target transmit power corresponding to the first frequency domain resource and the target transmit power corresponding to the second frequency domain resource. The plurality of frequency domain sub-resources include each frequency domain sub-resource in the first frequency domain resource and each frequency domain sub-resource in the second frequency domain resource. It may be understood that the plurality of frequency domain sub-resources may alternatively be all corresponding frequency domain sub-resources required for sending the reference signal on a same transmission occasion i.

In other words, the target transmit power corresponding to the first frequency domain resource or the second frequency domain resource is determined based on a ratio relationship between the quantity of frequency domain sub-resources included in the first frequency domain resource or the second frequency domain resource and a quantity of all corresponding frequency domain sub-resources required for sending the reference signal on the same transmission occasion, so that transmit power corresponding to all the frequency domain sub-resources can be consistent, thereby improving positioning accuracy by improving consistency of power for the second device to receive reference signals transmitted on all frequency domain resources.

In a possible implementation, the first frequency domain resource is the resource corresponding to the active BWP of the first cell to which the first terminal device is connected, and the second frequency domain resource is the resource corresponding to the active BWP of the second cell to which the first terminal device is connected; and the target transmit power corresponding to the first frequency domain resource or the second frequency domain resource is

$$\frac{M_{SRS,b\_m,f\_m,c\_m}(i)}{\sum M_{SRS}(i)} \cdot P_{CMAX}(i)$$ ; or the target transmit power corresponding to the first frequency domain resource or the second frequency domain resource is $P_{CMAX}(i) + 10log_{10}(M_{SRS,b\_m,f\_m,c\_m}(i)/\sum M_{SRS}(i))$.

Alternatively, the target transmit power corresponding to the first frequency domain resource or the second frequency domain resource is $$\frac{M_{SRS,b\_m,f\_m,c\_m}(i)}{\sum M_{SRS}(i)} \cdot \Delta P(i)$$ ; or the target transmit power corresponding to the first frequency domain resource or the second frequency domain resource is $\Delta P(i) + 10log_{10}(M_{SRS,b\_m,f\_m,c\_m}(i)/\sum M_{SRS}(i))$.

$P_{CMAX}(i)$ is allowed maximum transmit power of the first terminal device on a transmission occasion i for sending the reference signal, $\Delta P(i)$ is remaining transmit power determined based on the transmit power allocated to the at least one signal or channel whose priority is higher than that of the reference signal and $P_{CMAX}(i)$, and $\sum M_{SRS}(i)$ is a sum of the quantity of frequency domain sub-resources in the active BWP of the first cell and the quantity of frequency domain sub-resources in the active BWP of the second cell on the transmission occasion $i$; and when $m$ in $c\_m$ is an index of the first cell, $M_{SRS,b\_m,f\_m,c\_m}(i)$ is a quantity of frequency domain sub-resources in an active BWP $b\_m$ of a carrier $f\_m$ of the first cell $c\_m$ on the transmission occasion i; or when $m$ in $c\_m$ is an index of the second cell, $M_{SRS,b\_m,f\_m,c\_m}(i)$ is a quantity of frequency domain sub-resources in an active BWP $b\_m$ of a carrier $f\_m$ of the second cell $c\_m$ on the transmission occasion $i$.

In a possible implementation, the first frequency domain resource is the resource corresponding to the active BWP of the first cell to which the first terminal device is connected, and the second frequency domain resource is the resource corresponding to the active BWP of the second cell to which the first terminal device is connected; and the target transmit power corresponding to the first frequency domain resource or the second frequency domain resource is $P'_{SRS,b_m,f_m,c_m}(i,q_{Sm})$. $P'_{SRS,b_m,f_m,c_m}(i,q_{Sm}) = \beta_{SRS,b_m,f_m,c_m} \cdot P_{SRS,b_m,f_m,c_m}(i, q_{Sm})$; or $P'_{SRS,b\_m,f\_m,c\_m}(i,q_{s\_m}) = \beta_{SRS,b\_m,f\_m,c\_m} + P_{SRS,b\_m,f\_m,c\_m}(i,q_{s\_m})$.

Further, $\beta_{SRS,b\_m,f\_m,c\_m}$ satisfies the following relationship: $\beta_{SRS,b\_m,f\_m,c\_m} =$

$$\frac{P_{CMAX}(i)}{P_{SRS,b\_m,f\_m,c\_m}(i,q_{s\_m})} \cdot \frac{M_{SRS,b\_m,f\_m,c\_m}(i)}{\sum M_{SRS}(i)}$$ ; or $$\beta_{SRS,b\_m,f\_m,c\_m} = \frac{1}{P_{SRS,b\_m,f\_m,c\_m}(i,q_{s\_m})} \cdot$$

$$\left( P_{CMAX}(i) + 10log_{10}\left( \frac{M_{SRS,b\_m,f\_m,c\_m}(i)}{\sum M_{SRS}(i)} \right) \right)$$ ; or $\beta_{SRS,b\_m,f\_m,c\_m} = P_{CMAX}(i) +$

$$10log_{10}\left( \frac{M_{SRS,b\_m,f\_m,c\_m}(i)}{\sum M_{SRS}(i)} \right) - P_{SRS,b\_m,f\_m,c\_m}\left( i, q_{s\_m} \right)$$ ; or

$$\beta_{SRS,b\_m,f\_m,c\_m} = \frac{\Delta P(i)}{P_{SRS,b\_m,f\_m,c\_m}(i,q_{s\_m})} \cdot \frac{M_{SRS,b\_m,f\_m,c\_m}(i)}{\sum M_{SRS}(i)}$$ ; or $\beta_{SRS,b\_m,f\_m,c\_m} =$

$$\frac{1}{P_{SRS,b\_m,f\_m,c\_m}(i,q_{s\_m})} \cdot \left( \Delta P(i) + 10log_{10}\left( \frac{M_{SRS,b\_m,f\_m,c\_m}(i)}{\sum M_{SRS}(i)} \right) \right)$$ ; or $\beta_{SRS,b\_m,f\_m,c\_m} = \Delta P(i) +$

$$10log_{10}\left( \frac{M_{SRS,b\_m,f\_m,c\_m}(i)}{\sum M_{SRS}(i)} \right) - P_{SRS,b\_m,f\_m,c\_m}\left( i, q_{s\_m} \right)$$ .

$P_{CMAX}(i)$ is allowed maximum transmit power of the first terminal device on a transmission occasion i for sending the reference signal, $\Delta P(i)$ is remaining transmit power determined based on the transmit power allocated to the at least one signal or channel whose priority is higher than that of the reference signal and $P_{CMAX}(i)$, and $\sum M_{SRS}(i)$ is a sum of the quantity of frequency domain sub-resources in the active BWP of the first cell and the quantity of frequency domain sub-resources in the active BWP of the second cell on the transmission occasion $i$; and when m in $c\_m$ is an index of the first cell, $P'_{SRS,b\_m,f\_m,c\_m}(i,q_{s\_m})$ is the target transmit power corresponding to the first frequency domain resource, $P_{SRS,b\_m,f\_m,c\_m}(i, q_{s\_m})$ is the transmit power corresponding to the first frequency domain resource, $q_{s\_m}$ is an index corresponding to a resource or a resource set of the reference signal in the first cell, and $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$; or when $m$ in $c\_m$ is an index of the second cell, $P'_{SRS,b\_m,f\_m,c\_m}(i,q_{s\_m})$ is the target transmit power corresponding to the second frequency domain resource, $P_{SRS,b\_m,f\_m,c\_m}(i, q_{s\_m})$ is the transmit power corresponding to the second frequency domain resource, $q_{s\_m}$ is an index corresponding to a resource or a resource set of the reference signal in the second cell, and $M_{SRS,b\_m,f\_m,c\_m}(i)$ is a quantity of frequency domain sub-resources in an active BWP $b\_m$ of a carrier *f_m* of the second cell *c_m* on the transmission occasion *i*.

In a possible implementation, the first frequency domain resource is the frequency domain resource corresponding to the first carrier to which the first terminal device is connected, and the second frequency domain resource is the frequency domain resource corresponding to the second carrier to which the first terminal device is connected; and the target transmit power corresponding to the first frequency domain resource or the second frequency domain resource is $\frac{M_{PRS\_n}(i)}{\sum M_{PRS}(i)} \cdot P_{CMAX}$; or the target transmit power corresponding to the first frequency domain resource or the second frequency domain resource is $P_{CMAX} + 10log_{10}(M_{PRS\_n}(i)/\sum M_{PRS}(i))$.

Alternatively, the target transmit power corresponding to the first frequency domain resource or the second frequency domain resource is $\frac{M_{PRS\_n}(i)}{\sum M_{PRS}(i)} \cdot \Delta P$; or the target transmit power corresponding to the first frequency domain resource or the second frequency domain resource is $\Delta P + 10log_{10}(M_{PRS\_n}(i)/\sum M_{PRS}(i))$.

$P_{CMAX}$ is the allowed maximum transmit power of the first terminal device, $\Delta P$ is the remaining transmit power determined based on the transmit power allocated to the at least one signal or channel whose priority is higher than that of the reference signal and $P_{CMAX}$, and $\sum M_{PRS}(i)$ is a sum of the quantity of frequency domain sub-resources of the first carrier and the quantity of frequency domain sub-resources of the second carrier on a transmission occasion *i;* and when *n* in $PRS\_n$ is an index of the first carrier, $M_{PRS\_n}(i)$ is a quantity of frequency domain sub-resources of the first carrier *f_n* on the transmission occasion *i;* or when *n* in $PRS\_n$ is an index of the second carrier, $M_{PRS\_n}(i)$ is a quantity of frequency domain sub-resources of the second carrier *f_n* on the transmission occasion *i*.

In a possible implementation, the first frequency domain resource is the frequency domain resource corresponding to the first carrier to which the first terminal device is connected, and the second frequency domain resource is the frequency domain resource corresponding to the second carrier to which the first terminal device is connected; and the target transmit power corresponding to the first frequency domain resource or the second frequency domain resource is $P'_{PRS\_n}(i)$. $P'_{PRS\_n}(i) = \beta_{PRS\_n} \cdot P_{PRS\_n}(i)$; or $P'_{PRS}(i) = \beta_{PRS\_n} + P_{PRS\_n}(i)$. $\beta_{PRS\_n}$ satisfies the following relationship:

$$\beta_{PRS\_n} = \frac{P_{CMAX}}{P_{PRS\_n}(i)} \cdot \frac{M_{PRS\_n}(i)}{\sum M_{PRS}(i)} \; ; \; or \qquad \beta_{PRS\_n} = \frac{1}{P_{PRS\_n}(i)} \cdot \left( P_{CMAX} + 10log_{10}\left(\frac{M_{PRS\_n}(i)}{\sum M_{PRS}(i)}\right)\right) \; ; \; or$$

$$\beta_{PRS\_n} = P_{CMAX} + 10log_{10}\left(\frac{M_{PRS\_n}(i)}{\sum M_{PRS}(i)}\right) - P_{PRS\_n}(i) \; ; \; or \qquad \beta_{PRS\_n} = \frac{\Delta P}{P_{PRS\_n}(i)} \cdot \frac{M_{PRS\_n}(i)}{\sum M_{PRS}(i)} \; ; \; or$$

$$\beta_{PRS\_n} = \frac{1}{P_{PRS\_n}(i)} \cdot \left( \Delta P + 10log_{10}\left(\frac{M_{PRS\_n}(i)}{\sum M_{PRS}(i)}\right)\right) \; ; \qquad or$$

$$\beta_{PRS\_n} = \Delta P + 10log_{10}\left(\frac{M_{PRS\_n}(i)}{\sum M_{PRS}(i)}\right) - P_{PRS\_n}(i).$$

$P_{CMAX}$ is the allowed maximum transmit power of the first terminal device, $\Delta P$ is the remaining transmit power determined based on the transmit power allocated to the at least one signal or channel whose priority is higher than that of the reference signal and $P_{CMAX}$, and $\sum M_{PRS}(i)$ is a sum of the quantity of frequency domain sub-resources of the first carrier and the quantity of frequency domain sub-resources of the second carrier on the transmission occasion *i;* and when *n* in $PRS\_n$ is an index of the first carrier, $P'_{PRS\_n}(i)$ is the target transmit power corresponding to the first frequency domain resource, $P_{PRS\_n}(i)$ is the transmit power corresponding to the first frequency domain resource, and $M_{PRS\_n}(i)$ is a quantity of frequency domain sub-resources of the first carrier *f_n* on the transmission occasion *i;* or when n in $PRS\_n$ is an index of the second carrier, $P'_{PRS\_n}(i)$ is the target transmit power corresponding to the second frequency domain resource, $P_{PRS\_n}(i)$ is the transmit power corresponding to the second frequency domain resource, and $M_{PRS\_n}(i)$ is a quantity of frequency domain sub-resources of the second carrier *f_n* on the transmission occasion *i*.

In a possible implementation, the first frequency domain unit is a frequency domain sub-resource of the first frequency domain resource, and the second frequency domain unit is a frequency domain sub-resource of the second frequency domain resource.

That the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource includes:

The first terminal device determines, based on size information of the first frequency domain resource, size information of the second frequency domain resource, transmit power corresponding to the first frequency domain resource and/or the second frequency domain resource, and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource.

The first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource includes a quantity of frequency domain sub-resources in the active BWP of the first cell, and the size information of the second frequency domain resource includes a quantity of frequency domain sub-resources in the active BWP of the second cell.

Alternatively, the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource includes a quantity of frequency domain sub-resources of the first carrier, and the size information of the second frequency domain resource includes a quantity of frequency domain sub-resources of the second carrier.

In a possible implementation, the first frequency domain unit is a frequency domain sub-resource of the first frequency domain resource, and the second frequency domain unit is a frequency domain sub-resource of the second frequency domain resource; and that the first terminal device determines, based on the information corresponding to the first frequency domain resource and/or the second frequency domain resource and the ratio relationship, the target transmit power corresponding to the first frequency domain resource and the target transmit power corresponding to the second frequency domain resource includes: The first terminal device determines, based on a ratio relationship between transmit power corresponding to the first frequency domain resource and total transmit power corresponding to a plurality of frequency domain resources, a ratio relationship between transmit power of the second frequency domain resource and the total transmit power corresponding to the plurality of frequency domain resources, and allocable transmit power of the first terminal device, the target transmit power corresponding to the first frequency domain resource and the target transmit power corresponding to the second frequency domain resource. The plurality of frequency domain resources include the first frequency domain resource and the second frequency domain resource.

In other words, the target transmit power corresponding to the first frequency domain resource or the second frequency domain resource is determined based on a ratio relationship between transmit power corresponding to each frequency domain resource and a sum of transmit power corresponding to all frequency domain resources in an existing power control solution.

In a possible implementation, the first frequency domain resource is the resource corresponding to the active BWP of the first cell to which the first terminal device is connected, and the second frequency domain resource is the resource corresponding to the active BWP of the second cell to which the first terminal device is connected; and the target transmit power corresponding to the first frequency domain resource or the second frequency domain resource is

$$P'_{SRS,b\_m,f\_m,c\_m}(i, q_{s\_m}) = \frac{P_{SRS,b\_m,f\_m,c\_m}(i,q_{s\_m})}{\sum P_{SRS}(i)} \cdot P_{CMAX}(i) \quad ; \quad \text{or}$$

$P'_{SRS,b\_m,f\_m,c\_m}(i,q_{s\_m}).$

$$P'_{SRS,b\_m,f\_m,c\_m}(i, q_{s\_m}) = \frac{P_{SRS,b\_m,f\_m,c\_m}(i,q_{s\_m})}{\sum P_{SRS}(i)} \cdot \Delta P(i) \quad ; \quad \text{or} \quad P'_{SRS,b\_m,f\_m,c\_m}(i,q_{s\_m}) = $$

$P_{SRS,b\_m,f\_m,c\_m}(i,q_{s\_m}) - \sum P_{SRS}(i) + \Delta P(i).$

$P_{CMAX}(i)$ is allowed maximum transmit power of the first terminal device on the transmission occasion $i$, $\Delta P(i)$ is remaining transmit power determined based on transmit power allocated to at least one signal or channel whose priority is higher than that of the reference signal and $P_{CMAX}(i)$, and $\Sigma P_{SRS}(i)$ is a sum of transmit power corresponding to the active BWP of the first cell and transmit power corresponding to the active BWP of the second cell on the transmission occasion $i$; and when $m$ in $c\_m$ is an index of the first cell, $P'_{SRS,b\_m,f\_m,c\_m}(i, q_{s\_m})$ is the target transmit power corresponding to the first frequency domain resource, $P_{SRS,b\_m,f\_m,c\_m}(i, q_{s\_m})$ is the transmit power corresponding to the first frequency domain resource, and $q_{s\_m}$ is an index corresponding to a resource or a resource set of the reference signal in the first cell; or when m in $c\_m$ is an index of the second cell, $P'_{SRS,b\_m,f\_m,c\_m}(i, q_{s\_m})$ is the target transmit power corresponding to the second frequency domain resource, $P_{SRS,b\_m,f\_m,c\_m}(i, q_{s\_m})$ is the transmit power corresponding to the second frequency domain resource, and $q_{s\_m}$ is an index corresponding to a resource or a resource set of the reference signal in the second cell.

In a possible implementation, the first frequency domain resource is the frequency domain resource corresponding to the first carrier to which the first terminal device is connected, and the second frequency domain resource is the frequency domain resource corresponding to the second carrier to which the first terminal device is connected; and the target transmit power corresponding to the first frequency domain resource or the second frequency domain resource is

$$P'_{PRS\_n}(i) = \frac{P_{PRS\_n}(i)}{\sum P_{PRS}(i)} \cdot P_{CMAX}$$

$P'_{PRS\_n}(i).$  ; or $P'_{PRS\_n}(i) = P_{PRS\_n}(i) - \Sigma P_{PRS}(i) + P_{CMAX}$; or $P'_{PRS\_n}(i) =$

$$\frac{P_{PRS\_n}(i)}{\sum P_{PRS}(i)} \cdot \Delta P$$ ; or $P'_{PRS\_n}(i) = P_{PRS\_n}(i) - \Sigma P_{PRS}(i) + \Delta P.$

$P_{CMAX}$ is allowed maximum transmit power of the first terminal device, $\Delta P$ is remaining transmit power determined based on transmit power allocated to at least one signal or channel whose priority is higher than that of the reference signal and $P_{CMAX}$, and $\Sigma P_{PRS}(i)$ is a sum of transmit power corresponding to the first carrier and transmit power corresponding to the second carrier on the transmission occasion $i$; and when $n$ in $PRS\_n$ is an index of the first carrier, $P'_{PRS\_n}(i)$ is the target transmit power corresponding to the first frequency domain resource, and $P_{PRS\_n}(i)$ is the transmit power corresponding to the first frequency domain resource; or when n in $PRS\_n$ is an index of the second carrier, $P'_{PRS\_n}(i)$ is the target transmit power corresponding to the second frequency domain resource, and $P_{PRS\_n}(i)$ is the transmit power corresponding to the second frequency domain resource.

In a possible implementation, the first frequency domain unit is a frequency domain sub-resource of the first frequency domain resource, and the second frequency domain unit is a frequency domain sub-resource of the second frequency domain resource; and that the first terminal device determines, based on the information corresponding to the first frequency domain resource and/or the second frequency domain resource and the ratio relationship, the target transmit power corresponding to the first frequency domain resource and the target transmit power corresponding to the second frequency domain resource includes: When an open-loop power control parameter corresponding to the first frequency domain resource is configured for the first terminal device, and an open-loop power control parameter corresponding to the second frequency domain resource is not configured for the first terminal device, the first terminal device determines, based on the open-loop power control parameter, a ratio relationship between a quantity of frequency domain sub-resources of the first frequency domain resource and a total quantity corresponding to a plurality of frequency domain sub-resources, and remaining transmit power, the target transmit power corresponding to the first frequency domain resource.

Further, the first terminal device determines, based on the target transmit power corresponding to the first frequency domain resource and a ratio relationship between a quantity of frequency domain sub-resources of the second frequency domain resource and the quantity of frequency domain sub-resources of the first frequency domain resource, the target transmit power corresponding to the second frequency domain resource.

The remaining transmit power is determined based on transmit power allocated to at least one signal or channel whose priority is higher than that of the reference signal and allowed maximum transmit power of the first terminal device, and the plurality of frequency domain sub-resources include each frequency domain sub-resource in the first frequency domain resource and each frequency domain sub-resource in the second frequency domain resource.

In a possible implementation, the first frequency domain resource is the resource corresponding to the active BWP of the first cell to which the first terminal device is connected, the second frequency domain resource is the resource corresponding to the active BWP of the second cell to which the first terminal device is connected, and the open-loop power control parameter includes target receive power of the reference signal, a path loss reference signal resource index corresponding to the reference signal, and a path loss compensation factor corresponding to the reference signal. The target transmit power corresponding to the first frequency domain resource is $P'_{SRS,b\_m,f\_m,c\_m}(i,q_{s\_m})$, and the target transmit power corresponding to the second frequency domain resource is $P'_{SRS,b\_n,f\_n,c\_n}(i,q_{s\_n})$.

$$P'_{SRS,b\_m,f\_m,c\_m}(i, q_{s\_m}) =$$

$$\min \left\{ \begin{array}{c} \Delta P(i) + 10 log_{10} \left( \frac{M_{SRS,b\_m,f\_m,c\_m}(i)}{\sum M_{SRS}(i)} \right) \\ P_{O\,SRS,b\_m,f\_m,c\_m}(q_{s\_m}) + 10\,log_{10} \left( 2^{\mu\_m} \cdot M_{SRS,b\_m,f\_m,c\_m}(i) \right) + \\ \alpha_{SRS,b\_m,f\_m,c\_m}(q_{s\_m}) \cdot PL_{b\_m,f\_m,c\_m}(q_{d\_m}) \end{array} \right\};$$

or

$$P'_{SRS,b\_m,f\_m,c\_m}\left(i, q_{s\_m}\right) =$$

$$min \begin{cases} P_{CMAX}(i) \\ \Delta P(i) + 10log_{10}\left(\frac{M_{SRS,b\_m,f\_m,c\_m}(i)}{\sum M_{SRS}(i)}\right) \\ P_{O_{SRS,b\_m,f\_m,c\_m}}\left(q_{s\_m}\right) + 10\,log_{10}\left(2^{\mu\_m} \cdot M_{SRS,b\_m,f\_m,c\_m}(i)\right) + \\ \alpha_{SRS,b\_m,f\_m,c\_m}\left(q_{s\_m}\right) \cdot PL_{b\_m,f\_m,c\_m}\left(q_{d\_m}\right) \end{cases}.$$

$$P'_{SRS,b\_n,f\_n,c\_n}\left(i, q_{s\_n}\right) = P'_{SRS,b\_m,f\_m,c\_m}\left(i, q_{s\_m}\right) + 10log_{10}\left(\frac{M_{SRS,b\_n,f\_n,c\_n}(i)}{M_{SRS,b\_m,f\_m,c\_m}(i)}\right).$$

$\Delta P(i)$ is the remaining transmit power, $\sum M_{SRS}(i)$ is a sum of a quantity of frequency domain sub-resources in the active BWP of the first cell and a quantity of frequency domain sub-resources in the active BWP of the second cell on a transmission occasion i for sending the reference signal, $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$, $q_{s\_m}$ is an index corresponding to a resource or a resource set of the reference signal in the first cell $c\_m$, $\mu\_m$ is a subcarrier spacing configuration corresponding to the active BWP $b\_m$ of the carrier $f\_m$ of the first cell $c\_m$, $P_{O_{SRS,b\_m,f\_m,c\_m}}(q_{s\_m})$ is target receive power of the reference signal in the active BWP $b\_m$ of the carrier $f\_m$ of the first cell $c\_m$, $\alpha_{SRS,b\_m,f\_m,c\_m}(q_{s\_m})$ is a path loss compensation factor corresponding to the reference signal in the active BWP $b\_m$ of the carrier $f\_m$ of the first cell $c\_m$, $PL_{b\_m,f\_m,c\_m}(q_{d\_m})$ is a path loss estimation value corresponding to the reference signal in the active BWP $b\_m$ of the carrier $f\_m$ of the first cell $c\_m$, and $M_{SRS,b\_n,f\_n,c\_n}(i)$ is a quantity of frequency domain sub-resources in the active BWP $b\_n$ of the carrier $f\_n$ of the second cell $c\_n$ on the transmission occasion $i$.

In a possible implementation, the first frequency domain unit is a frequency domain sub-resource of the first frequency domain resource, and the second frequency domain unit is a frequency domain sub-resource of the second frequency domain resource; and that the first terminal device determines, based on the information corresponding to the first frequency domain resource and/or the second frequency domain resource and the ratio relationship, the target transmit power corresponding to the first frequency domain resource and the target transmit power corresponding to the second frequency domain resource includes: When an open-loop power control parameter corresponding to the first frequency domain resource is the same as an open-loop power control parameter corresponding to the second frequency domain resource, the first terminal device determines, based on the open-loop power control parameter, a ratio relationship between a quantity of frequency domain sub-resources of the first frequency domain resource and a total quantity corresponding to a plurality of frequency domain sub-resources, a ratio relationship between a quantity of frequency domain sub-resources of the second frequency domain resource and the total quantity corresponding to the plurality of frequency domain sub-resources, and remaining transmit power, the target transmit power corresponding to the first frequency domain resource and the target transmit power corresponding to the second frequency domain resource.

The remaining transmit power is determined based on transmit power allocated to at least one signal or channel whose priority is higher than that of the reference signal and allowed maximum transmit power of the first terminal device, and the plurality of frequency domain sub-resources include each frequency domain sub-resource in the first frequency domain resource and each frequency domain sub-resource in the second frequency domain resource.

In a possible implementation, the first frequency domain resource is the resource corresponding to the active BWP of the first cell to which the first terminal device is connected, the second frequency domain resource is the resource corresponding to the active BWP of the second cell to which the first terminal device is connected, and the open-loop power control parameter includes target receive power of the reference signal, a path loss reference signal resource index corresponding to the reference signal, and a path loss compensation factor corresponding to the reference signal. The target transmit power corresponding to the first frequency domain resource or the second frequency domain resource is

$$P'_{SRS,b\_m,f\_m,c\_m}\left(i, q_{s\_m}\right). P'_{SRS,b\_m,f\_m,c\_m}\left(i, q_{s\_m}\right) =$$

$$min \begin{cases} \Delta P(i) + 10log_{10}\left(\frac{M_{SRS,b\_m,f\_m,c\_m}(i)}{\sum M_{SRS}(i)}\right) \\ P_{O_{SRS,b\_m,f\_m,c\_m}}\left(q_{s\_m}\right) + 10\,log_{10}\left(2^{\mu\_m} \cdot M_{SRS,b\_m,f\_m,c\_m}(i)\right) + \\ \alpha_{SRS,b\_m,f\_m,c\_m}\left(q_{s\_m}\right) \cdot PL_{b\_m,f\_m,c\_m}\left(q_{d\_m}\right) \end{cases};$$

or

$$P'_{SRS,b\_m,f\_m,c\_m}(i, q_{s\_m}) =$$

$$min \left\{ \begin{array}{c} P_{CMAX}(i) \\ \Delta P(i) + 10 log_{10}\left(\frac{M_{SRS,b\_m,f\_m,c\_m}(i)}{\sum M_{SRS}(i)}\right) \\ P_{O_{SRS,b\_m,f\_m,c\_m}}(q_{s\_m}) + 10\,log_{10}\left(2^{\mu\_m} \cdot M_{SRS,b\_m,f\_m,c\_m}(i)\right) + \\ \alpha_{SRS,b\_m,f\_m,c\_m}(q_{s\_m}) \cdot PL_{b\_m,f\_m,c\_m}(q_{d\_m}) \end{array} \right\}.$$

$\Delta P(i)$ is the remaining transmit power, and $\sum M_{SRS}(i)$ is a sum of a quantity of frequency domain sub-resources in the active BWP of the first cell and a quantity of frequency domain sub-resources in the active BWP of the second cell on a transmission occasion i for sending the reference signal. When m in $c\_m$ is an index of the first cell, $P'_{SRS,b\_m,f\_m,c\_m}(i, q_{s\_m})$ is the target transmit power corresponding to the first frequency domain resource, $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$, $q_{s\_m}$ is an index corresponding to a resource or a resource set of the reference signal in the first cell $c\_m$, $\mu\_m$ is a subcarrier spacing configuration corresponding to the active BWP $b\_m$ of the carrier $f\_m$ of the first cell $c\_m$, $P_{O_{SRS,b\_m,f\_m,c\_m}}(q_{s\_m})$ is target receive power of the reference signal in the active BWP $b\_m$ of the carrier $f\_m$ of the first cell $c\_m$, $\alpha_{SRS,b\_m,f\_m,c\_m}(q_{s\_m})$ is a path loss compensation factor corresponding to the reference signal in the active BWP $b\_m$ of the carrier $f\_m$ of the first cell $c\_m$, and $PL_{b\_m,f\_m,c\_m}(q_{d\_m})$ is a path loss estimation value corresponding to the reference signal in the active BWP $b\_m$ of the carrier $f\_m$ of the first cell $c\_m$.

When m in $c\_m$ is an index of the second cell, $P'_{SRS,b\_m,f\_m,c\_m}(i, q_{s\_m})$ is the target transmit power corresponding to the second frequency domain resource, $M_{SRS,b\_m,f\_m,c\_m}(i)$ is a quantity of frequency domain sub-resources in an active BWP $b\_m$ of a carrier $f\_m$ of the second cell $c\_m$ on the transmission occasion $i$, $q_{s\_m}$ is an index corresponding to a resource or a resource set of the reference signal in the second cell $c\_m$, $\mu\_m$ is a subcarrier spacing configuration corresponding to the active BWP $b\_m$ of the carrier $f\_m$ of the second cell $c\_m$, $P_{O_{SRS,b\_m,f\_m,c\_m}}(q_{s\_m})$ is target receive power of the reference signal in the active BWP $b\_m$ of the carrier $f\_m$ of the second cell $c\_m$, $\alpha_{SRS,b\_m,f\_m,c\_m}(q_{s\_m})$ is a path loss compensation factor corresponding to the reference signal in the active BWP $b\_m$ of the carrier $f\_m$ of the second cell $c\_m$, and $PL_{b\_m,f\_m,c\_m}(q_{d\_m})$ is a path loss estimation value corresponding to the reference signal in the active BWP $b\_m$ of the carrier $f\_m$ of the second cell $c\_m$.

In a possible implementation, the power control method provided in the first aspect further includes: The first terminal device sends third indication information to the second device, where the third indication information indicates that the first terminal device simultaneously sends the reference signal and the at least one signal or channel whose priority is higher than that of the reference signal; or the third indication information indicates that data is sent on the transmission occasion for sending the reference signal; or the third indication information indicates that the at least one signal or channel whose priority is higher than that of the reference signal is sent on the transmission occasion; or the third indication information indicates that transmit energy per resource element EPRE corresponding to the first frequency domain resource and/or the second frequency domain resource decreases on the transmission occasion; or the third indication information indicates that the allocable transmit power of the first terminal device decreases on the transmission occasion; or the third indication information indicates that a power level of the first terminal device decreases on the transmission occasion; or the third indication information indicates that power reduction exists on the first terminal device on the transmission occasion. It may be understood that positioning accuracy of a time difference-based positioning technology is related to a bandwidth and power for sending a reference signal by a terminal device. Therefore, when transmit power of the reference signal decreases, the positioning accuracy decreases. In other words, the second device may determine, by receiving the third indication information from the first terminal device, that the transmit power of the reference signal is low transmit power or decreases. In other words, a positioning measurement result determined by using the reference signal has relatively low accuracy and relatively low reliability. In this case, the second device may measure, based on the third indication information, a reliability degree of the positioning measurement result corresponding to the reference signal.

According to a second aspect, a power control method is provided. The method may be performed by a first terminal device; or may be performed by a component of the first terminal device, for example, a processor, a chip, or a chip system of the first terminal device; or may be implemented by a logical module or software that can implement all or some functions of the first terminal device. The following uses an example in which the method is performed by the first terminal device for description. The method includes: The first terminal device determines a power adjustment coefficient corresponding to a first frequency domain resource and transmit power corresponding to a second frequency domain resource, and determines target transmit power of the first frequency domain resource based on the power adjustment coefficient corresponding to the first frequency domain resource and the transmit power corresponding to the second frequency domain resource. The first frequency domain resource and the second frequency domain resource are used to send a reference signal. In this embodiment of this application, the first terminal device may determine, based on the power adjustment coefficient corresponding to the first frequency domain resource and the transmit power corresponding to the second frequency domain resource, the target transmit power corresponding to the first frequency domain resource. In this way, the first terminal device may send the reference signal at the target transmit power corresponding to expected receive power, to reduce a difference between receive power of the reference signal on different frequency domain resources, thereby reducing a position estimation error, and improving positioning accuracy.

In a possible implementation, the power control method provided in the second aspect further includes:

the first terminal device receives second indication information from a second device, where the second indication information indicates the first terminal device to determine the target transmit power of the first frequency domain resource based on the power adjustment coefficient corresponding to the first frequency domain resource and the transmit power corresponding to the second frequency domain resource.

In a possible implementation, the second indication information includes the power adjustment coefficient corresponding to the first frequency domain resource.

In a possible implementation, before the first terminal device receives the second indication information from the second device, the power control method provided in the second aspect further includes:

the first terminal device sends capability information to the second device, where the capability information indicates that the first terminal device has a capability of sending the reference signal based on a power adjustment coefficient corresponding to a frequency domain resource.

In a possible implementation, the power control method provided in the second aspect further includes:

the first terminal device sends the reference signal on the first frequency domain resource at the target transmit power corresponding to the first frequency domain resource, and the first terminal device sends the reference signal on the second frequency domain resource at the transmit power corresponding to the second frequency domain resource.

According to a third aspect, a power control method is provided. The method may be performed by a second device; or may be performed by a component of the second device, for example, a processor, a chip, or a chip system of the second device; or may be implemented by a logical module or software that can implement all or some functions of the second device. The following uses an example in which the method is performed by the second device for description. The method includes: The second device sends first indication information to a first terminal device, where the first indication information indicates the first terminal device to determine, based on a ratio relationship between target transmit power corresponding to a first frequency domain unit and target transmit power corresponding to a second frequency domain unit, target transmit power corresponding to a first frequency domain resource and target transmit power corresponding to a second frequency domain resource. The first frequency domain unit is the first frequency domain resource, and the second frequency domain unit is the second frequency domain resource; or the first frequency domain unit is a frequency domain sub-resource of the first frequency domain resource, and the second frequency domain unit is a frequency domain sub-resource of the second frequency domain resource; and the first frequency domain resource and the second frequency domain resource are used to send a reference signal. In this embodiment of this application, the first terminal device may determine a ratio relationship between target transmit power corresponding to all of a plurality of frequency domain units for sending a reference signal, and determine, based on the ratio relationship, target transmit power corresponding to each of a plurality of frequency domain resources. This can avoid that the terminal device preferentially configures, for a frequency domain resource corresponding to a PCell, transmit power for sending the reference signal, thereby avoiding an excessively large difference between transmit power corresponding to all of the plurality of frequency domain resources, so that a position estimation error can be reduced, and positioning accuracy can be improved. Therefore, based on the power control method provided in this embodiment of this application, a power control solution for a terminal device to send a reference signal can be optimized, to improve positioning accuracy.

In a possible implementation, the first indication information includes the ratio relationship between the target transmit power corresponding to the first frequency domain unit and the target transmit power corresponding to the second frequency domain unit.

In a possible implementation, before the second device sends the first indication information to the first terminal device, the power control method provided in the third aspect further includes: The second device receives capability information from the first terminal device, where the capability information indicates that the first terminal device has a capability of sending the reference signal based on a ratio relationship between target transmit power corresponding to different frequency domain units.

In a possible implementation, third indication information is received from the first terminal device, where the third indication information indicates that the first terminal device simultaneously sends the reference signal and the at least one signal or channel whose priority is higher than that of the reference signal; or the third indication information indicates that data is sent on the transmission occasion for sending the reference signal; or the third indication information indicates that the at least one signal or channel whose priority is higher than that of the reference signal is sent on the transmission occasion; or the third indication information indicates that transmit energy per resource element EPRE corresponding to the first frequency domain resource and/or the second frequency domain resource decreases on the transmission occasion; or the third indication information indicates that the allocable transmit power of the first terminal device decreases on the transmission occasion; or the third indication information indicates that a power level of the first terminal device decreases on the transmission occasion; or the third indication information indicates that power reduction exists on the first terminal device on the transmission occasion.

According to a fourth aspect, a power control method is provided. The method may be performed by a second device; or may be performed by a component of the second device, for example, a processor, a chip, or a chip system of the second device; or may be implemented by a logical module or software that can implement all or some functions of the second device. The following uses an example in which the method is performed by the second device for description. The method includes: The second device sends second indication information to a first terminal device, where the second indication information indicates the first terminal device to determine target transmit power of a first frequency domain resource based on a power adjustment coefficient corresponding to the first frequency domain resource and transmit power corresponding to a second frequency domain resource. The first frequency domain resource and the second frequency domain resource are used to send a reference signal. In this embodiment of this application, the first terminal device may determine, based on the power adjustment coefficient corresponding to the first frequency domain resource and the transmit power corresponding to the second frequency domain resource, the target transmit power corresponding to the first frequency domain resource. In this way, the first terminal device may send the reference signal at the target transmit power corresponding to expected receive power, to reduce a difference between receive power of the reference signal on different frequency domain resources, thereby reducing a position estimation error, and improving positioning accuracy.

In a possible implementation, the second indication information includes the power adjustment coefficient corresponding to the first frequency domain resource.

In a possible implementation, before the second device sends the second indication information to the first terminal device, the power control method provided in the fourth aspect further includes: The second device receives capability information from the first terminal device, where the capability information indicates that the first terminal device has a capability of sending the reference signal based on a power adjustment coefficient corresponding to a frequency domain resource.

According to a fifth aspect, a communication apparatus is provided to implement the foregoing methods. The communication apparatus may be the first terminal device in the first aspect or the second aspect, an apparatus including the first terminal device, or an apparatus such as a chip included in the first terminal device. Alternatively, the communication apparatus may be the second device in the third aspect or the fourth aspect, an apparatus including the second device, or an apparatus included in the second device. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any possible implementation of the foregoing aspects. The transceiver module may include a transceiver circuit, a transceiver machine, a transceiver, or a communication interface. The processing module may be configured to implement a processing function in any one of the foregoing aspects and any possible implementation of the foregoing aspects.

In some possible designs, the transceiver module includes a sending module and a receiving module, respectively configured to implement the sending function and the receiving function in any one of the foregoing aspects and any possible implementation of the foregoing aspects.

According to a sixth aspect, a communication apparatus is provided, including a processor and a memory. The memory is configured to store computer instructions, and when the processor executes the instructions, the communication apparatus is enabled to perform the method according to any one of the foregoing aspects. The communication apparatus may be the first terminal device in the first aspect or the second aspect, an apparatus including the first terminal device, or an apparatus such as a chip included in the first terminal device. Alternatively, the communication apparatus may be the second device in the third aspect or the fourth aspect, an apparatus including the second device, or an apparatus included in the second device.

According to a seventh aspect, a communication apparatus is provided, including a processor and a communication interface. The communication interface is configured to communicate with a module outside the communication apparatus. The processor is configured to execute a computer program or instructions, to enable the communication apparatus to perform the method according to any one of the foregoing aspects. The communication apparatus may be the first terminal device in the first aspect or the second aspect, an apparatus including the first terminal device, or an apparatus such as a chip included in the first terminal device. Alternatively, the communication apparatus may be the second device in the third aspect or the fourth aspect, an apparatus including the second device, or an apparatus included in the second device.

According to an eighth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first terminal device in the first aspect or the second aspect, an apparatus including the first terminal device, or an apparatus such as a chip included in the first terminal device. Alternatively, the communication apparatus may be the second device in the third aspect or the fourth aspect, an apparatus including the second device, or an apparatus included in the second device.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to a tenth aspect, a computer program product including instructions is provided. When the computer program product runs on a communication apparatus, the communication apparatus is enabled to perform the method according to any one of the foregoing aspects.

According to an eleventh aspect, a communication apparatus (for example, the communication apparatus may be a chip or a chip system) is provided. The communication apparatus includes a processor, configured to implement a function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the fifth aspect to the eleventh aspect is a chip, the foregoing sending action or function may be understood as an output, and the foregoing receiving action or function may be understood as an input.

For technical effects brought by any design in the fifth aspect to the eleventh aspect, refer to the technical effects brought by different designs in the first aspect to the fourth aspect. Details are not described herein again.

According to a twelfth aspect, a communication system is provided. The communication system includes the first terminal device in the foregoing aspects and the second device in the foregoing aspects.

## BRIEF DESCRIPTION OF DRAWINGS

FIG. 1 is a diagram of a structure of a physical layer in one slot and one sub-channel on an SL;
FIG. 2 is a diagram of a positioning principle of UL-TDOA;
FIG. 3 is a diagram of a structure of frequency domain resources of a plurality of carriers in CA;
FIG. 4 is a diagram of an architecture of a power control system corresponding to a power control method according to an embodiment of this application;
FIG. 5 is a diagram 1 of a relationship between a terminal device, an NG-RAN device, an LMF, and an AMF according to an embodiment of this application;
FIG. 6 is a diagram 2 of a relationship between a terminal device, an NG-RAN device, an LMF, and an AMF according to an embodiment of this application;
FIG. 7 is a diagram of hardware structures of a terminal device and a network device according to an embodiment of this application;
FIG. 8 is a schematic flowchart 1 of a power control method according to an embodiment of this application;
FIG. 9 is a schematic flowchart 2 of a power control method according to an embodiment of this application;
FIG. 10 is a diagram of a structure of a first terminal device according to an embodiment of this application; and
FIG. 11 is a diagram of a structure of a second device according to an embodiment of this application.

## DESCRIPTION OF EMBODIMENTS

For ease of understanding of technical solutions provided in embodiments of this application, technologies related to this application are first described briefly. The brief descriptions are as follows.

1. Time-frequency domain resources in a new radio (new radio, NR) system

Currently, 3GPP supports use of an orthogonal frequency division multiplexing (orthogonal frequency division multiplexing, OFDM) technology in uplink and downlink transmission solutions in an NR system. A principle of the OFDM technology is as follows: A plurality of subchannels are obtained through division in frequency domain, serial-to-parallel conversion is performed on to-be-transmitted data to obtain a plurality of groups of data to be transmitted in parallel, and then each group of data is modulated onto a subcarrier (subcarrier) of each sub-channel for transmission. Therefore, in time domain, transmission of the to-be-transmitted data is performed on a plurality of subcarriers superimposed in space, where the plurality of subcarriers are orthogonal to each other. Further, when a signal is received, the plurality of subcarriers may be separated, and then each subcarrier is demodulated, to obtain the to-be-transmitted data. In other words, in the NR system, a minimum frequency domain resource is one subcarrier, and a minimum time domain resource is one OFDM symbol.

1.1. General concept

A time domain of an NR system is represented in a time unit $T_c = 1/(\Delta f_{max} \cdot N_f)$. $\Delta f_{max} = 480 \times 10^3$ Hz, and $N_f = 4096$.

$$\text{Constant } \kappa = T_s/T_c = 64 . \ T_s = 1/(\Delta f_{ref} \cdot N_{f,ref}),$$

$\Delta f_{ref} = 15 \times 10^3$ Hz, and $N_{f,ref} = 2048$.

1.2. Numerology (numerology)

A transmission numerology supported by an NR system is shown in Table 1. In Table 1, a first column represents subcarrier spacing (subcarrier spacing, SCS) configuration $\mu$, and a second column represents subcarrier spacing.

Table 1

| $\mu$ | $\Delta f = 2^{\mu} \cdot 15$ [kHz] |
|---|---|
| 0 | 15 |
| 1 | 30 |
| 2 | 60 |
| 3 | 120 |
| 4 | 240 |

1.3. Time domain resource

Uplink transmission in an NR system is formed into a frame (frame) whose duration is $T_f = (\Delta f_{max} N_f/100) = 10$ ms. Each frame includes 10 subframes whose duration is $T_{sf} = (\Delta f_{max} N_f/1000) = 1$ ms. For example, one frame may include a subframe #0 to a subframe #9. A quantity of consecutive OFDM symbols in each subframe is $N_{symb}^{subframe,\mu} = N_{symb}^{slot} N_{slot}^{subframe,\mu}$.

In the NR system, one subframe may include several slots (slot). For a subcarrier spacing configuration $\mu$, slots are arranged in ascending order of numbers $n_s^{\mu} \in \{0, ..., N_{slot}^{subframe,\mu} - 1\}$ in one subframe, and are arranged in ascending order of numbers $n_{s,f}^{\mu} \in \{0, ..., N_{slot}^{frame,\mu} - 1\}$ in one frame. There are $N_{symb}^{slot}$ consecutive OFDM symbols in one slot, as shown in Table 2 and Table 3. A start of a slot $n_s^{\mu}$ in a subframe is time-aligned with a start of an OFDM symbol $n_s^{\mu} N_{symb}^{slot}$ in the same subframe. For example, when one slot includes 14 OFDM symbols, the OFDM symbols may be sorted as an OFDM symbol #0 to an OFDM symbol #13 in chronological order.

Table 2

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

1.4. Frequency domain resource

1.4.1. Resource element (resource element, RE)

In an NR system, one subcarrier in frequency domain or one OFDM symbol in time domain may be defined as an RE. The RE is a resource with a minimum granularity at a physical layer.

1.4.2. Resource block (resource block, RB)

In frequency domain, regardless of a subcarrier spacing, 12 consecutive subcarriers may be defined as one RB in an NR system. At a physical layer, the RB may be referred to as a physical resource block (physical resource block, PRB).

1.4.3. Bandwidth part (bandwidth part, BWP)

An NR system can support a terminal device in working in only a part of a system bandwidth, that is, a BWP. Alternatively, the BWP may be a plurality of RBs in a frequency domain resource corresponding to one carrier supported by one cell. For example, a cell covered by a network device (for example, a next-generation radio access network (next-generation radio access network, NG-RAN) device in the NR system) supports two carriers (a carrier #1 and a carrier #2). A bandwidth of 40 MHz is allocated to the carrier #1 and a bandwidth of 60 MHz is allocated to the carrier #2 in the cell. The BWP may be a bandwidth of 20 MHz in the bandwidth of 40 MHz corresponding to the carrier #1. The bandwidth of 20 MHz includes a plurality of RBs. The terminal device may work in only the BWP.

In the NR system, after the terminal device accesses a network in an initial access process, the network may configure a working BWP for the terminal device through higher layer signaling. One to four BWPs may be configured for each terminal device, but only one BWP is active at any moment. In addition to radio resource management (radio resource management, RRM) measurement, the terminal device only receives and sends data in the active BWP.

It may be understood that in embodiments of this application, meanings of "carrier", "carrier frequency", and "frequency" are the same. In other words, "carrier", "carrier frequency", and "frequency" may be interchanged for description. This is uniformly described herein, and details are not described below again.

It may be understood that in embodiments of this application, meanings of "number" and "index" are the same. In other words, "number" and "index" may be interchanged for description. This is uniformly described herein, and details are not described below again.

In embodiments of this application, index information may correspond to a configured resource identity (identity, ID) of a terminal device. For example, an index of a slot may correspond to a configured identifier of an SRS transmission occasion on an SRS resource, an index of a cell (cell) may correspond to a configured identifier of the cell, an index of a carrier may correspond to a configured identifier of the carrier, and an index of an active BWP may correspond to a configured identifier of the active BWP.

2. Reference signal

The reference signal in embodiments of this application may include an SRS used in release 15 (reversion 15, R15) and an earlier release, a positioning-specific positioning sounding reference signal (positioning sounding reference signal, pos-SRS) proposed in release 16 (reversion 16, R16), another future reference signal, or the like.

2.1. SRS configuration information

In an NR system, the SRS configuration information is used by a terminal device to send an SRS. The SRS configuration information may be configured by a network device, and then the SRS configuration information may be sent to the terminal device through a radio resource control (radio resource control, RRC) connection. The SRS configuration information may include a manner, a time domain resource, a frequency domain resource, or the like for sending the SRS.
An SRS resource set (resource set) and an SRS resource (resource) are introduced in the NR system. The SRS configuration information may include one or more SRS resource sets or one or more SRS resources. One SRS resource set may include one or more SRS resources. One SRS resource may include one or more of the following:

(1) Quantity of antenna ports: In the NR system, one SRS resource may be configured with one, two, or four antenna ports.
(2) Time domain position: In the NR system, the time domain position includes an index of an occupied OFDM symbol, a start position, and the like. The index of the OFDM symbol may indicate a quantity of OFDM symbols occupied by the SRS resource. One SRS resource may be configured with 1, 2, 4, 8, or 12 OFDM symbols. The start position may be provided by a field startPosition.
(3) Resource type: In the NR system, SRS resources may be classified into several types: periodic (periodic), semi-persistent (semi-persistent), or aperiodic (aperiodic). For a semi-persistent or periodic SRS resource, one SRS resource may include a period and a slot offset index (slot offset) that are specified for a terminal device.
(4) Index of an occupied RB: In the NR system, one SRS resource may occupy 4 to 272 RBs.

It should be noted that one SRS resource may further include a repetition factor (a field repetitionFactor) of SRS transmission, an offset of the SRS resource in frequency domain, a frequency modulation configuration of the SRS resource, and the like. For specific descriptions, refer to 3GPP TS 38.211. Details are not described herein.

2.2. SRS power control solution

TS 38.213 defines transmit power for a terminal device to send an SRS. Based on different types of SRSs, transmit power for a terminal device to send an SRS may be classified into transmit power of a pos-SRS and transmit power of an SRS other than the pos-SRS. The following separately describes transmit power of a pos-SRS and transmit power of another SRS.

2.2.1. Transmit power of another SRS

Transmit power $P_{SRS,b,f,c}(i, q_s, l)$ for the terminal device to send the another SRS in an active BWP $b$ of a carrier $f$ of a serving cell c on a transmission occasion $i$ may be determined according to formula (1). The transmission occasion is an SRS transmission occasion on an SRS resource, and $i$ is an index of an intra-frame slot. $c$ is an index of the serving cell. $f$ is an index of the carrier. $b$ is an index of the active BWP. $q_s$ is a resource set index of the SRS. $l$ is an index of a power control status.

$$P_{SRS,b,f,c}(i,q_s,l) =$$

$$min\left\{ \begin{array}{l} P_{CMAX,f,c}(i) \\ P_{O_{SRS},b,f,c}(q_s) + 10\,log_{10}\left(2^\mu \cdot M_{SRS,b,f,c}(i)\right) + \\ \alpha_{SRS,b,f,c}(q_s) \cdot PL_{b,f,c}(q_d) + h_{b,f,c}(i,l) \end{array} \right\} [dBm] \quad \text{Formula (1)}$$

Definitions of parameters in formula (1) are as follows:
$P_{CMAX,f,c}(i)$ represents allowed maximum transmit power of the terminal device on the carrier $f$ of the serving cell c on the transmission occasion i, and $P_{CMAX,f,c}(i)$ may be configured through higher layer signaling (for example, RRC signaling).
$P_{O_{SRS},b,f,c}(q_s)$ represents nominal power or a power reference value, and is target receive power expected by a network device. $P_{O_{SRS,b,f,c}}(q_s)$ may be determined based on a parameter set configured through higher layer signaling. The parameter set may include SRS-ResourceSet and SRS-ResourceSetId.

$\mu$ represents a subcarrier spacing configuration.

$M_{SRS,b,f,c}(i)$ represents a quantity of RBs included in a bandwidth allocated to the SRS resource in the active BWP $b$ of the carrier $f$ of the serving cell $c$ on the transmission occasion $i$, and $M_{SRS,b,f,c}(i)$ is determined based on a bandwidth of the current active BWP $b$ and the subcarrier spacing configuration $\mu$.

$\alpha_{SRS,b,f,c}(q_s)$ represents a path loss compensation factor, and is configured by using a parameter alpha in higher layer signaling;, and a value range of $\alpha_{SRS,b,f,c}(q_s)$ may be [0, 1], for example, {0, 0.4, 0.5, 0.6, 0.7, 0.8, 0.9, 1}.

$PL_{b,f,c}(q_d)$ represents a path loss estimation of a downlink (downlink, DL), is in a unit of dB, and is a downlink path loss estimated by the terminal device based on a resource index $q_d$ of a reference signal for the active BWP of the cell. The reference signal may be a downlink reference signal such as a channel state information reference signal (channel state information reference signal, CSI-RS) or a synchronization signal block (Synchronization Signal/PBCH Block, SSB).

$h_{b,f,c}(i,l)$ represents an SRS power control adjustment level in the active BWP b of the carrier $f$ of the serving cell c on the transmission occasion $i$, and $h_{b,f,c}(i,l)$ is related to whether physical uplink shared channel (physical uplink shared channel, PUSCH) transmission is configured for the terminal device. For details, refer to related descriptions in TS 38.213. Details are not described herein.

2.2.2. Transmit power of a pos-SRS

Compared with transmit power of another SRS, the transmit power of the pos-SRS does not consider a power control adjustment level. Transmit power $P_{SRS,b,f,c}(i,q_s)$ for the terminal device to send the pos-SRS in an active BWP $b$ of a carrier $f$ of a serving cell c on a transmission occasion $i$ may be determined according to formula (2).

$$P_{SRS,b,f,c}(i,q_s) = min\begin{Bmatrix} P_{CMAX,f,c}(i) \\ P_{O_{SRS,b,f,c}}(q_s) + 10\,log_{10}\left(2^{\mu} \cdot M_{SRS,b,f,c}(i)\right) + \\ \alpha_{SRS,b,f,c}(q_s) \cdot PL_{b,f,c}(q_d) \end{Bmatrix}[dBm] \quad \text{Formula (2)}$$

For definitions of parameters in formula (2), refer to the definitions of the parameters in formula (1). Details are not described herein again.

It should be understood that, in the SRS power control solution, the terminal device may send an SRS to a neighboring-cell network device to implement positioning. The neighboring-cell network device may be a network device that covers a neighboring cell of the terminal device. When the terminal device sends the SRS to the neighboring-cell network device, a reference signal resource corresponding to $PL_{b,f,c}(q_d)$ in formula (1) is a reference signal corresponding to an active BWP of the neighboring cell covered by the neighboring-cell network device. In other words, when the terminal device sends the SRS to the neighboring-cell network device, $PL_{b,f,c}(q_d)$ in formula (1) is a downlink path loss estimated based on a reference signal resource index $q_d$ of the active BWP of the neighboring cell.

It may be understood that in embodiments of this application, "sending occasion" and "transmission occasion" have a same meaning, and may be interchanged for description. This is uniformly described herein, and details are not described below again.

3. Sidelink (sidelink, SL)

The SL may be referred to as a sidelink, a direct link, a secondary link, a side link, or the like, and the SL is a link introduced to support direct communication between devices. The SL may be used in a device-to-device (device-to-device, D2D) communication scenario, and may be further used in a vehicle-to-everything (vehicle-to-everything, V2X) scenario.

For example, a terminal device #1 and a terminal device #2 may be directly connected through an SL. Different from a Uu interface between a terminal device and a network device, an interface between the terminal device #1 and the terminal device #2 is a PC5 interface. A related specification of the PC5 interface is specified in an SL protocol.

In an NR system, the SL mainly includes a physical sidelink control channel (physical sidelink control channel, PSCCH), a physical sidelink shared channel (physical sidelink shared channel, PSSCH), a physical sidelink feedback channel (physical sidelink feedback channel, PSFCH), and the like.

Currently, on the SL, there are two resource allocation modes in total: a working mode 1 and a working mode 2. The following separately describes the two working modes.

Working mode 1: A terminal device transmits data in an RRC connected mode, and a transmission resource is controlled by a network device. The network device schedules a transmission resource used to transmit control information and data on an SL.

For example, the terminal device sends an SL scheduling request (scheduling request, SR) and an SL buffer status report (buffer status report, BSR) to the network device, and then the network device determines a data volume of an SL communication requirement of the terminal device based on the SL BSR, and estimates a resource required for transmission. The network device may use a configured SL-radio network temporary identifier (sidelink-radio network temporary identifier, SL-RNTI) to schedule a transmission resource used for SL communication.

Working mode 2: A terminal device autonomously selects a resource from a resource pool, and sends SL control information and data information. Once the terminal device selects the resource from the resource pool, the selected resource is valid in an entire SL control period. After the SL control period ends, the terminal device may select a resource again.

For example, a scenario in which the terminal device autonomously selects the resource from the resource pool may be: The terminal device is not in a coverage area of a network device, or the terminal device is in a coverage area of a network device but is not in an RRC connected mode. This is not specifically limited in embodiments of this application.

For example, a scenario in which the terminal device is in the coverage area of the network device but is not in the RRC connected mode may be: A radio link failure (Radio Link Failure, RLF) occurs between the terminal device and the network device, the terminal device is not synchronized with the network device, or the terminal device is in an RRC reconnected mode. This is not specifically limited in embodiments of this application.

3.1. Communication mode on an SL

Communication modes on the SL may be classified into unicast, multicast, and broadcast. Unicast may mean that two terminal devices perform one-to-one communication. Multicast may mean that one terminal device communicates with a group of terminal devices. Broadcast may mean that one terminal device sends information to all terminal devices in a communication range.

3.2. Structure of a physical layer on an SL

For a time-frequency resource for communication between terminal devices on the SL, refer to a time-frequency resource for communication between a terminal device and a network device in an NR system. A difference between the two is that a carrier on the SL may not correspond to a cell. An active BWP corresponding to the carrier on the SL may be referred to as an SL BWP.

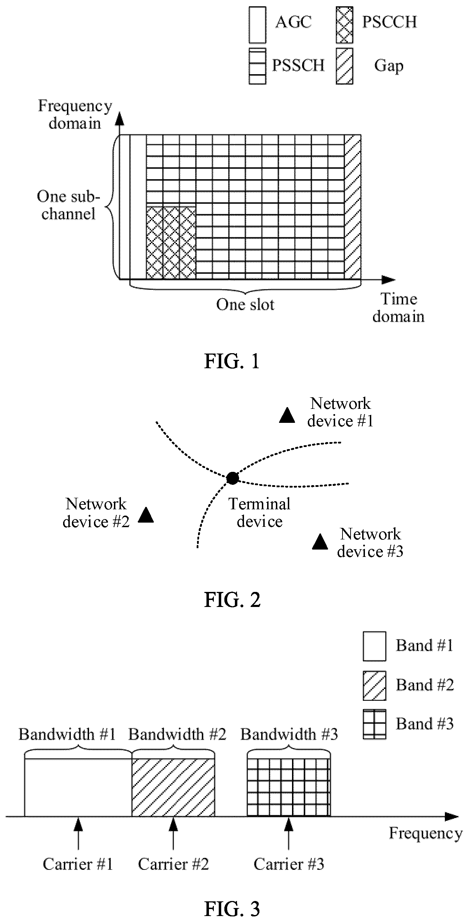

For example, FIG. 1 is a diagram of a structure of a physical layer in one slot and one sub-channel on an SL. As shown in FIG. 1, one slot may include 14 OFDM symbols. A start symbol in a slot corresponds to an access grant channel (access grant channel, AGC) symbol, an end symbol in the slot corresponds to a gap (gap), and symbols between the AGC and the gap may include a PSCCH symbol and a PSSCH symbol. The PSCCH symbol is mapped from a lowest PRB of the PSSCH symbol, occupies a same symbol as some PSSCH symbols, but is separated from the PSSCH symbol in frequency domain. After sending of the PSCCH symbol ends, the PSSCH symbol occupies time-frequency domain resources corresponding to all symbols to transmit data and a demodulation reference signal (demodulation reference signal, DMRS).

On the SL, to ensure even power allocation, symbol-level PSSCH power control solutions are classified into a power control solution 1 and a power control solution 2. The following separately describes the power control solution 1 and the power control solution 2.

Power control solution 1: This solution corresponds to a power control solution for a first PSSCH symbol. The first PSSCH symbol is a PSSCH symbol without a PSCCH symbol. Transmit power $P_{PSSCH1}(i)$ for a terminal device to send the first PSSCH symbol in an active SL BWP b of a carrier $f$ on a transmission occasion $i$ may be determined according to formula (3).

$$P_{PSSCH1}(i) = min\{P_{CMAX}, P_{MAX,CBR}, min(P_{PSSCH,D}(i), P_{PSSCH,SL}(i))\}[dBm] \qquad \text{Formula (3)}$$

Definitions of parameters in formula (3) are as follows:

$P_{CMAX}$ represents allowed maximum transmit power of the terminal device.

$P_{MAX,CBR}$ represents allowed maximum transmit power of the terminal device under channel busy rate (channel busy rate, CBR) control, and $P_{MAX,CBR}$ is indicated by a parameter sl-MaxTxPower. When the parameter sl-MaxTxPower is not configured, $P_{MAX,CBR} = P_{CMAX}$.

$P_{PSSCH,D}(i)$ represents transmit power estimated by the terminal device based on a DL path loss on the transmission occasion $i$, and $P_{PSSCH,D}(i)$ may be determined according to formula (4). Formula (4) is as follows:

$$P_{PSSCH,D}(i) = P_{0,D} + 10\,log_{10}\left(2^{\mu} \cdot M_{RB}^{PSSCH}(i)\right) + \alpha_D \cdot PL_D\,[dBm] \quad \text{Formula (4)}$$

In formula (4), $P_{0,D}$ may be a power control value P0 indicated by a parameter dl-P0-PSSCH-PSCCH, $M_{RB}^{PSSCH}(i)$ represents a quantity of RBs occupied by the first PSSCH symbol sent by the terminal device in the active SL BWP $b$ of the carrier $f$ on the transmission occasion $i$, and $\alpha_D$ may be indicated by a parameter dl-Alpha-PSSCH-PSCCH. If the parameter is not configured, a value of $\alpha_D$ is 1. $PL_D = PL_{b,f,c}(q_d)$, and $PL_D$ represents a downlink path loss estimated by the terminal device by using a reference signal resource index $q_d$.

$P_{PSSCH,SL}(i)$ represents transmit power estimated by the terminal device based on an SL path loss on the transmission occasion $i$, and $P_{PSSCH,SL}(i)$ may be determined according to formula (5). Formula (5) is as follows:

$$P_{PSSCH,SL}(i) = P_{0,SL} + 10\,log_{10}\left(2^{\mu} \cdot M_{RB}^{PSSCH}(i)\right) + \alpha_{SL} \cdot PL_{SL}\,[dBm] \quad \text{Formula (5)}$$

In formula (5), $P_{0,SL}$ may be a power control value P0 indicated by a parameter sl-P0-PSSCH-PSCCH, $M_{RB}^{PSSCH}(i)$ represents a quantity of RBs occupied by the first PSSCH symbol sent by the terminal device in the active SL BWP b of the carrier $f$ on the transmission occasion $i$, and $\alpha_{SL}$ may be indicated by a parameter sl-Alpha-PSSCH-PSCCH. If the parameter is not configured, a value of $\alpha_{SL}$ is 1. $PL_{SL}$ represents the SL path loss, and $PL_{SL}$ may be a difference between reference signal transmit power and fed-back reference signal received power (reference signal received power, RSRP). For example, $PL_{SL}$ may be a difference between transmit power of a PSSCH DMRS and L3-RSRP fed back by a receiving terminal device, and the receiving terminal device is a terminal device that receives the PSSCH DMRS.

It should be understood that, on the SL, $P_{PSSCH,SL}(i)$ exists in formula (3) only when a communication mode of the terminal device is unicast.

Power control solution 2: This solution corresponds to a power control solution for a second PSSCH symbol. The second PSSCH symbol is a PSSCH symbol with a PSCCH symbol. Transmit power corresponding to the second PSSCH symbol sent by a terminal device may be converted based on an RB proportion according to formulas (3) to (5). To be specific, transmit power $P_{PSSCH2}(i)$ for the terminal device to send the second PSSCH symbol in an active SL BWP b of a carrier $f$ on a transmission occasion $i$ may be determined according to formula (6).

$$P_{PSSCH2}(i) = 10\,log_{10}\left(\frac{M_{RB}^{PSSCH}(i) - M_{RB}^{PSCCH}(i)}{M_{RB}^{PSSCH}(i)}\right) + P_{PSSCH1}(i)[dBm] \quad \text{Formula (6)}$$

For definitions of parameters in formula (6), refer to the definitions of the parameters in formulas (3) to (5). For example, $M_{RB}^{PSSCH}(i)$ represents a quantity of RBs occupied by the second PSSCH symbol sent by the terminal device in the active SL BWP $b$ of the carrier $f$ on the transmission occasion $i$, and $M_{RB}^{PSCCH}(i)$ represents a quantity of RBs occupied by the PSCCH symbol sent by the terminal device in the active SL BWP $b$ of the carrier $f$ on the transmission occasion i. Related descriptions of other parameters are not described herein again.

It may be understood that transmit power corresponding to the PSCCH symbol sent by the terminal device is similar to the transmit power corresponding to the second PSSCH symbol sent by the terminal device, and may be converted based on an RB proportion according to formulas (3) to (5). To be specific, transmit power $P_{PSCCH}(i)$ for the terminal device to send the PSCCH symbol in the active SL BWP b of the carrier $f$ on the transmission occasion i may be determined according to formula (7).

$$P_{PSCCH}(i) = 10\,log_{10}\left(\frac{M_{RB}^{PSCCH}(i)}{M_{RB}^{PSSCH}(i)}\right) + P_{PSSCH1}(i)\,[dBm] \quad \text{Formula (7)}$$

For definitions of parameters in formula (7), refer to the definitions of the parameters in formulas (3) to (6). Details are not described herein again.

It should be understood that no power control solution for a positioning reference signal is defined on the SL currently.

4. Time difference-based positioning technology

In embodiments of this application, the time difference-based positioning technology may include a time difference-based positioning technology based on network device participation and a time difference-based positioning technology based on an SL. The following separately provides descriptions.

4.1. Time difference-based positioning technology based on network device participation

A principle of the time difference-based positioning technology based on network device participation is to perform positioning by measuring a related parameter of an SRS sent by a terminal device and received by a network device. The related parameter of the SRS may be, for example, a time difference of arrival (time difference of arrival, TDOA). The time difference-based positioning technology may include an uplink time difference of arrival (uplink time difference of arrival, UL-TDOA). A UL-TDOA positioning principle is to measure a time difference of arrival of an SRS sent by a terminal device and received by different network devices, and determine position information of the terminal device based on the time difference of arrival.

For example, a UL-TDOA positioning principle diagram shown in FIG. 2 is used as an example to describe the UL-TDOA positioning principle. As shown in FIG. 2, a terminal device may send an SRS to a network device #1, a network device #2, and a network device #3, and measure a time difference of arrival of the SRS from the terminal device to two network devices in the network device #1, the network device #2, and the network device #3. At least two time differences can be obtained, for example, a time difference of arrival of the SRS at the network device #1 and the network device #2, and a time difference of arrival of the SRS at the network device #1 and the network device #3. A distance difference corresponding to each time difference may form a hyperbola that uses two corresponding network devices as a focus, and a position of the terminal device may be estimated by using an intersection point of two hyperbolas.

In addition, the time difference-based positioning technology may further include another positioning technology, for example, a multi-cell round trip time (multi-cell round trip time, Multi-RTT)-based positioning technology or an enhanced cell identity (enhanced cell identity, E-CID)-based positioning technology. This is not specifically limited in embodiments of this application.

4.2. Time difference-based positioning technology based on an SL

A principle of the time difference-based positioning technology based on an SL is similar to the principle of the time difference-based positioning technology based on network device participation. A difference lies in that a terminal device does not send a reference signal to a network device, but sends the reference signal to one or more receiving terminal devices that establish an SL connection to the terminal device, calculates a corresponding distance and/or angle by using a time difference of arrival and/or an angle of arrival of the reference signal at the one or more receiving terminal devices, and then estimates a relative position relationship between the terminal device and the one or more receiving terminal devices based on the distance and/or the angle. If a position of the one or more receiving terminal devices is known, an absolute position of the terminal device may be obtained based on the relative position relationship. For specific implementation, refer to the foregoing time difference-based positioning technology based on network device participation. Details are not described herein again.

It should be understood that, in the time difference-based positioning technology, to improve positioning accuracy, there is a relatively high requirement on time difference estimation accuracy. A wider signal bandwidth indicates higher time resolution and higher positioning accuracy of estimation. For example, when a signal bandwidth is relatively low, a time difference obtained through measurement may be 0.5 ms, and when a signal bandwidth is relatively high, a time difference obtained through measurement may be 0.54 ms. It is clear that time resolution of 0.54 ms of the latter is higher than time resolution of 0.5 ms of the former, and then positioning accuracy of performing position estimation by using 0.54 ms is also higher than positioning accuracy of performing position estimation by using 0.5 ms. Therefore, positioning accuracy may be improved by increasing a bandwidth for sending a reference signal by a terminal device.

Currently, carrier aggregation (carrier aggregation, CA) and dual connectivity (dual connectivity, DC) may be used to increase a bandwidth for sending a reference signal. The following separately describes CA and DC.

5. CA

CA may mean that frequency domain resources corresponding to a plurality of different carriers are simultaneously used to receive and send data. CA may aggregate frequency domain resources corresponding to different carriers, to increase a bandwidth for sending a reference signal by a terminal device.

Optionally, in embodiments of this application, frequency domain resources corresponding to different carriers may be frequency domain resources corresponding to a plurality of carriers with different center frequencies. Frequency domain resources corresponding to different carriers may be bands corresponding to different carriers. Bandwidths of bands corresponding to different carriers may be the same or different, and bands corresponding to different carriers may be consecutive or inconsecutive. This is not specifically limited in embodiments of this application.

For example, a diagram of a structure of frequency domain resources of a plurality of carriers in CA shown in FIG. 3 is used as an example. As shown in FIG. 3, a frequency domain resource corresponding to a carrier #1 is a band #1, a frequency domain resource corresponding to a carrier #2 is a band #2, and a frequency domain resource corresponding to a carrier #3 is a band #3. A bandwidth #1 of the band #1 is different from a bandwidth #2 of the band #2, and the bandwidth #2 of the band #2 is the same as a bandwidth #3 of the band #3. The band #1 and the band #2 are consecutive, the band #1 and the band #3 are inconsecutive, and the band #2 and the band #3 are inconsecutive.

It should be understood that in CA, a frequency domain resource corresponding to each carrier may be referred to as a component carrier (Component carrier, CC). Each CC corresponds to one independent frequency domain resource. Each CC has a corresponding index, and a terminal device may determine, based on the index corresponding to each CC, a related configuration for receiving and sending data on the CC. For example, the terminal device may determine, based on the index corresponding to each CC and formulas (1) to (7), transmit power for sending a reference signal by the terminal device.

It may be understood that, in embodiments of this application, CA may be applied to a scenario in which a terminal device communicates with a network device, and may be further applied to an SL. In the scenario in which the terminal device communicates with the network device, the network device may determine a configuration of each CC in CA, and perform CA configuration on the terminal device by sending RRC signaling to the terminal device. In the SL scenario, for a working mode 1, a network device may determine a configuration of each CC in CA, and perform CA configuration on a terminal device by sending RRC signaling to the terminal device; and for a working mode 2, a terminal device may determine a configuration of each CC in CA.

It should be understood that, because a carrier on an SL may not correspond to a cell, the following separately describes CA in the scenario in which the terminal device communicates with the network device and CA in the SL scenario.

5.1. CA in a scenario in which a terminal device communicates with a network device

In the scenario in which the terminal device communicates with the network device, each carrier may be associated with one cell, that is, one CC corresponds to one independent cell. One CC may be an active BWP of a carrier of a cell.

It should be understood that each CC corresponds to a different cell. A cell corresponding to each CC may be a plurality of different cells covered by a same network device, or may be a plurality of different cells covered by different network devices. For example, a CC #1 and a CC #2 are configured for CA, the CC #1 corresponds to a cell #1, and the CC #2 corresponds to a cell #2. The cell #1 and the cell #2 may be two different cells covered by a serving network device of a terminal device. Alternatively, the cell #1 may be a cell covered by a serving network device of a terminal device, and the cell #2 may be a cell covered by a neighboring-cell network device of the terminal device.

In an NR system, a set of cells corresponding to each CC may be referred to as a serving cell (serving cell) set. When CA is configured for the terminal device, the serving cell set may include one primary cell (primary cell, PCell) and one or more secondary cells (secondary cell, SCell). The following separately describes concepts related to the PCell, the SCell, and the serving cell.

PCell: A terminal device for which CA is configured can be connected to only one PCell. The terminal device performs an initial connection establishment process or a connection reestablishment process in the PCell. The PCell is responsible for processing RRC communication with the terminal device. In other words, the PCell may be a cell in which the terminal device performs initial connection establishment; or the PCell may be a cell in which the terminal device performs RRC connection reestablishment; or the PCell may be a cell specified in a handover (handover) process.

Optionally, in embodiments of this application, initial information of the PCell may be obtained by using fields ul-CarrierFreq and ul-Bandwidth in a system message.

SCell: A terminal device for which CA is configured may be connected to one or more SCells. The SCell may be added, modified, or released by the terminal device by using an RRC connection reconfiguration message, to provide an additional radio resource. There may be no RRC connection between the terminal device and the SCell.

Serving cell: If CA is not configured for a terminal device, a serving cell set includes only one PCell; or if CA is configured for a terminal device, a serving cell set includes a PCell and an SCell, and the terminal device uses a same cell-radio network temporary identifier (cell-radio network temporary identifier, C-RNTI) in all serving cells.

Optionally, in embodiments of this application, an index of the PCell may be set to 0, and an index of the SCell may be configured by the network device for the terminal device through RRC.

5.2. CA in an SL scenario

In the SL scenario, each carrier may not be associated with a cell, that is, one CC corresponds to one carrier. One CC may be an active SL BWP of one carrier.

6. DC

DC may also be referred to as multi-radio access technology dual connectivity (multi-radio access technology dual connectivity, MR-DC). DC may support two network devices in simultaneously providing a data or signaling transmission service for a same terminal device. It may be understood that DC may be applied to a scenario in which a terminal device communicates with a network device.

For example, a network device that exchanges control plane signaling with a core network may be referred to as a master node (master node, MN) or a master network device, and another network device may be referred to as a secondary node (secondary node, SN) or a secondary network device.

It should be understood that a DC architecture may include but is not limited to the following four types:

1. EN-DC (E-UTRA-NR dual connectivity): A network device (for example, an evolved NodeB (evolved NodeB, eNB)) in long term evolution (long term evolution, LTE) is used as an MN (that is, used as an MN of a terminal device), a network device (for example, a next-generation NodeB (gNodeB, gNB)) in an NR system is used as an SN (that is, used as an SN of the terminal device), and both the MN and the SN are connected to a 4G core network (evolved packet core, EPC), so as to provide an air interface transmission resource for data between the terminal device and the EPC.

2. NE-DC (NR-E-UTRA dual connectivity): A network device in an NR system is used as an MN, a network device in LTE is used as an SN, and both the MN and the SN are connected to a 5G core network (5G core, 5GC) in a 5th generation (5th generation, 5G) system, so as to provide an air interface transmission resource for data between a terminal device and the 5GC.

3. NGEN-DC (NG-RAN E-UTRA-NR dual connectivity): A network device (for example, a next-generation evolved NodeB (NG-RAN evolved NodeB, ng-eNB)) in LTE is used as an MN, a network device (for example, a gNB) in an NR system is used as an SN, and both the MN and the SN are connected to a 5GC, so as to provide an air interface transmission resource for data between a terminal device and the 5GC.

4. In addition to the foregoing three types of DC in the LTE and NR systems, 5G further supports DC (NR-DC) between NR and NR. To be specific, both an MN and an SN are network devices in the NR system, and both the MN and the SN are connected to a 5GC.

It should be understood that the DC scenario described in embodiments of this application is intended to describe the technical solutions in embodiments of this application more clearly, and does not constitute a limitation on the technical solutions provided in embodiments of this application. With evolution of a network architecture, the technical solutions provided in embodiments of this application are also applicable to an application scenario in which a terminal device supports simultaneous access to two or more network devices. This is not limited. In the application scenario in which the terminal device supports simultaneous access to two or more network devices, there is one MN in the two or more network devices, and each network device other than the MN may be referred to as an SN.

It should be understood that in DC, a serving cell group provided by the MN for the terminal device may be referred to as a master cell group (master cell group, MCG), and a serving cell group provided by the SN for the terminal device may be referred to as a secondary cell group (secondary cell group, SCG). The MCG and the SCG each include at least one cell. A PCell may be a cell in the MCG, and works on a primary carrier. A primary secondary cell (primary secondary cell, PSCell) is a cell in the SCG.

It may be understood that the MCG may include one PCell and optionally one or more SCells. The SCG may include one PSCell and optionally one or more SCells.

The following describes terms such as the PCell, the PSCell, the SCell, and the serving cell in DC.

PCell: is deployed on a primary carrier. Alternatively, the PCell works on a primary carrier. The PCell in DC is similar to the PCell in CA. For example, the PCell is a cell corresponding to an initial connection establishment process or a connection reestablishment process initiated by a terminal device. For details, refer to related descriptions of the PCell in CA. Details are not described herein again.

PSCell: is a cell in which a terminal device performs random access or initial PUSCH transmission (which means that the terminal device skips a random access process and sends data transmission in an SN change process) in an SCG, or a cell in an SCG of an SN to which random access is initiated in a synchronous reconfiguration process.

SCell: is similar to the SCell in CA. For details, refer to related descriptions of the SCell in CA. In DC, each cell other than the PCell and the PSCell in the MCG and the SCG may be referred to as an SCell.

Serving cell: is similar to the serving cell set in CA. For example, if DC is not configured, a serving cell set includes only one serving cell, that is, a PCell. If CA or DC is configured, a serving cell of the terminal device is a cell set including a PCell, a PSCell, and all SCells.

Currently, according to a stipulation in an existing protocol, for a terminal device configured with CA or DC, to ensure that transmit power of the terminal device does not exceed maximum transmit power of the terminal device, transmit power corresponding to each CC is configured in a descending manner. Therefore, for the terminal device, transmit power of a reference signal is preferentially configured for a PCell according to formulas (1) and (2), and then remaining transmit power is configured for an SCell. For example, one PCell and one SCell are configured for the terminal device. It is assumed that maximum transmit power of the terminal device is 1. If 70% of the transmit power needs to be allocated to the PCell, transmit power that can be allocated to the SCell is only 30%. In this case, a difference between transmit power corresponding to the PCell and transmit power corresponding to the SCell is excessively large. When a network device receives, on two frequency domain resources, reference signals with a relatively large power difference, accuracy of a time difference obtained by measuring the reference signal is directly affected, a position estimation error is caused, and consequently positioning accuracy is reduced.

In addition, the existing SL protocol does not specify a power control solution for sending a positioning reference signal by a terminal device for which CA is configured.

In view of this, embodiments of this application provide a power control method, so that a power control solution for a terminal device to send a reference signal can be optimized, to improve positioning accuracy.

The following describes technical solutions in embodiments of this application with reference to the accompanying drawings in embodiments of this application. In the descriptions of this application, unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists. A and B may be singular or plural. In addition, in the descriptions of this application, unless otherwise specified, "a plurality of" means two or more. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference.

In embodiments of this application, "indication" may include a direct indication and an indirect indication, or may include an explicit indication and an implicit indication. Information indicated by a piece of information (for example, the following first indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The technical solutions in embodiments of this application may be applied to a 5G system or an NR system. The technical solutions in embodiments of this application may also be applied to another communication system, for example, an LTE system, an LTE frequency division duplex (frequency division duplex, FDD) system, an LTE time division duplex (time division duplex, TDD) system, a universal mobile telecommunications system (universal mobile telecommunications system, UMTS), or a worldwide interoperability for microwave access (worldwide interoperability for microwave access, WiMAX) communication system. The 5G system in this application includes an NR system in non-standalone (non-standalone, NSA) networking or an NR system in standalone (standalone, SA) networking. The technical solutions provided in this application may be further applied to a future communication system, for example, a 6th generation mobile communication system. Alternatively, the communication system may be a public land mobile network (public land mobile network, PLMN), a D2D communication system, a machine to machine (machine to machine, M2M) communication system, an internet of things (Internet of Things, IoT) communication system, or another communication system.

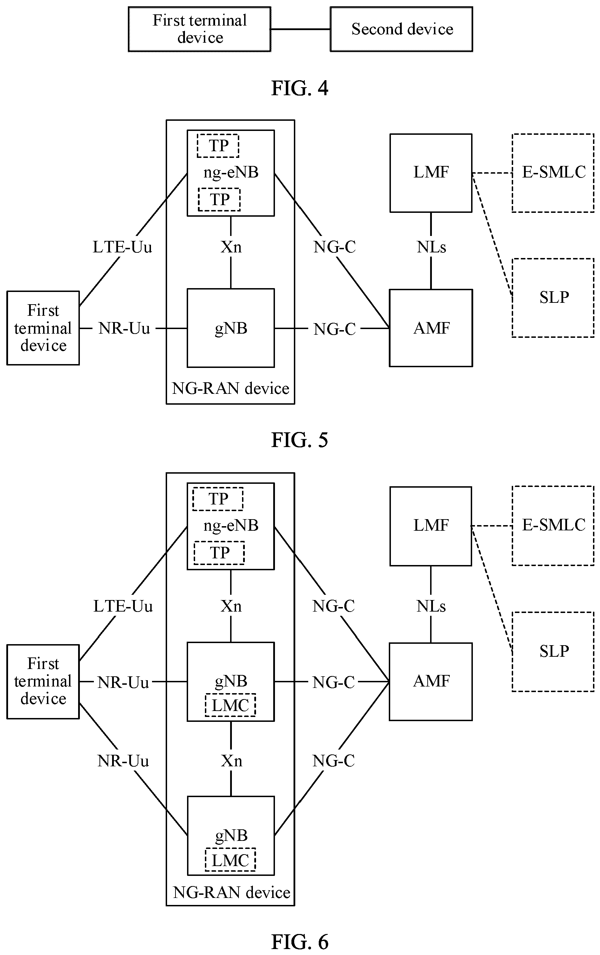

FIG. 4 is a diagram of an architecture of a power control system corresponding to a power control method according to an embodiment of this application. As shown in FIG. 4, the power control system includes a first terminal device and a second device. The second device may be a first network device, and the first network device may be a serving network device of the first terminal device. Alternatively, the second device may be a second terminal device, and the second terminal device may be a terminal device that establishes an SL connection to the first terminal device to participate in positioning. Alternatively, when DC is configured for the first terminal device, the second device may be a second network device, and the second network device may be an SN of the first terminal device. Alternatively, the second device may be a location management function (location management function, LMF).

Although not shown, the power control system may further include other network elements, functions, or modules such as a second network device, an LMF, and an access and mobility management function (access and mobility management function, AMF). This is not specifically limited in embodiments of this application.

For a method for performing power control based on the foregoing power control system, refer to subsequent method embodiments, and details are not described herein again.

Optionally, the network device (including the first network device, the second network device, or the like) in embodiments of this application may be any communication device that has wireless sending and receiving functions and that is configured to communicate with the terminal device. The network device includes but is not limited to: an eNB, a baseband unit (baseband unit, BBU), or an access point (access point, AP), a wireless relay node, a wireless backhaul node, a transmission point (transmission point, TP), a transmission-reception point (transmission-reception point, TRP), or the like in a Wi-Fi system. Alternatively, the network device may be a gNB, a TRP, or a TP in a 5G system, or one or a group of antenna panels (including a plurality of antenna panels) of a base station in a 5G system. In addition, the network device may alternatively be a network node that forms a gNB or a TP, for example, a BBU or a distributed unit (distributed unit, DU).

In some deployments, the gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of an RRC layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node.

Optionally, a terminal device (terminal device) in embodiments of this application may be an access terminal, a subscriber unit, a subscriber station, a mobile station, a relay station, a remote station, a remote terminal, a mobile device, a user terminal (user terminal), UE, a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, a terminal device in a future 5G network, a terminal device in a future evolved PLMN, a terminal device in a future internet of vehicles, or the like. This is not limited in embodiments of this application.

By way of example and not limitation, in embodiments of this application, the terminal device may be a mobile phone, a tablet computer, a computer having wireless sending and receiving functions, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

By way of example and not limitation, in embodiments of this application, the wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In addition, in embodiments of this application, the terminal device may alternatively be a terminal device in an IoT system. IoT is an important part of future information technology development. A main technical feature of IoT is that an article is connected to a network by using a communication technology, to implement an intelligent network of man-machine interconnection and interconnection between things. In embodiments of this application, the IoT technology can implement massive connections, deep coverage, and terminal power saving by using, for example, a narrow band (narrow band, NB) technology.

In addition, in embodiments of this application, the terminal device may alternatively include a sensor such as an intelligent printer, a train detector, or a gas station. Main functions include collecting data (some terminal devices), receiving control information and downlink data from a network device, sending an electromagnetic wave, and transmitting uplink data to the network device.

Optionally, the network device and the terminal device in embodiments of this application may communicate with each other through a licensed spectrum, may communicate with each other through an unlicensed spectrum, or may communicate with each other through both a licensed spectrum and an unlicensed spectrum. The network device and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the terminal device or the network device in embodiments of this application may be deployed on land, including an indoor or outdoor device, a handheld device, or a vehicle-mounted device; or may be deployed on a water surface; or may be deployed on a plane, a balloon, or an artificial satellite in the air. Application scenarios of the terminal device or the network device are not limited in embodiments of this application.

As described above, the power control method provided in embodiments of this application is applicable to the foregoing communication systems.

For example, FIG. 5 or FIG. 6 is a diagram of a relationship between a first terminal device, an NG-RAN device, an LMF, and an AMF when the power control method in embodiments of this application is applied to an NR system. As shown in FIG. 5 or FIG. 6, the terminal device is connected to the NG-RAN device through an ng-eNB and a gNB over an LTE-Uu interface and/or an NR-Uu interface, and the NG-RAN device is connected to a 5GC over an NG-C interface. The NG-RAN device includes one or more ng-eNBs (one ng-eNB is used as an example in FIG. 5 or FIG. 6); or the NG-RAN device may include one or more gNBs (one gNB is used as an example in FIG. 5, and two gNBs are used as an example in FIG. 6). The ng-eNB is an LTE base station accessing the 5GC, and the gNB is a 5G base station accessing the 5GC. The 5GC includes the AMF and the LMF. The AMF is configured to implement a function such as access management, and the LMF is configured to interact with the first terminal device or the NG-RAN device to implement various functions (such as a positioning function or a power control function). The AMF and the LMF are connected over an NLs interface.

Further, an interface between control planes of the 5GC and the NG-RAN device is an N2 interface, an interface between user planes of the 5GC and the NG-RAN is an N3 interface, and an interface between gNBs is an Xn interface.

Optionally, as shown in FIG. 5 or FIG. 6, the 5GC may further include an enhanced serving mobile location center (enhanced serving mobile location center, E-SMLC) and a secure user plane location platform (secure user plane location platform, SLP). The E-SMLC and the SLP are connected to the LMF. The E-SMLC and the SLP may provide, for the LMF, auxiliary data required by the first terminal device, including, for example, information (for example, expected signal timing, signal encoding and decoding, a signal frequency, and signal Doppler) about a signal measured by the first terminal device, a position and/or an identifier of a ground transmitter, and/or signal, timing, and orbit information of a GNSS satellite aircraft, to facilitate positioning technologies such as GNSS, UL-TDOA, and E-CID.

It may be understood that FIG. 6 is similar to FIG. 5. For example, a difference lies in that a location management function apparatus or component (for example, an LMF) in FIG. 5 is deployed in the 5GC, and a location management function apparatus or component (for example, a location management component (location management component, LMC)) in FIG. 6 may be deployed in the NG-RAN device. As shown in FIG. 6, the gNB includes the LMC. The LMC is a part of functional components of the LMF and may be integrated into the gNB of the NG-RAN device.

It should be understood that the NG-RAN device in FIG. 5 or FIG. 6 may be the first network device in FIG. 4. FIG. 5 or FIG. 6 is merely an example of a diagram of a relationship between a first terminal device, an NG-RAN device, an LMF, and an AMF when the power control method in embodiments of this application is applied to a 5G communication system, and does not set a limitation that only one NG-RAN device is included.

It should be understood that the device or the functional node included in FIG. 5 or FIG. 6 is merely an example for description, and does not constitute a limitation on embodiments of this application. Actually, FIG. 5 or FIG. 6 may further include another network element, device, or functional node that has an interaction relationship with the device or the functional node shown in the figure. This is not specifically limited in this application.

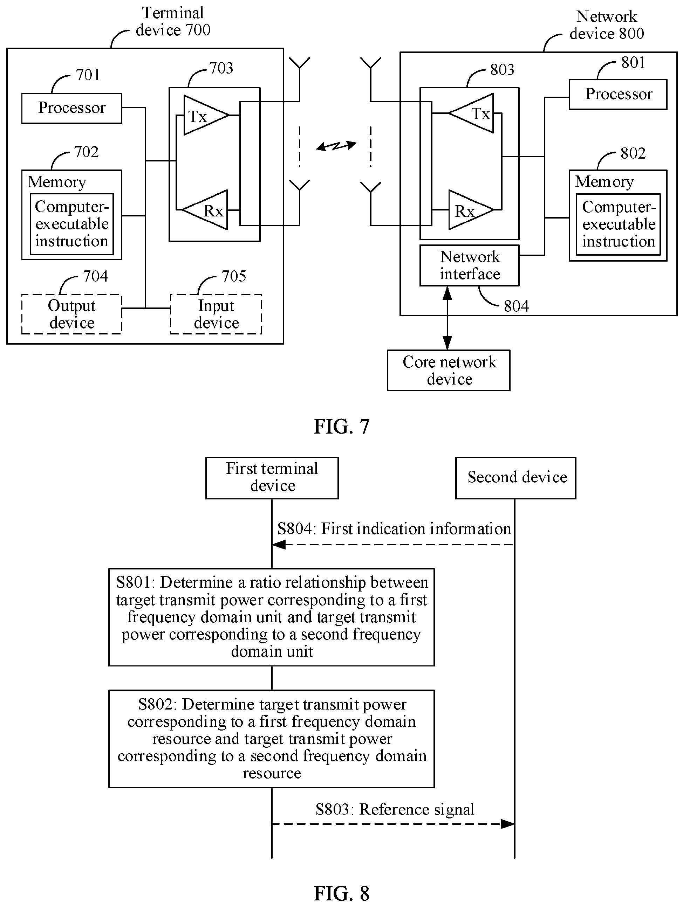

FIG. 7 is a diagram of hardware structures of a terminal device 700 and a network device 800 according to an embodiment of this application.

The terminal device 700 includes at least one processor 701 (in FIG. 7, descriptions are provided by using an example in which one processor 701 is included), at least one memory 702 (in FIG. 7, descriptions are provided by using an example in which one memory 702 is included), and at least one transceiver 703 (in FIG. 7, descriptions are provided by using an example in which one transceiver 703 is included). Optionally, the terminal device 700 may further include an output device 704 and an input device 705.

The processor 701, the memory 702, and the transceiver 703 are connected by using a communication line. The communication line may include a path for transmission of information between the foregoing components.

The processor 701 may be a general-purpose central processing unit (central processing unit, CPU), a microprocessor, an application-specific integrated circuit (application-specific integrated circuit, ASIC), or one or more integrated circuits configured to control program execution in the solutions of this application. During specific implementation, in an embodiment, the processor 701 may alternatively include a plurality of CPUs, and the processor 701 may be a single-core (single-CPU) processor or a multi-core (multi-CPU) processor. The processor herein may be one or more devices, circuits, or processing cores configured to process data (for example, computer program instructions).

The memory 702 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory 702 may exist independently and is connected to the processor 701 by using the communication line. The memory 702 may alternatively be integrated with the processor 701.

The memory 702 is configured to store computer-executable instructions for performing the solutions in this application, and the processor 701 controls execution. Specifically, the processor 701 is configured to execute the computer-executable instructions stored in the memory 702, to implement the power control method in embodiments of this application. Optionally, the computer-executable instructions in embodiments of this application may also be referred to as application program code or computer program code. This is not specifically limited in embodiments of this application.

The transceiver 703 may use any transceiver-type apparatus, and is configured to communicate with another device or a communication network such as the Ethernet, a radio access network (radio access network, RAN), or a wireless local area network (wireless local area network, WLAN). The transceiver 703 includes a transmitter Tx and a receiver Rx.

The output device 704 communicates with the processor 701, and may display information in a plurality of manners. For example, the output device 704 may be a liquid crystal display (liquid crystal display, LCD), a light-emitting diode (light-emitting diode, LED) display device, a cathode ray tube (cathode ray tube, CRT) display device, or a projector (projector).

The input device 705 communicates with the processor 701, and may receive an input from a user in a plurality of manners. For example, the input device 705 may be a mouse, a keyboard, a touchscreen device, a sensing device, or the like.

The network device 800 includes at least one processor 801 (in FIG. 7, descriptions are provided by using an example in which one processor 801 is included), at least one memory 802 (in FIG. 7, descriptions are provided by using an example in which one memory 802 is included), at least one transceiver 803 (in FIG. 7, descriptions are provided by using an example in which one transceiver 803 is included), and at least one network interface 804 (in FIG. 7, descriptions are provided by using an example in which one network interface 804 is included). The processor 801, the memory 802, the transceiver 803, and the network interface 804 are connected by using a communication line. The network interface 804 is configured to be connected to a core network device through a link (for example, an S1 interface), or connected to a network interface of another network device through a wired or wireless link (for example, an X2 interface) (not shown in FIG. 7). This is not specifically limited in embodiments of this application. In addition, for related descriptions of the processor 801, the memory 802, and the transceiver 803, refer to descriptions of the processor 801, the memory 802, and the transceiver 803 in the terminal device 700. Details are not described herein.

Optionally, the network device 800 in this embodiment of this application may be an apparatus for accessing a core network, a chip in an apparatus that may be configured to access a core network, or the like. This is not specifically limited in embodiments of this application. The apparatus for accessing the core network may be, for example, a base station in a long term evolution LTE system, a base station in a global system for mobile communications (global system for mobile communications, GSM), a base station in a UMTS, a base station in an NR system, a base station in a PLMN, a broadband network gateway (broadband network gateway, BNG), an aggregation switch, or a non-3GPP (non-3GPP) network device. The base station may include base stations in various forms, for example, a macro base station, a micro base station (also referred to as a small cell), a relay station, and an access point. This is not specifically limited in embodiments of this application.

Optionally, the network device 800 in this embodiment of this application supports configuration of CA or DC for the terminal device 700.

Optionally, the network device 800 in this embodiment of this application supports configuration of a transmission resource on an SL for the terminal device 700.

Optionally, the network device 800 in this embodiment of this application supports configuration of a positioning reference signal resource or a positioning reference signal resource set on an SL for the terminal device 700.

Optionally, the network device 800 in this embodiment of this application supports configuration of CA on an SL for the terminal device 700.

Optionally, the terminal device 700 in this embodiment of this application may be a device configured to implement a wireless communication function, for example, a terminal or a chip that may be used in a terminal. This is not specifically limited in embodiments of this application. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in an LTE system, a GSM, a UMTS, an NR system, or a future evolved PLMN.

Optionally, the terminal device 700 in this embodiment of this application has a CA capability or a DC capability.

Optionally, the terminal device 700 in this embodiment of this application has an SL capability. The terminal device 700 can be connected to another terminal device over a PC5 interface.

Optionally, the terminal device 700 in this embodiment of this application has a CA capability on an SL.

The following describes in detail the power method in embodiments of this application with reference to FIG. 4 to FIG. 7.

It should be noted that, in the following embodiments of this application, names of signals or names of parameters in information between devices are merely examples, and may be other names during specific implementation. This is not specifically limited in embodiments of this application.

Based on the foregoing communication system architecture and implementation scenario, as shown in FIG. 8, a power control method provided in an embodiment of this application includes the following steps.

S801: A first terminal device determines a ratio relationship between target transmit power corresponding to a first frequency domain unit and target transmit power corresponding to a second frequency domain unit. The first frequency domain unit is a first frequency domain resource, and the second frequency domain unit is a second frequency domain resource; or the first frequency domain unit is a frequency domain sub-resource of the first frequency domain resource, and the second frequency domain unit is a frequency domain sub-resource of the second frequency domain resource. The first frequency domain unit and the second frequency domain resource are used to send a reference signal.

It may be understood that, in this embodiment of this application, the first frequency domain resource is different from the second frequency domain resource. The first frequency domain resource and the second frequency domain resource may be frequency domain resources that can be used by the first terminal device. For example, the first terminal device may send the reference signal on both the first frequency domain resource and the second frequency domain resource.

It should be understood that, in this embodiment of this application, the first terminal device determines the first frequency domain resource and the second frequency domain resource based on higher layer signaling and reference signal configuration information.

Optionally, in this embodiment of this application, the first terminal device may obtain the higher layer signaling and the reference signal configuration information based on a configuration of a second device. Based on a specific form and a configuration manner of the second device, the first terminal device may obtain the higher layer signaling and the reference signal configuration information in the following manners.

Manner 1: When a first network device configures CA for the first terminal device, the first terminal device may obtain, in a process of establishing an initial connection or performing RRC connection reestablishment, the higher layer signaling and the reference signal configuration information that are sent by the first network device, and then determine the first frequency domain resource and the second frequency domain resource based on the higher layer signaling and the reference signal configuration information.

Manner 2: When a first network device and a second network device configure DC for the first terminal device, the first terminal device may obtain, in a process of establishing an initial connection or performing RRC connection reestablishment, the higher layer signaling and the reference signal configuration information sent by the first network device and the second network device, and then determine the first frequency domain resource and the second frequency domain resource based on the higher layer signaling and the reference signal configuration information.

Manner 3: When the first terminal device is in a working mode 1, the first terminal device obtains the higher layer signaling and the reference signal configuration information that are sent by a first network device, and then determines the first frequency domain resource and the second frequency domain resource based on the higher layer signaling and the reference signal configuration information.

Manner 4: When the first terminal device is in a working mode 2, the first terminal device determines the first frequency domain resource and the second frequency domain resource from a resource pool.

Optionally, in this embodiment of this application, the reference signal is used for positioning. The reference signal may be used to position the first terminal device, or the reference signal may be used to position the first network device, the second network device, or a second terminal device.

Optionally, in this embodiment of this application, the reference signal may be the reference signal described in the foregoing part of the description of embodiments, or the reference signal may be a positioning reference signal applied to an SL. This is not specifically limited in embodiments of this application.

Optionally, in this embodiment of this application, a frequency domain resource may be a resource corresponding to an active BWP of a cell to which the first terminal device is connected. The first frequency domain resource may be a resource corresponding to an active BWP of a first cell to which the first terminal device is connected, and the second frequency domain resource is a resource corresponding to an active BWP of a second cell to which the first terminal device is connected. Alternatively, the first frequency domain resource may be a resource corresponding to an active BWP of a carrier of a first cell to which the first terminal device is connected, and the second frequency domain resource may be a resource corresponding to an active BWP of a carrier of a second cell to which the first terminal device is connected.

Optionally, in this embodiment of this application, a frequency domain sub-resource is an RB or an RE. The frequency domain sub-resource of the first frequency domain resource may be a resource corresponding to an RB or an RE in the active BWP of the first cell to which the first terminal device is connected, and the frequency domain sub-resource of the second frequency domain resource may be a resource corresponding to an RB or an RE in the active BWP of the second cell to which the first terminal device is connected. Alternatively, the frequency domain sub-resource of the first frequency domain resource may be a resource corresponding to an RB or an RE in the active BWP of the carrier of the first cell to which the first terminal device is connected, and the frequency domain sub-resource of the second frequency domain resource may be a resource corresponding to an RB or an RE in the active BWP of the carrier of the second cell to which the first terminal device is connected.

Correspondingly, when the first frequency domain unit is the first frequency domain resource, and the second frequency domain unit is the second frequency domain resource, the ratio relationship between the target transmit power corresponding to the first frequency domain unit and the target transmit power corresponding to the second frequency domain unit may be a ratio relationship between target transmit power corresponding to the active BWP of the first cell and target transmit power corresponding to the active BWP of the second cell. When the first frequency domain unit is the frequency domain sub-resource of the first frequency domain resource, and the second frequency domain unit is the frequency domain sub-resource of the second frequency domain resource, the ratio relationship between the target transmit power corresponding to the first frequency domain unit and the target transmit power corresponding to the second frequency domain unit may be a ratio relationship between target transmit power corresponding to the RB or the RE in the active BWP of the first cell and target transmit power corresponding to the RB or the RE in the active BWP of the second cell.

For example, in manner 1, the first cell and the second cell may be cells in a serving cell set corresponding to CA. For example, the first cell may be a PCell, and the second cell may be an SCell; or the first cell may be an SCell, and the second cell may be a PCell. This is not specifically limited in embodiments of this application.

It may be understood that, in manner 2, the first cell and the second cell may be cells in a serving cell set corresponding to DC. The first cell may be a PCell, and the second cell may be a PSCell; or the first cell may be a PCell, and the second cell may be an SCell; or the first cell may be a PSCell, and the second cell may be a PCell; or the first cell may be an SCell, and the second cell may be a PSCell; or the first cell may be an SCell, and the second cell may be a PCell. This is not specifically limited in embodiments of this application.

Alternatively, optionally, a frequency domain resource may be a frequency domain resource corresponding to a carrier to which the first terminal device is connected. The first frequency domain resource is a frequency domain resource corresponding to a first carrier to which the first terminal device is connected, and the second frequency domain resource is a frequency domain resource corresponding to a second carrier to which the first terminal device is connected.

For example, in manner 3 and manner 4, the frequency domain resource may be a resource corresponding to an active SL BWP of a carrier to which the first terminal device is connected. When the first carrier and the second carrier are configured in SL CA, the first frequency domain resource may be a resource corresponding to an active SL BWP of the first carrier to which the first terminal device is connected, and the second frequency domain resource may be a resource corresponding to an active SL BWP of the second carrier to which the first terminal device is connected. Alternatively, the first frequency domain resource may be a frequency domain resource corresponding to the first carrier to which the first terminal device is connected through an SL, and the second frequency domain resource may be a frequency domain resource corresponding to the second carrier to which the first terminal device is connected through an SL. Alternatively, the first frequency domain resource may be a resource corresponding to an active BWP of the first carrier to which the first terminal device is connected through an SL, and the second frequency domain resource may be a frequency domain resource corresponding to the second carrier to which the first terminal device is connected through an SL. Alternatively, the first frequency domain resource may be a frequency domain resource corresponding to the first carrier to which the first terminal device is connected through an SL, and the second frequency domain resource may be a frequency domain resource corresponding to an active BWP of the second carrier to which the first terminal device is connected through an SL.

Optionally, the frequency domain sub-resource of the first frequency domain resource may be a resource corresponding to an RB or an RE in an active SL BWP of the first carrier to which the first terminal device is connected, and the frequency domain sub-resource of the second frequency domain resource may be a resource corresponding to an RB or an RE in an active SL BWP of the second carrier to which the first terminal device is connected. Alternatively, the frequency domain sub-resource of the first frequency domain resource may be a resource corresponding to an RB or an RE in the first carrier to which the first terminal device is connected through an SL, and the frequency domain sub-resource of the second frequency domain resource may be a resource corresponding to an RB or an RE in the active BWP of the second carrier to which the first terminal device is connected through an SL.

Correspondingly, when the first frequency domain unit is the first frequency domain resource, and the second frequency domain unit is the second frequency domain resource, the ratio relationship between the target transmit power corresponding to the first frequency domain unit and the target transmit power corresponding to the second frequency domain unit may be a ratio relationship between target transmit power corresponding to the active SL BWP of the first carrier and target transmit power corresponding to the active SL BWP of the second carrier. When the first frequency domain unit is the frequency domain sub-resource of the first frequency domain resource, and the second frequency domain unit is the frequency domain sub-resource of the second frequency domain resource, the ratio relationship between the target transmit power corresponding to the first frequency domain unit and the target transmit power corresponding to the second frequency domain unit may be a ratio relationship between target transmit power corresponding to the RB or the RE in the active SL BWP of the first carrier and target transmit power corresponding to the RB or the RE in the active SL BWP of the second carrier.

It should be understood that, in this embodiment of this application, "active SL BWP of a carrier" and "active BWP of a carrier" have a same meaning, and may be interchanged for description. This is uniformly described herein, and details are not described below again.

It should be understood that, in this embodiment of this application, "SL CA" may mean "the first terminal device supports a plurality of carriers at the same time when an SL is configured". The two have a same meaning, and may be interchanged for description. This is uniformly described herein, and details are not described below again.

It may be understood that, in this embodiment of this application, target transmit power may be actual transmit power at which the first terminal device sends the reference signal.

Optionally, in this embodiment of this application, the ratio relationship between the target transmit power corresponding to the first frequency domain unit and the target transmit power corresponding to the second frequency domain unit may be agreed on in a protocol, or may be negotiated by the first terminal device and the second device (for example, the first network device or the second terminal device) in advance, or may be preconfigured on the first terminal device. This is not specifically limited in embodiments of this application.

Optionally, in this embodiment of this application, the ratio relationship between the target transmit power corresponding to the first frequency domain unit and the target transmit power corresponding to the second frequency domain unit may be close. For example, the target transmit power corresponding to the first frequency domain unit is target transmit power #1, and the target transmit power corresponding to the second frequency domain unit is target transmit power #2. A ratio relationship between the target transmit power #1 and the target transmit power #2 may be 1:0.95, 1:0.9, 1:0.8, 0.9:1, or the like. This is not specifically limited in embodiments of this application.

Optionally, in this embodiment of this application, target transmit power may be transmit power expected by the first terminal device.

Optionally, the ratio relationship between the target transmit power corresponding to the first frequency domain unit and the target transmit power corresponding to the second frequency domain unit may be determined by the first terminal device based on a capability of the first terminal device and/or information corresponding to the first frequency domain resource and the second frequency domain resource. Information corresponding to a frequency domain resource may include size information of the frequency domain resource and/or transmit power corresponding to the frequency domain resource. For example, information corresponding to the first frequency domain resource may include size information of the first frequency domain resource and/or transmit power corresponding to the first frequency domain resource. The size information of the first frequency domain resource may include a quantity of frequency domain sub-resources of the first frequency domain resource and/or a quantity of frequency domain sub-resources that are in the first frequency domain resource and that are occupied for sending the reference signal, and the transmit power corresponding to the first frequency domain resource may be transmit power calculated according to formula (1) or formula (2). In other words, in this embodiment of this application, the transmit power corresponding to the first frequency domain resource is transmit power calculated according to a power control solution in an existing protocol.

Correspondingly, the size information corresponding to the second frequency domain resource may include a quantity of frequency domain sub-resources of the second frequency domain resource or a quantity of frequency domain sub-resources that are in the second frequency domain resource and that are occupied for sending the reference signal, and the transmit power corresponding to the second frequency domain resource may be transmit power calculated according to formula (1) or formula (2).

Optionally, in a possible implementation, the first terminal device may determine, based on the transmit power corresponding to the first frequency domain resource and the transmit power corresponding to the second frequency domain resource, the ratio relationship between the target transmit power corresponding to the first frequency domain unit and the target transmit power corresponding to the second frequency domain unit. For example, a PCell is the first cell, an SCell is the second cell, and a ratio of transmit power corresponding to an active BWP of the PCell to transmit power corresponding to an active BWP of the SCell is 4:1. The first terminal device may determine a ratio relationship between target transmit power corresponding to the active BWP of the PCell and target transmit power corresponding to the active BWP of the SCell as 3:2 or 5:4. In this way, power at which reference signals on two different frequency domain resources reach the second device can be close, thereby improving positioning accuracy.

Alternatively, in another possible implementation, the first terminal device may determine, based on allowed maximum transmit power of the first terminal device, the ratio relationship between the target transmit power corresponding to the first frequency domain unit and the target transmit power corresponding to the second frequency domain unit. For example, a PCell is the first cell, an SCell is the second cell, a ratio of transmit power corresponding to an active BWP of the PCell to transmit power corresponding to an active BWP of the SCell is 1:4, and the maximum transmit power of the first terminal device is five power units. The first terminal device may determine a ratio relationship between target transmit power corresponding to the active BWP of the PCell and target transmit power corresponding to the active BWP of the SCell as 2:3. In this way, power at which reference signals on two different frequency domain resources reach the second device can be close, thereby improving positioning accuracy.

Alternatively, in another possible implementation, the first terminal device determines, based on the size information corresponding to the first frequency domain resource and the size information corresponding to the second frequency domain resource, the ratio relationship between the target transmit power corresponding to the first frequency domain unit and the target transmit power corresponding to the second frequency domain unit. For example, a PCell is the first cell, an SCell is the second cell, and a ratio of a quantity of RBs in an active BWP of the PCell to a quantity of RBs in an active BWP of the SCell is 1:2. The first terminal device may determine a ratio relationship between target transmit power corresponding to the active BWP of the PCell and target transmit power corresponding to the active BWP of the SCell as 6:5, 5:4, or the like. In this way, power at which reference signals on two different frequency domain resources reach the second device can be close, thereby improving positioning accuracy.

Alternatively, in another possible implementation, the first terminal device may determine, based on a DL path loss estimation corresponding to the first frequency domain resource and a DL path loss estimation corresponding to the second frequency domain resource, the ratio relationship between the target transmit power corresponding to the first frequency domain unit and the target transmit power corresponding to the second frequency domain unit. For example, a PCell is the first cell, an SCell is the second cell, and a ratio of a DL path loss estimation corresponding to an active BWP of the PCell to a DL path loss estimation corresponding to an active BWP of the SCell is 0.5. Because the DL path loss estimation corresponding to the active BWP of the SCell is greater than the DL path loss estimation corresponding to the active BWP of the PCell, the first terminal device may determine a ratio relationship between target transmit power corresponding to the active BWP of the PCell and target transmit power corresponding to the active BWP of the SCell as 2:3. In this way, power at which reference signals on two different frequency domain resources reach the second device can be close, thereby improving positioning accuracy.

S802: The first terminal device determines, based on the ratio relationship between the target transmit power corresponding to the first frequency domain unit and the target transmit power corresponding to the second frequency domain unit, target transmit power corresponding to the first frequency domain resource and target transmit power corresponding to the second frequency domain resource.

It should be understood that, in this embodiment of this application, when the first frequency domain unit is the frequency domain sub-resource of the first frequency domain resource, and the second frequency domain unit is the frequency domain sub-resource of the second frequency domain resource, the ratio relationship between the target transmit power corresponding to the first frequency domain unit and the target transmit power corresponding to the second frequency domain unit may be different from a ratio relationship between the target transmit power corresponding to the first frequency domain resource and the target transmit power corresponding to the second frequency domain resource. For example, the frequency domain sub-resource of the first frequency domain resource is a resource corresponding to an RB in an active BWP of a PCell, the frequency domain sub-resource of the second frequency domain resource is a resource corresponding to an RB in an active BWP of an SCell, and a ratio of a quantity of RBs in the active BWP of the PCell to a quantity of RBs in the active BWP of the SCell is 1:2. If a ratio relationship between target transmit power corresponding to the RB in the active BWP of the PCell and target transmit power corresponding to the RB in the active BWP of the SCell is 1:1, a ratio relationship between target transmit power corresponding to the active BWP of the PCell and target transmit power corresponding to the active BWP of the SCell is 1:2 rather than 1:1.

Optionally, in this embodiment of this application, when the first frequency domain unit is the first frequency domain resource, and the second frequency domain unit is the second frequency domain resource, the first terminal device may directly determine, based on the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource.

For example, the first frequency domain resource is a resource corresponding to the active SL BWP of the first carrier, the second frequency domain resource is a resource corresponding to the active SL BWP of the second carrier, and the allowed maximum transmit power of the first terminal device is six power units. If a ratio relationship between target transmit power corresponding to the active SL BWP of the first carrier and target transmit power corresponding to the active BWP of the second carrier is 2:1, the first terminal device may determine that the target transmit power corresponding to the active SL BWP of the first carrier is two power units, and the target transmit power corresponding to the active SL BWP of the second carrier is one power unit; or the first terminal device may determine that the target transmit power corresponding to the active SL BWP of the first carrier is four power units, and the target transmit power corresponding to the active SL BWP of the second carrier is two power units; or the first terminal device may determine that the target transmit power corresponding to the active SL BWP of the first carrier is 1.5 power units, and the target transmit power corresponding to the active SL BWP of the second carrier is 0.5 power units.

Optionally, in this embodiment of this application, that the first terminal device determines, based on the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource (step S802) may include the following steps.

S802a: The first terminal device obtains information corresponding to the first frequency domain resource and/or the second frequency domain resource. The information corresponding to the first frequency domain resource and/or the second frequency domain resource may include one or more of the following: a quantity of RBs or REs in the first frequency domain resource and/or the second frequency domain resource, a quantity of RBs or REs occupied by the reference signal in the first frequency domain resource and/or the second frequency domain resource, and the transmit power corresponding to the first frequency domain resource and/or the second frequency domain resource.

It should be understood that the first terminal device may obtain, based on the higher layer signaling and the reference signal configuration information, the information corresponding to the first frequency domain resource and/or the second frequency domain resource.

S802b: The first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource.

For example, the first frequency domain resource is a resource corresponding to the active SL BWP of the first carrier, the second frequency domain resource is a resource corresponding to the active SL BWP of the second carrier, a ratio of a quantity of RBs in the active SL BWP of the first carrier to a quantity of RBs in the active SL BWP of the second carrier is 1:2, the ratio relationship between the target transmit power corresponding to the first frequency domain unit and the target transmit power corresponding to the second frequency domain unit is 6:5, and the allowed maximum transmit power of the first terminal device is 16 power units. This indicates that the first terminal device determines, based on the size information of the first frequency domain resource, the size information of the second frequency domain resource, and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource. When the first frequency domain unit is the frequency domain sub-resource of the first frequency domain resource, the second frequency domain unit is the frequency domain sub-resource of the second frequency domain resource, and the frequency domain sub-resource is an RB, the first terminal device may determine that a ratio relationship between target transmit power corresponding to the active SL BWP of the first carrier and target transmit power corresponding to the active SL BWP of the second carrier is 3:5. The target transmit power corresponding to the active SL BWP of the first carrier may be three power units, and the target transmit power corresponding to the active SL BWP of the second carrier may be five power units; or the target transmit power corresponding to the active SL BWP of the first carrier may be six power units, and the target transmit power corresponding to the active SL BWP of the second carrier may be 10 power units.

For example, the first frequency domain resource is a resource corresponding to the active SL BWP of the first carrier, the second frequency domain resource is a resource corresponding to the active SL BWP of the second carrier, the transmit power corresponding to the first frequency domain resource is two power units, the transmit power corresponding to the second frequency domain resource is one power unit, the ratio relationship between the target transmit power corresponding to the first frequency domain unit and the target transmit power corresponding to the second frequency domain unit is 10:9, and the allowed maximum transmit power of the first terminal device is six power units. This indicates that the first terminal device determines, based on the transmit power corresponding to the first frequency domain resource and/or the transmit power corresponding to the second frequency domain resource, and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource. When the first frequency domain unit is the first frequency domain resource, and the second frequency domain unit is the second frequency domain resource, the first terminal device may separately determine, by using a reference that the transmit power corresponding to the first frequency domain resource is two power units, that target transmit power corresponding to the active SL BWP of the first carrier is two power units, and target transmit power corresponding to the active SL BWP of the second carrier is 1.8 power units; or the first terminal device may separately determine, by using a reference that the transmit power corresponding to the second frequency domain resource is one power unit, that target transmit power corresponding to the active SL BWP of the second carrier is one power unit, and target transmit power corresponding to the active SL BWP of the first carrier is 1.1 power units.

It should be understood that the power control method provided in this embodiment of this application may be applied to a scenario in which three or more frequency domain resources are configured for the first terminal device. The following separately describes, by using examples, a scenario in which three frequency domain resources are configured for the first terminal device and a scenario in which four frequency domain resources are configured for the first terminal device.

Scenario 1: A first frequency domain resource, a second frequency domain resource, and a third frequency domain resource are configured for the first terminal device.

For example, in scenario 1, the power control method provided in this embodiment of this application includes the following steps.

S801-1: The first terminal device may determine a ratio relationship between target transmit power corresponding to a first frequency domain unit, target transmit power corresponding to a second frequency domain unit, and target transmit power corresponding to a third frequency domain unit. The first frequency domain unit is the first frequency domain resource, the second frequency domain unit is the second frequency domain resource, and the third frequency domain unit is the third frequency domain resource; or the first frequency domain unit is a frequency domain sub-resource of the first frequency domain resource, the second frequency domain unit is a frequency domain sub-resource of the second frequency domain resource, and the third frequency domain unit is a frequency domain sub-resource of the third frequency domain resource.

Optionally, the third frequency domain resource may be a resource corresponding to an active BWP of a third cell to which the first terminal device is connected. The third cell may be a cell in a serving cell set corresponding to CA; or the third cell may be a cell in a serving cell set corresponding to DC.

Alternatively, optionally, the third frequency domain resource may be a frequency domain resource corresponding to a third carrier to which the first terminal device is connected. For example, in manner 3 or manner 4, the third frequency domain resource may be a resource corresponding to an active SL BWP of the third carrier to which the first terminal device is connected.

S802-1: The first terminal device determines, based on the ratio relationship between the target transmit power corresponding to the first frequency domain unit, the target transmit power corresponding to the second frequency domain unit, and the target transmit power corresponding to the third frequency domain unit, target transmit power corresponding to the first frequency domain resource, target transmit power corresponding to the second frequency domain resource, and target transmit power corresponding to the third frequency domain resource.

It may be understood that a principle of performing step S801-1 by the first terminal device is similar to a principle of performing step S801 by the first terminal device, and a principle of performing step S802-1 by the first terminal device is similar to a principle of performing step S802 by the first terminal device. Examples are as follows:

The first terminal device may determine the ratio relationship between the target transmit power corresponding to the first frequency domain unit, the target transmit power corresponding to the second frequency domain unit, and the target transmit power corresponding to the third frequency domain unit. The first frequency domain unit is the first frequency domain resource, the second frequency domain unit is the second frequency domain resource, and the third frequency domain unit is the third frequency domain resource; or the first frequency domain unit is a frequency domain sub-resource of the first frequency domain resource, the second frequency domain unit is a frequency domain sub-resource of the second frequency domain resource, and the third frequency domain unit is a frequency domain sub-resource of the third frequency domain resource. For example, the first frequency domain resource is a resource corresponding to the active SL BWP of the first carrier, the second frequency domain resource is a resource corresponding to the active SL BWP of the second carrier, the third frequency domain resource is a resource corresponding to the active SL BWP of the third carrier, and the allowed maximum transmit power of the first terminal device is four power units. If a ratio relationship between target transmit power corresponding to the active SL BWP of the first carrier, target transmit power corresponding to the active BWP of the second carrier, and target transmit power corresponding to the active BWP of the second carrier is 2:1:1, the first terminal device may determine that the target transmit power corresponding to the active SL BWP of the first carrier is two power units, the target transmit power corresponding to the active SL BWP of the second carrier is one power unit, and the target transmit power corresponding to the active SL BWP of the third carrier is one power unit.

For another example, step S802-1 may include the following steps.

S802-1a: The first terminal device may obtain information corresponding to at least one of the first frequency domain resource, the second frequency domain resource, and the third frequency domain resource.

S802-1b: The first terminal device determines, based on the information corresponding to the at least one of the first frequency domain resource, the second frequency domain resource, and the third frequency domain resource, and the ratio relationship between the target transmit power corresponding to the first frequency domain unit, the target transmit power corresponding to the second frequency domain unit, and the target transmit power corresponding to the third frequency domain unit, the target transmit power corresponding to the first frequency domain resource, the target transmit power corresponding to the second frequency domain resource, and the target transmit power corresponding to the third frequency domain resource.

For implementation of steps S801-1, S802-1, S802-1a, and S802-1b, refer to related descriptions of steps S801, S802, S802a, and S802b. Details are not described herein again.

Scenario 2: A first frequency domain resource, a second frequency domain resource, a third frequency domain resource, and a fourth frequency domain resource are configured for the first terminal device.

For example, in scenario 2, the power control method provided in this embodiment of this application includes the following steps.

S801-2: The first terminal device may determine a ratio relationship between target transmit power corresponding to a first frequency domain unit, target transmit power corresponding to a second frequency domain unit, target transmit power corresponding to a third frequency domain unit, and target transmit power corresponding to a fourth frequency domain unit. The first frequency domain unit is the first frequency domain resource, the second frequency domain unit is the second frequency domain resource, the third frequency domain unit is the third frequency domain resource, and the fourth frequency domain unit is the fourth frequency domain resource; or the first frequency domain unit is a frequency domain sub-resource of the first frequency domain resource, the second frequency domain unit is a frequency domain sub-resource of the second frequency domain resource, the third frequency domain unit is a frequency domain sub-resource of the third frequency domain resource, and the fourth frequency domain unit is a sub-resource of the fourth frequency domain resource.

Optionally, the third frequency domain resource may be a resource corresponding to an active BWP of a third cell to which the first terminal device is connected. The third cell may be a cell in a serving cell set corresponding to CA; or the third cell may be a cell in a serving cell set corresponding to DC.

Alternatively, optionally, the third frequency domain resource may be a frequency domain resource corresponding to a third carrier to which the first terminal device is connected. For example, in manner 3 or manner 4, the third frequency domain resource may be a resource corresponding to an active SL BWP of the third carrier to which the first terminal device is connected.

Optionally, the fourth frequency domain resource may be a resource corresponding to an active BWP of a fourth cell to which the first terminal device is connected. The fourth cell may be a cell in a serving cell set corresponding to CA; or the fourth cell may be a cell in a serving cell set corresponding to DC.

Alternatively, optionally, the fourth frequency domain resource may be a frequency domain resource corresponding to a fourth carrier to which the first terminal device is connected. For example, in manner 3 or manner 4, the fourth frequency domain resource may be a resource corresponding to an active SL BWP of the fourth carrier to which the first terminal device is connected.

S802-2: The first terminal device determines, based on the ratio relationship between the target transmit power corresponding to the first frequency domain unit, the target transmit power corresponding to the second frequency domain unit, and the target transmit power corresponding to the third frequency domain unit, target transmit power corresponding to the first frequency domain resource, target transmit power corresponding to the second frequency domain resource, and target transmit power corresponding to the third frequency domain resource.

It may be understood that, for implementation of the foregoing steps S801-2 and S802-2, refer to the foregoing steps S801 to S802-1. Details are not described herein again.

In this embodiment of this application, the first terminal device may determine a ratio relationship between target transmit power corresponding to different frequency domain units for sending the reference signal, and determine, based on the ratio relationship, target transmit power corresponding to different frequency domain resources. This can avoid that the terminal device preferentially configures, for a frequency domain resource corresponding to a PCell, transmit power for sending the reference signal, thereby avoiding an excessively large difference between reference signal transmit power on different frequency domain resources, so that a position estimation error can be reduced, and positioning accuracy can be improved. Therefore, based on the power control method provided in this embodiment of this application, a power control solution for a terminal device to send a reference signal can be optimized, to improve positioning accuracy.

The actions of the first terminal device in steps S801 to S802-2 may be performed by the network device instructed by the processor 701 in the terminal device 700 shown in FIG. 7 by invoking the application program code stored in the memory 702. This is not limited in this embodiment.

Optionally, after step S802, the power control method provided in this embodiment of this application may further include:

S803: The first terminal device sends the reference signal on the first frequency domain resource at the target transmit power corresponding to the first frequency domain resource, and sends the reference signal on the second frequency domain resource at the target transmit power corresponding to the second frequency domain resource.

It may be understood that, as shown in FIG. 8, in this embodiment of this application, when three or more frequency domain resources are configured for the first terminal device, the first terminal device may send the reference signal on a plurality of configured frequency domain resources at target transmit power respectively corresponding to the plurality of frequency domain resources. For example, in scenario 1, the first terminal device may send the reference signal on the first frequency domain resource at the target transmit power corresponding to the first frequency domain resource, send the reference signal on the second frequency domain resource at the target transmit power corresponding to the second frequency domain resource, and send the reference signal on the third frequency domain resource at the target transmit power corresponding to the third frequency domain resource.

Optionally, the first terminal device may send the reference signal to the second device, or may send the reference signal to a neighboring-cell network device of the first terminal device. The second device may be a first network device, a second network device, or a second terminal device. This is not specifically limited in embodiments of this application.

For example, when the second device is the first network device, and the first network device configures CA for the first terminal device, the first terminal device may send the reference signal to the first network device and/or a neighboring-cell network device of the first terminal device; or when the first network device and the second network device configure DC for the first terminal device, the first terminal device may send the reference signal to the first network device, the second network device, and/or a neighboring-cell network device.

For example, when the second device is the second terminal device, and SL CA is configured for the first terminal device, the first terminal device may send the reference signal to the second terminal device.

Optionally, as shown in FIG. 8, the power control method provided in this embodiment of this application may further include:

S804: The second device sends first indication information to the first terminal device, where the first indication information indicates the first terminal device to determine, based on the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource. Correspondingly, the first terminal device receives the first indication information from the second device, and performs step S802 or step 801 based on the first indication information. In other words, in some communication scenarios, communication reliability may need to be preferentially ensured instead of positioning accuracy. The terminal device determines, based on an indication of the first indication information, the target transmit power for sending the reference signal, so that it can be avoided that the reference signal is sent at close target transmit power in a scenario in which the reference signal does not need to be sent at close transmit power.

It may be understood that, in this embodiment of this application, when three or more frequency domain resources are configured for the first terminal device, the first indication information may indicate the first terminal device to determine, based on a ratio relationship between the three or more frequency domain units, target transmit power respectively corresponding to the three or more frequency domain resources. For example, in scenario 1, the first indication information may indicate the first terminal device to determine, based on the ratio relationship between the target transmit power corresponding to the first frequency domain unit, the target transmit power corresponding to the second frequency domain unit, and the target transmit power corresponding to the third frequency domain unit, the target transmit power corresponding to the first frequency domain resource, the target transmit power corresponding to the second frequency domain resource, and the target transmit power corresponding to the third frequency domain resource.

For another example, in scenario 2, the first indication information may indicate the first terminal device to determine, based on the ratio relationship between the target transmit power corresponding to the first frequency domain unit, the target transmit power corresponding to the second frequency domain unit, the target transmit power corresponding to the third frequency domain unit, and the target transmit power corresponding to the fourth frequency domain unit, the target transmit power corresponding to the first frequency domain resource, the target transmit power corresponding to the second frequency domain resource, the target transmit power corresponding to the third frequency domain resource, and the target transmit power corresponding to the fourth frequency domain resource.

Optionally, in this embodiment of this application, the second device may be a first network device, a second terminal device, a second network device, or the like. For example, the first network device may send the first indication information to the first terminal device; or the second terminal device may send the first indication information to the first terminal device; or when the first network device and the second network device configure DC for the first terminal device, the second network device may send the first indication information to the first terminal device. This is not specifically limited in embodiments of this application.

Optionally, in this embodiment of this application, the first indication information may be sent by using RRC signaling, a broadcast message, MAC signaling, physical layer signaling, or signaling corresponding to an SL. This is not specifically limited in embodiments of this application.

Optionally, in this embodiment of this application, the first indication information may be positioning reference signal configuration information. It may be understood that, because the positioning reference signal configuration information may indicate that the positioning reference signal is used for positioning, the first terminal device may be implicitly indicated to determine, based on the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource.

Optionally, in this embodiment of this application, the first indication information may include the ratio relationship between the target transmit power corresponding to the first frequency domain unit and the target transmit power corresponding to the second frequency domain unit. In other words, the ratio relationship between the target transmit power corresponding to the first frequency domain unit and the target transmit power corresponding to the second frequency domain unit may be indicated by the second device.

Optionally, in this embodiment of this application, the ratio relationship between the target transmit power corresponding to the first frequency domain unit and the target transmit power corresponding to the second frequency domain unit in the first indication information may be a ratio relationship expected by the second device.

It should be understood that, because the second device may receive the reference signal sent by the first terminal device on each of a plurality of frequency domain resources, the second terminal device may determine receive power of the reference signal on each frequency domain resource, and adjust, based on a difference between receive power of the reference signal on all frequency domain resources, a ratio relationship between target transmit power corresponding to all of a plurality of frequency domain units for sending the reference signal in the first indication information.

Optionally, in this embodiment of this application, before the first terminal device receives the first indication information, the method further includes:

The first terminal device sends capability information to the second device, where the capability information indicates that the first terminal device has a capability of sending the reference signal based on a ratio relationship between target transmit power corresponding to different frequency domain units. Correspondingly, the second device receives the capability information from the first terminal device. In other words, the first network device sends the first indication information to the first terminal device only after receiving the capability information of the first terminal device.

In this embodiment of this application, the first terminal device may determine, based on an indication of the first indication information and a ratio relationship between target transmit power corresponding to different frequency domain resources, the target transmit power corresponding to the different frequency domain resources. This can avoid that the terminal device preferentially configures, for a frequency domain resource corresponding to a PCell, transmit power for sending the reference signal, thereby avoiding an excessively large difference between reference signal transmit power on different frequency domain resources, so that a position estimation error can be reduced, and positioning accuracy can be improved. Therefore, based on the power control method provided in this embodiment of this application, a power control solution for a terminal device to send a reference signal can be optimized, to improve positioning accuracy.

The actions of the first terminal device in steps S801 to S804 may be performed by the network device instructed by the processor 701 in the communication apparatus 700 shown in FIG. 7 by invoking the application program code stored in the memory 702. When the second device is a first network device or a second network device, the actions of the second device in steps S801 to S804 may be performed by the terminal device instructed by the processor 801 in the network device 800 shown in FIG. 7 by invoking the application program code stored in the memory 802. When the second device is a second terminal device, the actions of the second device in steps S801 to S804 may be performed by the terminal device instructed by the processor 701 in the terminal device 700 shown in FIG. 7 by invoking the application program code stored in the memory 702. This is not limited in this embodiment.

Optionally, in this embodiment of this application, the ratio relationship between the target transmit power corresponding to the first frequency domain unit and the target transmit power corresponding to the second frequency domain unit includes that the target transmit power corresponding to the first frequency domain unit is the same as the target transmit power corresponding to the second frequency domain unit. In other words, the first terminal device sends the reference signal at same transmit power in all of the plurality of frequency domain units, so that consistency of receive power of the reference signal arriving at the second device on the plurality of frequency domain resources can be improved, thereby reducing a position estimation error, and improving positioning accuracy.

It may be understood that when the first frequency domain resource, the second frequency domain resource, and the third frequency domain resource are configured for the first terminal device, the ratio relationship between the target transmit power corresponding to the first frequency domain unit, the target transmit power corresponding to the second frequency domain unit, and the target transmit power corresponding to the third frequency domain unit includes that the target transmit power corresponding to the first frequency domain unit, the target transmit power corresponding to the second frequency domain unit, and the target transmit power corresponding to the third frequency domain unit are the same. When the first frequency domain resource, the second frequency domain resource, the third frequency domain resource, and the fourth frequency domain resource are configured for the first terminal device, the ratio relationship between the target transmit power corresponding to the first frequency domain unit, the target transmit power corresponding to the second frequency domain unit, the target transmit power corresponding to the third frequency domain unit, and the target transmit power corresponding to the fourth frequency domain unit includes that the target transmit power corresponding to the first frequency domain unit, the target transmit power corresponding to the second frequency domain unit, the target transmit power corresponding to the third frequency domain unit, and the target transmit power corresponding to the fourth frequency domain unit are the same.

It may be understood that when the second device configures CA or DC for the first terminal device, and the first frequency domain unit is the first frequency domain resource and the second frequency domain unit is the second frequency domain resource, that the target transmit power corresponding to the first frequency domain unit is the same as the target transmit power corresponding to the second frequency domain unit is that the target transmit power corresponding to the active BWP of the first cell is the same as the target transmit power corresponding to the active BWP of the second cell. When the first frequency domain unit is the frequency domain sub-resource of the first frequency domain resource, and the second frequency domain unit is the frequency domain sub-resource of the second frequency domain resource, that the target transmit power corresponding to the first frequency domain unit is the same as the target transmit power corresponding to the second frequency domain unit is that the target transmit power corresponding to the RB or the RE in the active BWP of the first cell is the same as the target transmit power corresponding to the RB or the RE in the active BWP of the second cell.

It may be understood that, when the second device configures SL CA for the first terminal device, and the first frequency domain unit is the first frequency domain resource and the second frequency domain unit is the second frequency domain resource, that the target transmit power corresponding to the first frequency domain unit is the same as the target transmit power corresponding to the second frequency domain unit is that the target transmit power corresponding to the active SL BWP of the first carrier is the same as the target transmit power corresponding to the active SL BWP of the second carrier. When the first frequency domain unit is the frequency domain sub-resource of the first frequency domain resource, and the second frequency domain unit is the frequency domain sub-resource of the second frequency domain resource, that the target transmit power corresponding to the first frequency domain unit is the same as the target transmit power corresponding to the second frequency domain unit is that the target transmit power corresponding to the RB or the RE in the active SL BWP of the first carrier is the same as the target transmit power corresponding to the RB or the RE in the active SL BWP of the second carrier.

Optionally, in this embodiment of this application, when the first frequency domain unit is an RE of the first frequency domain resource and the second frequency domain unit is an RE of the second frequency domain resource, that the target transmit power corresponding to the first frequency domain unit is the same as the target transmit power corresponding to the second frequency domain unit may mean that a power factor ratio of the RE of the first frequency domain resource is the same as a power factor ratio of the RE of the second frequency domain resource. The power factor ratio may be power or energy corresponding to each RE, and the power factor ratio may also be replaced with energy per resource element (energy per resource element, EPRE), power per resource element, or the like. This is not specifically limited in embodiments of this application.

The following separately describes, based on cases in which frequency domain units correspond to different frequency domain resource granularities and with reference to different manners of calculating target transmit power in step S802b, several types of corresponding target transmit power under a condition that the ratio relationship is that the target transmit power corresponding to the first frequency domain unit is the same as the target transmit power corresponding to the second frequency domain unit.

Case 1: This case corresponds to a case in which a frequency domain unit is a frequency domain resource.

Optionally, in this embodiment of this application, the first frequency domain unit is the first frequency domain resource, the second frequency domain unit is the second frequency domain resource, and the ratio relationship between the target transmit power corresponding to the first frequency domain unit and the target transmit power corresponding to the second frequency domain unit includes that the target transmit power corresponding to the first frequency domain unit is the same as the target transmit power corresponding to the second frequency domain unit. That the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource (step S802b) includes:

the first terminal device determines, based on transmit power corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource, where the target transmit power corresponding to the second frequency domain resource is the same as the target transmit power corresponding to the first frequency domain resource, and the target transmit power corresponding to the first frequency domain resource is a smallest value in first transmit power and second transmit power.

In other words, in case 1 and the condition that the target transmit power corresponding to the first frequency domain unit is the same as the target transmit power corresponding to the second frequency domain unit, the target transmit power corresponding to the first frequency domain resource is the same as the target transmit power corresponding to the second frequency domain resource.

Further, in a possible implementation, the first transmit power is maximum average transmit power determined based on the allowed maximum transmit power of the first terminal device. For different frequency domain resource types, allowed maximum transmit power of the first terminal device may be different. For example, in a scenario in which CA or DC is configured for the first terminal device, the allowed maximum transmit power of the first terminal device may be $P_{CMAX,f,c}(i)$ in formula (1). For another example, in a scenario in which SL CA is configured for the first terminal device, the allowed maximum transmit power of the first terminal device may be $P_{CMAX}$ in formula (3).

Based on different frequency domain resource types, the following provides examples of several manners of calculating target transmit power.

Type 1: corresponds to a case in which a frequency domain resource is a resource corresponding to an active BWP of a cell. This type may correspond to a scenario in which the first network device configures CA or DC for the first terminal device. The first frequency domain resource is the resource corresponding to the active BWP of the first cell to which the first terminal device is connected, the second frequency domain resource is the resource corresponding to the active BWP of the second cell to which the first terminal device is connected, and the first transmit power is maximum average transmit power determined based on allowed maximum transmit power of the first terminal device on a transmit occasion i for sending the reference signal.

Optionally, in this embodiment of this application, the first transmit power may be represented as $P_{CMAX}(i)/N$, $P_{CMAX}(i)$ is the allowed maximum transmit power of the first terminal device on the transmission occasion $i$, and $N$ is a quantity of cells to which the first terminal device is connected on the transmission occasion $i$. It may be understood that when only the first frequency domain resource and the second frequency domain resource are configured for the first terminal device, $N$ is equal to 2. When a plurality of frequency domain resources are configured for the first terminal device, $N$ is equal to a quantity of the plurality of frequency domain resources. For example, in the foregoing scenario 1, the first frequency domain resource, the second frequency domain resource, and the third frequency domain resource are configured for the first terminal device, and then $N$ is equal to 3. For another example, in the foregoing scenario 2, the first frequency domain resource, the second frequency domain resource, the third frequency domain resource, and the fourth frequency domain resource are configured for the first terminal device, and then $N$ is equal to 4.

It should be understood that, in this embodiment of this application, $P_{CMAX}(i)$ may alternatively indicate allowed maximum transmit power of the first terminal device on the first frequency domain resource or the second frequency domain resource on the transmission occasion $i$, or $P_{CMAX}(i)$ may indicate a largest value in allowed maximum transmit power of the first terminal device on the first frequency domain resource and allowed maximum transmit power of the first terminal device on the second frequency domain resource on the transmission occasion $i$. Further, when the first terminal device is connected to more frequency domain resources, for example, in scenario 1, the first terminal device is connected to the first frequency domain resource, the second frequency domain resource, and the third frequency domain resource, $P_{CMAX}(i)$ may alternatively indicate allowed maximum transmit power of the first terminal device on the first frequency domain resource, the second frequency domain resource, or the third frequency domain resource on the transmission occasion $i$; or $P_{CMAX}(i)$ may indicate a largest value in allowed maximum transmit power of the first terminal device on the first frequency domain resource, allowed maximum transmit power of the first terminal device on the second frequency domain resource, and allowed maximum transmit power of the first terminal device on the third frequency domain resource on the transmission occasion $i$.

Optionally, the second transmit power may be an average value of the transmit power corresponding to the first frequency domain resource and the transmit power corresponding to the second frequency domain resource.

For example, the target transmit power corresponding to the first frequency domain resource or the second frequency domain resource may be calculated according to formula (8).

$$P'_{SRS,b\_m,f\_m,c\_m}\left(i,q_{s\_m}\right) = min\begin{cases} P_{CMAX}(i)/N \\ P_{mean}(i) \end{cases} [dBm] \qquad \text{Formula (8)}$$

Definitions of parameters in formula (8) are as follows:

$P'_{SRS,b\text{-}m,f\_m,c\_m}(i,q_{s\_m})$ is the target transmit power corresponding to the first frequency domain resource or the second frequency domain resource. When m in $c\_m$ is an index of the first cell, $P'_{SRS,b\_m,f\_m,c\_m}(i,q_{s\_m})$ is the target transmit power corresponding to the first frequency domain resource. When $m$ in $c\_m$ is an index of the second cell, $P'_{SRS,b\_m,f\_m\,c\_m}(i,q_{s\_m})$ is the target transmit power corresponding to the second frequency domain resource.

$P_{mean}(i)$ is the second transmit power, and may be determined according to formula (9).

$$P_{mean}(i) = \frac{1}{N}\sum_{m=1}^{N}\left(P_{SRS,b\_m,f\_m,c\_m}\left(i,q_{s\_m}\right)\right) \qquad \text{Formula (9)}$$

Definitions of parameters in formula (9) are as follows:

m may represent an *m* th cell in N cells. When m is an index of the first cell, $P_{SRS,b\_m,f\_m,c\_m}(i,q_{s\_m})$ represents the transmit power corresponding to the first frequency domain resource, $q_{s\_m}$ is an index corresponding to a resource or a resource set of the reference signal in the first cell, and $P_{SRS,b\_m,f\_m,c\_m}(i,q_{s\_m})$ may be calculated according to formula (1) or formula (2).

When m is an index of the second cell, $P_{SRS,b\_m,f\_m,c\_m}(i,q_{s\_m})$ represents the transmit power corresponding to the second frequency domain resource, $q_{s\_m}$ is an index corresponding to a resource or a resource set of the reference signal in the second cell, and $P_{SRS,b\_m,f\_m,c\text{-}m}(i,q_{s\_m})$ may be calculated according to formula (1) or formula (2). It should be understood that the index corresponding to the resource or the resource set of the reference signal in the first cell may be the same as or different from the index corresponding to the resource or the resource set of the reference signal in the second cell. This is not specifically limited in embodiments of this application.

Optionally, in this embodiment of this application, the second transmit power is a largest value in the transmit power corresponding to the first frequency domain resource and the transmit power corresponding to the second frequency domain resource.

For example, the target transmit power corresponding to the first frequency domain resource or the second frequency domain resource may be calculated according to formula (10).

$$P'_{SRS,b\_m,f\_m,c\_m}\left(i,q_{s\_m}\right) = min\begin{cases} P_{CMAX}(i)/N \\ max\{P_1,P_2,...\} \end{cases} [dBm] \qquad \text{Formula (10)}$$

For definitions of parameters in formula (10), refer to related descriptions of formula (8) and formula (9). $max\{P_1, P_2, ... P_m\}$ represents the second transmit power, and $P_1, P_2, ... P_m$ represents transmit power corresponding to an active BWP $b\_m$ of a carrier $f\_m$ of each cell on a transmission occasion $i$, and may be calculated according to formula (1) or formula (2). It may be understood that when *m* is an index of the first cell, $P_m$ represents the transmit power corresponding to the first frequency domain resource. When *m* is an index of the second cell, $P_m$ represents the transmit power corresponding to the second frequency domain resource.

Optionally, in this embodiment of this application, the second transmit power is the transmit power corresponding to the first frequency domain resource or the second frequency domain resource; or the second transmit power is determined by the first terminal device based on the transmit power corresponding to the first frequency domain resource or the second frequency domain resource.

For example, the target transmit power corresponding to the first frequency domain resource or the second frequency domain resource may be calculated according to formula (11).

$$P'_{SRS,b\_m,f\_m,c\_m}\left(i,q_{s\_m}\right) = min\begin{cases} P_{CMAX}(i)/N \\ \alpha * P_r \end{cases} [dBm] \qquad \text{Formula (11)}$$

For definitions of parameters in formula (11), refer to related descriptions of formula (8) to formula (10). $P_r$ represents the transmit power corresponding to the first frequency domain resource or the second frequency domain resource. $\alpha$ represents a power scaling factor, and may be default or indicated. In other words, the second transmit power is determined by the first terminal device based on the transmit power corresponding to the first frequency domain resource or the second frequency domain resource and $\alpha$. If there is no indication or no default value is set, $\alpha$ is equal to 1, that is, the second transmit power is the transmit power corresponding to the first frequency domain resource or the second frequency resource.

Type 2: corresponds to a case in which a frequency domain resource is a resource corresponding to an active SL BWP of a carrier. This type may correspond to a scenario in which the second terminal device configures SL CA for the first terminal device. The first frequency domain resource is the frequency domain resource corresponding to the first carrier to which the first terminal device is connected, the second frequency domain resource is the frequency domain resource corresponding to the second carrier to which the first terminal device is connected, and the first transmit power is maximum average transmit power determined based on allowed maximum transmit power of the first terminal device.

Optionally, in this embodiment of this application, the first transmit power may be represented as $P_{CMAX}/N$, $P_{CMAX}$ is the allowed maximum transmit power of the first terminal device, and $N$ is a quantity of carriers in a plurality of carriers. It may be understood that, for a specific value of $N$, refer to related descriptions of $N$ in the foregoing type 1. Details are not described herein again.

It should be understood that, in this embodiment of this application, $P_{CMAX}$ may alternatively indicate allowed maximum transmit power of the first terminal device on the first frequency domain resource or the second frequency domain resource, or $P_{CMAX}$ may indicate a largest value in allowed maximum transmit power of the first terminal device on the first frequency domain resource and allowed maximum transmit power of the first terminal device on the second frequency domain resource. For details, refer to related descriptions of $P_{CMAX}(i)$ in type 1. Details are not described herein again.

Optionally, in this embodiment of this application, the second transmit power may be an average value of the transmit power corresponding to the first frequency domain resource and the transmit power corresponding to the second frequency domain resource.

For example, the target transmit power corresponding to the first frequency domain resource or the second frequency domain resource may be calculated according to formula (12).

$$P'_{PRS\_n}(i) = min \begin{cases} P_{CMAX}/N \\ P_{mean}(i) \end{cases} [dBm] \qquad \text{Formula (12)}$$

Definitions of parameters in formula (12) are as follows:

$P'_{PRS\_n}(i)$ is the target transmit power corresponding to the first frequency domain resource or the second frequency domain resource. When $n$ in $PRS\_n$ is an index of the first carrier, $P'_{PRS\_n}(i)$ is the target transmit power corresponding to the first frequency domain resource. When $n$ in $PRS\_n$ is an index of the second carrier, $P'_{PRS\_n}(i)$ is the target transmit power corresponding to the second frequency domain resource.

$P_{mean}(i)$ represents the second power, and may be calculated according to formula (3) to formula (7).

Optionally, in this embodiment of this application, the second transmit power is a largest value in the transmit power corresponding to the first frequency domain resource and the transmit power corresponding to the second frequency domain resource.

For example, the target transmit power corresponding to the first frequency domain resource or the second frequency domain resource may be determined according to formula (13).

$$P'_{PRS\_n}(i) = min \begin{cases} P_{CMAX}/N \\ max\{P_1, P_2, ...\} \end{cases} [dBm] \qquad \text{Formula (13)}$$

For definitions of parameters in formula (13), refer to related descriptions of formula (12). $max\{P_1, P_2, ... P_n\}$ represents the second transmit power, and $P_1, P_2, ... P_n$ represents reference signal transmit power corresponding to an active SL BWP $b\_n$ of each carrier $f\_n$ on a transmission occasion $i$, and may be calculated according to formula (3) to formula (7). It may be understood that when $n$ is an index of the first carrier, $P_n$ represents the transmit power corresponding to the first frequency domain resource. When $n$ is an index of the second carrier, $P_n$ represents the transmit power corresponding to the second frequency domain resource.

Optionally, in this embodiment of this application, the second transmit power is the transmit power corresponding to the first frequency domain resource or the second frequency domain resource; or the second transmit power is determined by the first terminal device based on the transmit power corresponding to the first frequency domain resource or the second frequency domain resource.

For example, the target transmit power corresponding to the first frequency domain resource or the second frequency domain resource may be determined according to formula (14).

$$P'_{PRS\_n}(i) = min \begin{cases} P_{CMAX}/N \\ \alpha * P_r \end{cases} [dBm] \qquad \text{Formula (14)}$$

For definitions of parameters in formula (14), refer to related descriptions of formula (12) to formula (13). Pr represents the transmit power corresponding to the first frequency domain resource or the second frequency domain resource. $\alpha$ represents a power scaling factor, and may be default or indicated. In other words, the second transmit power is determined by the first terminal device based on the transmit power corresponding to the first frequency domain resource or the second frequency domain resource and $\alpha$. If there is no indication or no default value is set, $\alpha$ is equal to 1, that is, the second transmit power is the transmit power corresponding to the first frequency domain resource or the second frequency domain resource.

It may be understood that formula (8) to formula (14) are applicable to a case in which three or more frequency domain resources are configured for the first terminal device. For example, formula (8) to formula (14) are applicable to the solution corresponding to scenario 1 or scenario 2.

For example, in scenario 1, for formulas (8) to (10) corresponding to type 1, when m in $c\_m$ is an index of the third cell, $P'_{SRS,b\_m,f\_m,c\_m}(i, g_{s\_m})$ is the target transmit power corresponding to the third frequency domain resource. For formula (9) corresponding to type 1, when m is an index of the third cell, $P_{SRS,b\_m,f\_m,c\_m}(i, q_{s\_m})$ represents the transmit power corresponding to the third frequency domain resource. For formula (10) corresponding to type 1, when $m$ is an index of the third cell, $P_m$ represents the transmit power corresponding to the third frequency domain resource. For formula (11) corresponding to type 1, $P_r$ represents transmit power corresponding to one of the first frequency domain resource, the second frequency domain resource, and the third frequency domain resource. For example, $P_r$ may be transmit power corresponding to a default frequency domain resource. The default frequency domain resource may be a frequency resource corresponding to a PCell. Alternatively, $P_r$ may be indicated by the second device. This is not specifically limited in embodiments of this application.

For another example, in scenario 1, for formulas (12) to (14) corresponding to type 2, when n in $PRS\_n$ is an index of the third carrier, $P'_{PRS\_n}(i)$ is the target transmit power corresponding to the third frequency domain resource. For formula (13) corresponding to the type, when $n$ is an index of the third carrier, $P_n$ represents the transmit power corresponding to the third frequency domain resource. For formula (14) corresponding to type 2, $P_r$ represents transmit power corresponding to one of the first frequency domain resource, the second frequency domain resource, and the third frequency domain resource. For example, $P_r$ may be transmit power corresponding to a default frequency domain resource. The default frequency domain resource may be a frequency resource corresponding to a primary carrier in SL CA. Alternatively, $P_r$ may be indicated by the second device. This is not specifically limited in embodiments of this application.

It should be understood that, for implementations of formula (8) to formula (14) in scenario 2, refer to related descriptions of scenario 1. For example, when $m$ in $c\_m$ is an index of the fourth cell, $P'_{SRS,b\_m,f\_m,c\_m}(i, q_{s\_m})$ is the target transmit power corresponding to the fourth frequency domain resource. For another example, for formula (9) corresponding to type 1, when $m$ is an index of the fourth cell, $P_{SRS,b\_m,f\_m,c\_m}(i, q_{s\_m})$ represents the transmit power corresponding to the fourth frequency domain resource. Details are not described herein again.

Case 2: This case corresponds to a case in which a frequency domain unit is a frequency domain sub-resource of a frequency domain resource.

In a possible implementation, the first frequency domain unit is the frequency domain sub-resource of the first frequency domain resource, the second frequency domain unit is the frequency domain sub-resource of the second frequency domain resource, and the ratio relationship between the target transmit power corresponding to the first frequency domain unit and the target transmit power corresponding to the second frequency domain unit includes that the target transmit power corresponding to the first frequency domain unit is the same as the target transmit power corresponding to the second frequency domain unit. That the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource (step S802b) includes:

the first terminal device determines, based on size information of the first frequency domain resource, size information of the second frequency domain resource, and the ratio relationship, the target transmit power corresponding to the first frequency domain resource and the target transmit power corresponding to the second frequency domain resource.

Optionally, the first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource includes a quantity of frequency domain sub-resources in the active BWP of the first cell, and the size information of the second frequency domain resource includes a quantity of frequency domain sub-resources in the active BWP of the second cell. In other words, in type 1, a frequency domain resource is a resource corresponding to an active BWP of a cell to which the first terminal device is connected.

Alternatively, optionally, the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource includes a quantity of frequency domain sub-resources of the first carrier, and the size information of the second frequency domain resource includes a quantity of frequency domain sub-resources of the second carrier. In other words, in type 2, a frequency domain resource is a frequency domain resource corresponding to a carrier to which the first terminal device is connected.

In another possible implementation, the first frequency domain unit is the frequency domain sub-resource of the first frequency domain resource, and the second frequency domain unit is the frequency domain sub-resource of the second frequency domain resource; and that the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource (step S802b) includes:
the first terminal device determines, based on a ratio relationship between a quantity of frequency domain sub-resources of the first frequency domain resource and a total quantity corresponding to a plurality of frequency domain sub-resources, a ratio relationship between a quantity of frequency domain sub-resources of the second frequency domain resource and the total quantity corresponding to the plurality of frequency domain sub-resources, and allocable transmit power of the first terminal device, the target transmit power corresponding to the first frequency domain resource and the target transmit power corresponding to the second frequency domain resource.

The plurality of frequency domain sub-resources include each frequency domain sub-resource in the first frequency domain resource and each frequency domain sub-resource in the second frequency domain resource. It may be understood that the plurality of frequency domain sub-resources may alternatively be all corresponding frequency domain sub-resources required for sending the reference signal on a same transmission occasion i.

In other words, the target transmit power corresponding to the first frequency domain resource or the second frequency domain resource is determined based on a ratio relationship between the quantity of frequency domain sub-resources included in the first frequency domain resource or the second frequency domain resource and a quantity of all corresponding frequency domain sub-resources required for sending the reference signal on the same transmission occasion, so that transmit power corresponding to all the frequency domain sub-resources can be consistent, thereby improving positioning accuracy by improving consistency of power for the second device to receive reference signals transmitted on all frequency domain resources.

Optionally, the allocable transmit power of the first terminal device is allowed maximum transmit power of the first terminal device. According to the foregoing related descriptions of the first transmit power, in type 1 and type 2, allowed maximum transmit power of the first terminal device is different. For details, refer to the foregoing related descriptions of the first transmit power. Details are not described herein again.

The following describes, based on type 1 and type 2, examples of formulas used to determine the target transmit power corresponding to the first frequency domain resource or the second frequency domain resource.

For type 1, the target transmit power corresponding to the first frequency domain resource or the second frequency domain resource may be determined according to formula (15) or formula (16). It may be understood that formula (15) and formula (16) are also applicable to a case in which three or more frequency domain resources are configured for the first terminal device, for example, scenario 1 or scenario 2.

$$P'_{SRS,b\_m,f\_m,c\_m}(i, q_{s\_m}) = \frac{M_{SRS,b\_m,f\_m,c\_m}(i)}{\sum M_{SRS}(i)} \cdot P_{CMAX}(i) \qquad \text{Formula (15)}$$

$$P'_{SRS,b\_m,f\_m,c\_m}(i, q_{s\_m}) = P_{CMAX}(i) + 10log_{10}\left(\frac{M_{SRS,b\_m,f\_m,c\_m}(i)}{\sum M_{SRS}(i)}\right) \quad \text{Formula (16)}$$

For definitions of the parameter $P_{CMAX}(i)$ in formula (15) and formula (16), refer to related descriptions of formula (8) to formula (11). Details are not described herein again.

$\sum M_{SRS}(i)$ is a sum of a quantity of frequency domain sub-resources in the active BWP of the first cell and a quantity of frequency domain sub-resources in the active BWP of the second cell on a transmission occasion $i$. It may be understood that, in scenario 1, $\sum M_{SRS}(i)$ is a sum of a quantity of frequency domain sub-resources in the active BWP of the first cell, a quantity of frequency domain sub-resources in the active BWP of the second cell, and a quantity of frequency domain sub-resources in the active BWP of the third cell on a transmission occasion $i$. In scenario 2, $\Sigma M_{SRS}(i)$ is a sum of a quantity of frequency domain sub-resources in the active BWP of the first cell, a quantity of frequency domain sub-resources in the active BWP of the second cell, a quantity of frequency domain sub-resources in the active BWP of the third cell, and a quantity of frequency domain sub-resources in the active BWP of the fourth cell on a transmission occasion $i$.

$M_{SRS,b\_m,f\_m,c\_m}(i)$ is a quantity of frequency domain sub-resources in an active BWP $b\_m$ of a carrier $f\_m$ of a cell $c\_m$ on a transmission occasion $i$. In other words, when m is an index of the first cell, $P'_{SRS,b\_m,f\_m,c\_m}(i, q_{s\_m})$ is the target transmit power corresponding to the first frequency domain resource, $q_{s\_m}$ is an index corresponding to a resource or a resource set of the reference signal in the first cell, and $M_{SRS,b\_m,f\_m,c\_m}(i)$ is a quantity of frequency domain sub-resources in an active BWP $b\_m$ of a carrier $f\_m$ of the first cell $c\_m$ on a transmission occasion $i$.

When m in $c\_m$ is an index of the second cell, $P'_{SRS,b\_m,f\_m,c-m}(i, q_{s\_m})$ is the target transmit power corresponding to the second frequency domain resource, $q_{s\_m}$ is an index corresponding to a resource or a resource set of the reference signal in the second cell, and $M_{SRS,b\_m,f\_m,c\_m}(i)$ is a quantity of frequency domain sub-resources in an active BWP $b\_m$ of a carrier $f\_m$ of the second cell $c\_m$ on a transmission occasion $i$. It may be understood that, in scenario 1, when m in $c\_m$ is an index of the third cell, $P'_{SRS,b\_m,f\_m,c\_m}(i, q_{s\_m})$ is the target transmit power corresponding to the third frequency domain resource, $q_{s\_m}$ is an index corresponding to a resource or a resource set of the reference signal in the third cell, $M_{SRS,b\_m,f\_m,c\_m}(i)$ is a quantity of frequency domain sub-resources in an active BWP $b\_m$ of a carrier $f\_m$ of the third cell $c\_m$ on a transmission occasion $i$. In scenario 2, when m in $c\_m$ is an index of the fourth cell, $P'_{SRS,b\_m,f\_m,c\_m}(i, q_{s\_m})$ is the target transmit power corresponding to the fourth frequency domain resource, $q_{s\_m}$ is an index corresponding to a resource or a resource set of the reference signal in the fourth cell, and $M_{SRS,b\_m,f\_m,c\_m}(i)$ is a quantity of frequency domain sub-resources in an active BWP $b\_m$ of a carrier $f\_m$ of the fourth cell $c\_m$ on a transmission occasion $i$.

It should be understood that $P_{CMAX}(i)$ and $P'_{SRS,b\_m,f\_m,c\_m}(i, q_{s\_m})$ in formula (15) are linear values, and a unit may be watt (W), milliwatt (mW), or the like. A corresponding power value in formula (16) is a logarithmic value, and a unit may be dBm, dBW, or the like.

It may be understood that formula (15) and formula (16) may be alternatively transformed into other forms, for example, the following formula (17) to formula (21), which are separately described below.

For formula (15), formula (15) may be transformed into formula (17).

$$P'_{SRS,b\_m,f\_m,c\_m}\left(i, q_{s\_m}\right) = \beta_{SRS,b\_m,f\_m,c\_m} \cdot P_{SRS,b\_m,f\_m,c\_m}\left(i, q_{s\_m}\right) \quad \text{Formula (17)}$$

In formula (17), $\beta_{SRS,b\_m,f\_m,c\_m}$ may represent a power adjustment coefficient corresponding to the first frequency domain resource or the second frequency domain resource when CA or DC is configured for the first terminal device. $P_{SRS,b\_m,f\_m,c\_m}(i, q_{s\_m})$ may represent the transmit power corresponding to the first frequency domain resource or the second frequency domain resource, and the transmit power may be determined according to formula (1) or formula (2). Similar to parameter definitions in formula (15) and formula (16), when m in $c\_m$ is an index of the first cell, $P'_{SRS,b\_m,f\_m,c\_m}(i, q_{s\_m})$ is the target transmit power corresponding to the first frequency domain resource, $\beta_{SRS,b\_m,f\_m,c\_m}$ is a power adjustment coefficient corresponding to the first frequency domain resource, and $P_{SRS,b\_m,f\_m,c\_m}(i, q_{s\_m})$ is the transmit power corresponding to the first frequency domain resource. When m in $c\_m$ is an index of the second cell, $P'_{SRS,b\_m,f\_m,c\_m}(i, q_{s\_m})$ is the target transmit power corresponding to the second frequency domain resource, $\beta_{SRS,b\_m,f\_m,c\_m}$ is a power adjustment coefficient corresponding to the second frequency domain resource, and $P_{SRS,b\_m,f\_m,c\_m}(i, q_{s\_m})$ is the transmit power corresponding to the second frequency domain resource.

In other words, an objective of formula (17) is to further adjust transmit power corresponding to an existing power control solution, to obtain the target transmit power corresponding to the first frequency domain resource or the second frequency domain resource.

In a possible implementation, $\beta_{SRS,b\_m,f\_m,c\_m}$ may be determined according to formula (18) or formula (19).

$$\beta_{SRS,b\_m,f\_m,c\_m} = \frac{P_{CMAX}(i)}{P_{SRS,b\_m,f\_m,c\_m}(i,q_{s\_m})} \cdot \frac{M_{SRS,b\_m,f\_m,c\_m}(i)}{\sum M_{SRS}(i)} \qquad \text{Formula (18)}$$

$$\beta_{SRS,b\_m,f\_m,c\_m} = \frac{1}{P_{SRS,b\_m,f\_m,c\_m}(i,q_{s\_m})} \cdot \left(P_{CMAX}(i) + 10\log_{10}\left(\frac{M_{SRS,b\_m,f\_m,c\_m}(i)}{\sum M_{SRS}(i)}\right)\right) \text{Formula (19)}$$

For meanings of parameters in formula (17) to formula (19), refer to related descriptions of formula (15) and formula (16). Details are not described herein again.

Further, a corresponding power value in formula (17) is a linear value, and a unit may be W, mW, or the like. A corresponding power value in formula (18) may be a linear value, $P_{CMAX}(i)$ in formula (19) may be a logarithmic value, and $P_{SRS,b\_m,f\_m,c\_m}(i, q_{s\_m})$ may be a linear value.

For formula (16), formula (16) may be transformed into formula (20).

$$P'_{SRS,b\_m,f\_m,c\_m}\left(i, q_{s\_m}\right) = \beta_{SRS,b\_m,f\_m,c\_m} + P_{SRS,b\_m,f\_m,c\_m}\left(i, q_{s\_m}\right) \quad \text{Formula (20)}$$

A corresponding power value in formula (20) is a logarithmic value, and a unit may be dBm or dBW. $\beta_{SRS,b\_m,f\_m,c\_m}$ in formula (20) may be determined according to the foregoing formula (19) or the following formula (21).

$$P_{CMAX}(i) + 10log_{10}\left(\frac{M_{SRS,b\_m,f\_m,c\_m}(i)}{\sum M_{SRS}(i)}\right) - P_{SRS,b\_m,f\_m,c\_m}\left(i, q_{s\_m}\right) \quad \text{Formula (21)}$$

For meanings of parameters in formula (20) and formula (21), refer to related descriptions of formula (17) to formula (19). Details are not described herein again.

For type 2, the target transmit power corresponding to the first frequency domain resource or the second frequency domain resource may be determined according to formula (22) or formula (23). It may be understood that formula (17) or formula (18) is also applicable to a case in which three or more frequency domain resources are configured for the first terminal device, for example, scenario 1 or scenario 2.

$$P'_{PRS\_n}(i) = \frac{M_{PRS\_n}(i)}{\sum M_{PRS}(i)} \cdot P_{CMAX} \quad \text{Formula (22)}$$

$$P'_{PRS\_n}(i) = P_{CMAX} + 10log_{10}\left(M_{PRS\_n}(i)/\sum M_{PRS}(i)\right) \quad \text{Formula (23)}$$

For definitions of the parameter $P_{CMAX}$ in formula (22) and formula (23), refer to related descriptions of formula (12) to formula (14). Details are not described herein again.

$\sum M_{PRS}(i)$ is a sum of a quantity of frequency domain sub-resources of the first carrier and a quantity of frequency domain sub-resources of the second carrier on a transmission occasion $i$. It may be understood that, in scenario 1, $\sum M_{PRS}(i)$ is a sum of a quantity of frequency domain sub-resources of the first carrier, a quantity of frequency domain sub-resources of the second carrier, and a quantity of frequency domain sub-resources of the third carrier on a transmission occasion $i$. In scenario 2, $\sum M_{PRS}(i)$ is a sum of a quantity of frequency domain sub-resources of the first carrier, a quantity of frequency domain sub-resources of the second carrier, a quantity of frequency domain sub-resources of the third carrier, and a quantity of frequency domain sub-resources of the fourth carrier on a transmission occasion i.

$M_{PRS\_n}(i)$ is a quantity of frequency domain sub-resources of a carrier $f\_n$ on a transmission occasion $i$. In other words, when $n$ in PRS_n is an index of the first carrier, $P'_{PRS\_n}(i)$ is the target transmit power corresponding to the first frequency domain resource, and $M_{PRS\_n}(i)$ is a quantity of frequency domain sub-resources of the first carrier $f\_n$ on a transmission occasion $i$; or when n in PRS_n is an index of the second carrier, $M_{PRS\_n}(i)$ is a quantity of frequency domain sub-resources of the second carrier $f\_n$ on a transmission occasion $i$.

When n in PRS_n is an index of the second carrier, $P'_{PRS\_n}(i)$ is the target transmit power corresponding to the second frequency domain resource, and $M_{PRS\_n}(i)$ is a quantity of frequency domain sub-resources of the second carrier $f\_n$ on a transmission occasion $i$; or when n in PRS_n is an index of the second carrier, $M_{PRS\_n}(i)$ is a quantity of frequency domain sub-resources of the second carrier $f\_n$ on a transmission occasion $i$.

It may be understood that, in scenario 1, when n in PRS_n is an index of the third carrier, $M_{PRS\_n}(i)$ is a quantity of frequency domain sub-resources of the third carrier $f\_n$ on a transmission occasion $i$. In scenario 2, when $n$ in PRS_n is an index of the fourth carrier, $M_{PRS\_n}(i)$ is a quantity of frequency domain sub-resources of the fourth carrier $f\_n$ on a transmission occasion $i$.

It should be understood that, a corresponding power value in formula (22) is a linear value, and a unit may be W, mW, or the like. A corresponding power value in formula (23) is a logarithmic value, and a unit may be dBm, dBW, or the like.

It may be understood that formula (22) and formula (23) may be alternatively transformed into other forms, for example, the following formula (24) to formula (28), which are separately described below.

For formula (22), formula (22) may be transformed into formula (24).

$$P'_{PRS\_n}(i) = \beta_{PRS\_n} + P_{PRS\_n}(i) \quad \text{Formula (24)}$$

In formula (24), $\beta_{PRS\_n}$ may represent a power adjustment coefficient corresponding to the first frequency domain resource or the second frequency domain resource when SL CA is configured for the first terminal device. $\beta_{PRS\_n}$ may represent the transmit power corresponding to the first frequency domain resource or the second frequency domain resource, and the transmit power may be determined according to formula (3) to formula (7). Similar to parameter definitions in formula (22) and formula (23), when n in *PRS_n* is an index of the first carrier, $P'_{PRS\_n}(i)$ is the target transmit power corresponding to the first frequency domain resource, $\beta_{PRS\_n}$ is a power adjustment coefficient corresponding to the first frequency domain resource, and $P_{PRS\_n}(i)$ is the transmit power corresponding to the first frequency domain resource. When n in *PRS_n* is an index of the second carrier, $P'_{PRS\_n}(i)$ is the target transmit power corresponding to the second frequency domain resource, $\beta_{PRS\_n}$ is a power adjustment coefficient corresponding to the second frequency domain resource, and $P_{PRS\_n}(i)$ is the transmit power corresponding to the second frequency domain resource.

In other words, an objective of formula (23) is to further adjust transmit power corresponding to an existing power control solution, to obtain the target transmit power corresponding to the first frequency domain resource or the second frequency domain resource.

In a possible implementation, $\beta_{PRS\_n}$ may be determined according to formula (25) or formula (26).

$$\beta_{PRS\_n} = \frac{P_{CMAX}}{P_{PRS\_n}(i)} \cdot \frac{M_{PRS\_n}(i)}{\sum M_{PRS}(i)} \qquad \text{Formula (25)}$$

$$\beta_{PRS\_n} = \frac{1}{P_{PRS\_n}(i)} \cdot \left( P_{CMAX} + 10 log_{10} \left( \frac{M_{PRS\_n}(i)}{\sum M_{PRS}(i)} \right) \right) \qquad \text{Formula (26)}$$

For meanings of parameters in formula (24) to formula (26), refer to related descriptions of formula (22) and formula (23). Details are not described herein again.

Further, a corresponding power value in formula (24) is a linear value, and a unit may be W, mW, or the like. A corresponding power value in formula (25) may be a linear value, $P_{CMAX}(i)$ in formula (26) may be a logarithmic value, and $P_{PRS\_n}(i)$ may be a linear value.

For formula (23), formula (23) may be transformed into formula (27).

$$P'_{PRS\_n}(i) = \beta_{PRS\_n} + P_{PRS\_n}(i) \qquad \text{Formula (27)}$$

A corresponding power value in formula (27) is a logarithmic value, and a unit may be dBm or dBW. $\beta_{PRS\_n}$ in formula (27) may be determined according to the foregoing formula (26) or the following formula (28).

$$P_{CMAX} + 10 log_{10} \left( \frac{M_{PRS\_n}(i)}{\sum M_{PRS}(i)} \right) - P_{PRS\_n}(i) \qquad \text{Formula (28)}$$

For meanings of parameters in formula (27) and formula (28), refer to related descriptions of formula (24) to formula (26). Details are not described herein again.

In a possible implementation, the first frequency domain unit is the frequency domain sub-resource of the first frequency domain resource, the second frequency domain unit is the frequency domain sub-resource of the second frequency domain resource, and the ratio relationship between the target transmit power corresponding to the first frequency domain unit and the target transmit power corresponding to the second frequency domain unit includes that the target transmit power corresponding to the first frequency domain unit is the same as the target transmit power corresponding to the second frequency domain unit. That the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource (step S802b) includes:

the first terminal device determines, based on size information of the first frequency domain resource, size information of the second frequency domain resource, transmit power corresponding to the first frequency domain resource and/or the second frequency domain resource, and the ratio relationship, the target transmit power corresponding to the first frequency domain resource and the target transmit power corresponding to the second frequency domain resource.

Optionally, the first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource includes a quantity of frequency domain sub-resources in the active BWP of the first cell, and the size information of the second frequency domain resource includes a quantity of frequency domain sub-resources in the active BWP of the second cell. In other words, in type 1, a frequency domain resource is a resource corresponding to an active BWP of a cell to which the first terminal device is connected.

Alternatively, optionally, the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource includes a quantity of frequency domain sub-resources of the first carrier, and the size information of the second frequency domain resource includes a quantity of frequency domain sub-resources of the second carrier. In other words, in type 2, a frequency domain resource is a frequency domain resource corresponding to a carrier to which the first terminal device is connected.

In another possible implementation, the first frequency domain unit is the frequency domain sub-resource of the first frequency domain resource, and the second frequency domain unit is the frequency domain sub-resource of the second frequency domain resource; and that the first terminal device determines, based on the information corresponding to the first frequency domain resource and/or the second frequency domain resource and the ratio relationship between the target transmit power corresponding to the first frequency domain unit and the target transmit power corresponding to the second frequency domain unit, the target transmit power corresponding to the first frequency domain resource and the target transmit power corresponding to the second frequency domain resource (step S802b) includes:

the first terminal device determines, based on a ratio relationship between transmit power corresponding to the first frequency domain resource and total transmit power corresponding to a plurality of frequency domain resources, a ratio relationship between transmit power of the second frequency domain resource and the total transmit power corresponding to the plurality of frequency domain resources, and allocable transmit power of the first terminal device, the target transmit power corresponding to the first frequency domain resource and the target transmit power corresponding to the second frequency domain resource.

The plurality of frequency domain resources include the first frequency domain resource and the second frequency domain resource.

Further, in type 1, the transmit power corresponding to the first frequency domain resource or the second frequency domain resource may be determined according to formula (1) or formula (2). In type 2, the transmit power corresponding to the first frequency domain resource or the second frequency domain resource may be determined according to formula (3) to formula (7).

Optionally, the allocable transmit power of the first terminal device is allowed maximum transmit power of the first terminal device. According to the foregoing related descriptions of the first transmit power, in type 1 and type 2, allowed maximum transmit power of the first terminal device is different. For details, refer to the foregoing related descriptions of the first transmit power. Details are not described herein again.

In other words, the target transmit power corresponding to the first frequency domain resource or the second frequency domain resource is determined based on a ratio relationship between transmit power corresponding to each frequency domain resource and a sum of transmit power corresponding to all frequency domain resources in an existing power control solution.

For type 1, the target transmit power corresponding to the first frequency domain resource or the second frequency domain resource may be determined according to formula (29) or formula (30). It may be understood that formula (29) and formula (30) are also applicable to a case in which three or more frequency domain resources are configured for the first terminal device, for example, scenario 1 or scenario 2.

$$P'_{SRS, b\_m, f\_m, c\_m}(i, q_{s\_m}) = \frac{P_{SRS, b\_m, f\_m, c\_m}(i, q_{s\_m})}{\sum P_{SRS}(i)} \cdot P_{CMAX}(i) \qquad \text{Formula (29)}$$

$P'_{SRS, b\_m, f\_m, c\_m}(i, q_{s\_m}) = P_{SRS, b\_m, f\_m, c\_m}(i, q_{s\_m}) - \sum P_{SRS}(i) + P_{CMAX}(i)$ Formula (30)

For $P_{CMAX}(i)$ in formula (29) and formula (30), refer to related descriptions of formula (8) to formula (11). For $P_{SRS, b\_m, f\_m, c\_m}(i, q_{s\_m})$, refer to related descriptions of formula (17) to formula (21). Details are not described herein again.

$\sum P_{SRS}(i)$ is a sum of transmit power corresponding to the active BWP of the first cell and transmit power corresponding to the active BWP of the second cell on a transmission occasion i. It may be understood that, in scenario 1, $\sum P_{SRS}(i)$ is a sum of transmit power corresponding to the active BWP of the first cell, transmit power corresponding to the active BWP of the second cell, and transmit power corresponding to the active BWP of the third cell on a transmission occasion *i*.

It may be understood that a corresponding power value in formula (29) is a linear value, and a unit may be W, mW, or the like. A corresponding power value in formula (30) is a logarithmic value, and a unit may be dBm, dBW, or the like.

For type 2, the target transmit power corresponding to the first frequency domain resource or the second frequency domain resource may be determined according to formula (31) or formula (32). It may be understood that formula (31) and formula (32) are also applicable to a case in which three or more frequency domain resources are configured for the first terminal device, for example, scenario 1 or scenario 2.

$$P'_{PRS\_n}(i) = \frac{P_{PRS\_n}(i)}{\sum P_{PRS}(i)} \cdot P_{CMAX} \qquad \text{Formula (31)}$$

$$P'_{PRS\_n}(i) = P_{PRS\_n}(i) - \sum P_{PRS}(i) + P_{CMAX} \qquad \text{Formula (32)}$$

For $P_{CMAX}$ in formula (31) and formula (32), refer to related descriptions of formula (12) to formula (14). For $P_{PRS\_n}(i)$, refer to related descriptions of formula (24) to formula (28). Details are not described herein again.

$\Sigma P_{PRS}$ (i) is a sum of transmit power corresponding to the first carrier and transmit power corresponding to the second carrier on a transmission occasion i. It may be understood that, in scenario 1, $\Sigma P_{PRS}$ (i) is a sum of transmit power corresponding to the first carrier, transmit power corresponding to the second carrier, and transmit power corresponding to the third carrier on a transmission occasion i.

It should be understood that the foregoing describes the target transmit power corresponding to the first frequency domain resource and the second frequency domain resource when the allocable transmit power of the first terminal device is the allowed maximum transmit power of the first terminal device. However, in some cases, power reduction (power reduction) may exist on the first terminal device. For example, when the first terminal device also needs to send another signal or channel on a transmission occasion for sending the reference signal (for example, a network schedules the first terminal device to send a PUSCH at the same time), the allocable transmit power of the first terminal device decreases. For another example, when a network indicates the first terminal device to perform additional power reduction, the allocable transmit power of the first terminal device decreases.

The following describes target transmit power corresponding to the first frequency domain resource and the second frequency domain resource when power reduction exists on the first terminal device.

In a possible implementation, the allocable transmit power of the first terminal device is remaining transmit power determined based on transmit power allocated to at least one signal or channel whose priority is higher than that of the reference signal.

In type 1, the at least one signal or channel whose priority is higher than that of the reference signal may include a physical random access channel (physical random access channel, PRACH), a channel for transmitting channel state information (channel state information, CSI), a PUSCH for transmitting hybrid automatic repeat request (hybrid automatic repeat request, HARQ) acknowledgement (acknowledgement, ACK) information, or the like. For details, refer to related descriptions in TS 38.213. Details are not described herein again.

In type 2, the at least one signal or channel whose priority is higher than that of the reference signal may include a PSCCH for transmitting CSI, a PSSCH, a PSFCH, or the like. Alternatively, the at least one signal or channel whose priority is higher than that of the reference signal may be a signal or a channel agreed on in an SL-related protocol; or the at least one signal or channel whose priority is higher than that of the reference signal may be configured by the second device for the first terminal device. This is not specifically limited in embodiments of this application.

Optionally, the allocable transmit power of the first terminal device may be remaining transmit power determined based on transmit power allocated to at least one signal or channel whose priority is higher than that of the reference signal and the allowed maximum transmit power of the first terminal device.

For example, in type 1, the allocable transmit power of the first terminal device may be determined according to formula (33) or formula (34).

$$\Delta P(i) = P_{CMAX}(i) - \sum P_{others} \qquad \text{Formula (33)}$$

$$\Delta P(i) = 10lg\left(e^{\frac{P_{CMAX}(i)}{10}} - e^{\frac{\sum P_{others}}{10}}\right) \qquad \text{Formula (34)}$$

$\Delta P(i)$ represents the allocable transmit power of the first terminal device. For $P_{CMAX}$ (i), refer to related descriptions in type 1. Details are not described herein again. $\Sigma P_{others}$ represents a sum of power allocated by the first terminal device on a transmission occasion i to the at least one signal or channel whose priority is higher than that of the reference signal.

It may be understood that a corresponding power value in formula (33) is a linear value, and a unit may be W, mW, or the like. A corresponding power value in formula (34) is a logarithmic value, and a unit may be dBm, dBW, or the like.

For example, in type 2, the allocable transmit power of the first terminal device may be determined according to formula (35) or formula (36).

$$\Delta P = P_{CMAX} - \sum P_{others} \qquad \text{Formula (35)}$$

$$\Delta P = 10lg\left(e^{\frac{P_{CMAX}}{10}} - e^{\frac{\sum P_{others}}{10}}\right) \qquad \text{Formula (36)}$$

$\Delta P$ represents the allocable transmit power of the first terminal device. For $P_{CMAX}$, refer to related descriptions in type 2. Details are not described herein again. $\sum P_{others}$ represents a sum of power allocated by the first terminal device to the at least one signal or channel whose priority is higher than that of the reference signal in an SL CA scenario.

It may be understood that a corresponding power value in formula (35) is a linear value, and a unit may be W, mW, or the like. A corresponding power value in formula (36) is a logarithmic value, and a unit may be dBm, dBW, or the like.

In another possible implementation, the allocable transmit power of the first terminal device is remaining transmit power determined based on a power offset. The power offset may be agreed on in a protocol, or may be negotiated by the first terminal device and the second device in advance, or may be preconfigured by the first terminal device. This is not specifically limited in embodiments of this application.

Optionally, the allocable transmit power of the first terminal device may be remaining transmit power determined based on a power offset and allowed maximum transmit power of the first terminal device. For example, the allocable transmit power of the first terminal device may be a difference between or a product of the allowed maximum transmit power of the first terminal device and the power offset.

Alternatively, optionally, the allocable transmit power of the first terminal device may be remaining transmit power determined based on a power offset, allowed maximum transmit power of the first terminal device, and transmit power allocated to at least one signal or channel whose priority is higher than that of the reference signal.

For example, the allocable transmit power of the first terminal device may be a largest value in a first difference and a second difference. The first difference is a difference between the allowed maximum transmit power of the first terminal device and the power offset, and the second difference is a difference between the allowed maximum transmit power of the first terminal device and the transmit power allocated to the at least one signal or channel whose priority is higher than that of the reference signal.

It should be understood that the power offset may also be replaced with a "power offset value", a "power adjustment value", or the like. This is not specifically limited in embodiments of this application.

It may be understood that a sum of the target transmit power corresponding to the first frequency domain resource and the second frequency domain resource should not exceed the allocable transmit power of the first terminal device.

Further, based on the foregoing remaining transmit power, the target transmit power corresponding to the first frequency domain resource and the second frequency domain resource may be determined in manner A and manner B. The following separately describes manner A and manner B.

Manner A: In manner A, target transmit power corresponding to each frequency domain resource under the remaining transmit power may be determined by using the calculation manners provided in case 1 and case 2. The following separately describes target transmit power corresponding to each frequency domain resource in case 1 and case 2.

For case 1: In manner A, a difference from the foregoing case 1 lies in that the first transmit power is different.

In a possible implementation, the first transmit power is remaining average transmit power determined based on transmit power allocated to at least one signal or channel whose priority is higher than that of the reference signal and the allowed maximum transmit power of the first terminal device.

For example, in type 1, the first transmit power may be represented as $\Delta P(i)/N$, $\Delta P(i)$ is the remaining transmit power in formula (33) or formula (34), and $N$ is a quantity of cells to which the first terminal device is connected on a transmission occasion $i$. It may be understood that when only the first frequency domain resource and the second frequency domain resource are configured for the first terminal device, $N$ is equal to 2.

For example, in type 2, the first transmit power may be represented as $\Delta P/N$, $\Delta P$ is the remaining transmit power in formula (35) or formula (36), and $N$ is a quantity of cells to which the first terminal device is connected on a transmission occasion $i$. It may be understood that when only the first frequency domain resource and the second frequency domain resource are configured for the first terminal device, $N$ is equal to 2.

In another possible implementation, the first transmit power is remaining average transmit power determined based on a power offset and the allowed maximum transmit power of the first terminal device. For example, the first transmit power may be a difference between the power offset and the allowed maximum transmit power of the first terminal device.

With reference to formula (8) to formula (14) in the foregoing case 1, the following describes examples of manners of calculating target transmit power corresponding to manner A in type 1 and type 2.

For type 1:

For example, based on the first transmit power and with reference to formula (8) and formula (9) in the foregoing case 1, the target transmit power corresponding to the first frequency domain resource or the second frequency domain resource may be determined according to formula (37).

$$P'_{SRS,b\_m,f\_m,c\_m}(i, q_{s\_m}) = min \begin{Bmatrix} \Delta P(i)/N \\ P_{mean}(i) \end{Bmatrix} [dBm] \qquad \text{Formula (37)}$$

For definitions of parameters in formula (37), refer to related descriptions of formula (8) and formula (9). Details are not described herein again.

For another example, based on the first transmit power and with reference to formula (10), the target transmit power corresponding to the first frequency domain resource or the second frequency domain resource may be determined according to formula (38).

$$P'_{SRS,b\_m,f\_m,c\_m}(i, q_{s\_m}) = min \begin{Bmatrix} \Delta P(i)/N \\ max\{P_1, P_2, ...\} \end{Bmatrix} [dBm] \qquad \text{Formula (38)}$$

For definitions of parameters in formula (38), refer to related descriptions of formula (10). Details are not described herein again.

For another example, based on the first transmit power and with reference to formula (11), the target transmit power corresponding to the first frequency domain resource or the second frequency domain resource may be determined according to formula (39).

$$P'_{SRS,b\_m,f\_m,c\_m}(i, q_{s\_m}) = min \begin{Bmatrix} \Delta P(i)/N \\ \alpha * P_r \end{Bmatrix} [dBm] \qquad \text{Formula (39)}$$

For definitions of parameters in formula (39), refer to related descriptions of formula (11). Details are not described herein again.

For type 2:

For example, based on the first transmit power and with reference to formula (12) in the foregoing case 1, the target transmit power corresponding to the first frequency domain resource or the second frequency domain resource may be determined according to formula (40).

$$P'_{PRS\_n}(i) = min \begin{Bmatrix} \Delta P/N \\ P_{mean}(i) \end{Bmatrix} [dBm] \qquad \text{Formula (40)}$$

For definitions of parameters in formula (40), refer to related descriptions of formula (12).

Details are not described herein again.

For another example, based on the first transmit power and with reference to formula (13), the target transmit power corresponding to the first frequency domain resource or the second frequency domain resource may be determined according to formula (41).

$$P'_{PRS\_n}(i) = min \begin{Bmatrix} \Delta P/N \\ max\{P_1, P_2, ...\} \end{Bmatrix} [dBm] \qquad \text{Formula (41)}$$

For definitions of parameters in formula (41), refer to related descriptions of formula (13). Details are not described herein again.

For another example, based on the first transmit power and with reference to formula (14), the target transmit power corresponding to the first frequency domain resource or the second frequency domain resource may be determined according to formula (42).

$$P'_{PRS\_n}(i) = min \begin{cases} \Delta P/N \\ \alpha * P_r \end{cases} [dBm] \qquad \text{Formula (42)}$$

For definitions of parameters in formula (42), refer to related descriptions of formula (14). Details are not described herein again.

For case 2: In manner A, a difference from the foregoing case 2 lies in that the allocable transmit power of the first terminal device is changed from $P_{CMAX}(i)$ or $P_{CMAX}$ to the remaining transmit power.

With reference to formula (15) to formula (32) in the foregoing case 2, the following describes examples of manners of calculating target transmit power corresponding to manner A.

For example, based on the remaining transmit power and with reference to formula (15) and formula (16) in the foregoing case 2, the target transmit power corresponding to the first frequency domain resource or the second frequency domain resource may be determined according to formula (43) or formula (44).

$$P'_{SRS, b\_m, f\_m, c\_m}(i, q_{s\_m}) = \frac{M_{SRS, b\_m, f\_m, c\_m}(i)}{\sum M_{SRS}(i)} \cdot \Delta P(i) \qquad \text{Formula (43)}$$

$$P'_{SRS, b\_m, f\_m, c\_m}(i, q_{s\_m}) = \Delta P(i) + 10log_{10}\left(\frac{M_{SRS, b\_m, f\_m, c\_m}(i)}{\sum M_{SRS}(i)}\right) \quad \text{Formula (44)}$$

$\Delta P(i)$ in formula (43) and formula (44) may be the foregoing remaining transmit power, for example, $\Delta P(i)$ in formula (33) or formula (34). This is uniformly described herein, and details are not described below again. For definitions of parameters other than $\Delta P(i)$, refer to related descriptions of formula (15) and formula (16). Details are not described herein again.

Further, with reference to formula (17) to formula (21), formula (43) and formula (44) may be further transformed into other forms, which are separately described below.

For formula (43), formula (43) may be transformed into formula (17).

$\beta_{SRS, b\_m, f\_m, c\_m}$ in formula (17) may be determined according to formula (46) or formula (47).

$$\beta_{SRS, b\_m, f\_m, c\_m} = \frac{\Delta P(i)}{P_{SRS, b\_m, f\_m, c\_m}(i, q_{s\_m})} \cdot \frac{M_{SRS, b\_m, f\_m, c\_m}(i)}{\sum M_{SRS}(i)} \qquad \text{Formula (45)}$$

$$\beta_{SRS, b\_m, f\_m, c\_m} = \frac{1}{P_{SRS, b\_m, f\_m, c\_m}(i, q_{s\_m})} \cdot \left(\Delta P(i) + 10log_{10}\left(\frac{M_{SRS, b\_m, f\_m, c\_m}(i)}{\sum M_{SRS}(i)}\right)\right) \quad \text{Formula (46)}$$

For meanings of parameters in formula (45) and formula (46), refer to related descriptions of formula (18) and formula (19). Details are not described herein again.

For formula (44), formula (43) may be transformed into formula (20).

$\beta_{SRS, b\_m, f\_m, c\_m}$ in formula (20) may be determined according to the foregoing formula (46) or the following formula (47).

$$\Delta P(i) + 10log_{10}\left(\frac{M_{SRS, b\_m, f\_m, c\_m}(i)}{\sum M_{SRS}(i)}\right) - P_{SRS, b\_m, f\_m, c\_m}(i, q_{s\_m}) \quad \text{Formula (47)}$$

For meanings of parameters in formula (47), refer to related descriptions of formula (21). Details are not described herein again.

For another example, with reference to formula (22) and formula (23) in the foregoing case 2, the target transmit power corresponding to the first frequency domain resource or the second frequency domain resource may be determined according to formula (48) or formula (49).

$$P'_{PRS\_n}(i) = \frac{M_{PRS\_n}(i)}{\sum M_{PRS}(i)} \cdot \Delta P \qquad \text{Formula (48)}$$

$$P'_{PRS\_n}(i) = \Delta P + 10log_{10}\big(M_{PRS\_n}(i)/\sum M_{PRS}(i)\big) \qquad \text{Formula (49)}$$

$\Delta P$ in formula (48) and formula (49) may be the foregoing remaining transmit power, for example, $\Delta P$ in formula (35) or formula (36). This is uniformly described herein, and details are not described below again. For definitions of parameters other than $\Delta P$, refer to related descriptions of formula (22) and formula (23). Details are not described herein again.

Further, with reference to formula (24) to formula (28), formula (48) and formula (49) may be further transformed into other forms, which are separately described below.

For formula (48), formula (43) may be transformed into formula (24).

$\beta_{PRS\_n}$ in formula (24) may be determined according to formula (50) or formula (51).

$$\beta_{PRS\_n} = \frac{\Delta P}{P_{PRS\_n}(i)} \cdot \frac{M_{PRS\_n}(i)}{\sum M_{PRS}(i)} \qquad \text{Formula (50)}$$

$$\beta_{PRS\_n} = \frac{1}{P_{PRS\_n}(i)} \cdot \left( \Delta P + 10log_{10}\left( \frac{M_{PRS\_n}(i)}{\sum M_{PRS}(i)} \right) \right) \qquad \text{Formula (51)}$$

For meanings of parameters in formula (40) and formula (51), refer to related descriptions of formula (25) and formula (26). Details are not described herein again.

For formula (49), formula (49) may be transformed into formula (27).

$\beta_{PRS\_n}$ in formula (27) may be determined according to the foregoing formula (51) or the following formula (52).

$$\Delta P + 10log_{10}\left( \frac{M_{PRS\_n}(i)}{\sum M_{PRS}(i)} \right) - P_{PRS\_n}(i) \qquad \text{Formula (52)}$$

For meanings of parameters in formula (52), refer to related descriptions of formula (28). Details are not described herein again.

For another example, with reference to formula (29) and formula (30) in the foregoing case 2, the target transmit power corresponding to the first frequency domain resource or the second frequency domain resource may be determined according to formula (53) or formula (54).

$$P'_{SRS,b\_m,f\_m,c\_m}(i, q_{s\_m}) = \frac{P_{SRS,b\_m,f\_m,c\_m}(i,q_{s\_m})}{\sum P_{SRS}(i)} \cdot \Delta P(i) \qquad \text{Formula (53)}$$

$$P'_{SRS,b\_m,f\_m,c\_m}(i, q_{s\_m}) = P_{SRS,b\_m,f\_m,c\_m}(i, q_{s\_m}) - \sum P_{SRS}(i) + \Delta P(i) \qquad \text{Formula (54)}$$

For definitions of parameters in formula (53) and formula (54), refer to related descriptions of formula (29) and formula (30). Details are not described herein again.

For another example, with reference to formula (31) and formula (32) in the foregoing case 2, the target transmit power corresponding to the first frequency domain resource or the second frequency domain resource may be determined according to formula (55) or formula (56).

$$P'_{PRS\_n}(i) = \frac{P_{PRS\_n}(i)}{\sum P_{PRS}(i)} \cdot \Delta P \qquad \text{Formula (55)}$$

$$P'_{PRS\_n}(i) = P_{PRS\_n}(i) - \sum P_{PRS}(i) + \Delta P \qquad \text{Formula (56)}$$

For definitions of parameters in formula (55) and formula (56), refer to related descriptions of formula (31) and formula (32). Details are not described herein again.

Manner B: In manner B, target transmit power corresponding to each frequency domain resource under the remaining transmit power may be determined based on a configuration status of an open-loop power control parameter corresponding to each frequency domain resource of the first terminal device. The configuration status of the open-loop power control parameter corresponding to each frequency domain resource of the first terminal device may include case A and case B. The following separately describes, based on case A and case B, manners of calculating target transmit power corresponding to each frequency domain resource.

For case A: In case A, an open-loop power control parameter corresponding to only one of a plurality of frequency domain resources is configured for the first terminal device, and then the target transmit power corresponding to each frequency domain resource may be calculated based on the open-loop power control parameter corresponding to the frequency domain resource.

In a possible implementation, the first frequency domain unit is a frequency domain sub-resource of the first frequency domain resource, and the second frequency domain unit is a frequency domain sub-resource of the second frequency domain resource; and that the first terminal device determines, based on the information corresponding to the first frequency domain resource and/or the second frequency domain resource and the ratio relationship, the target transmit power corresponding to the first frequency domain resource and the target transmit power corresponding to the second frequency domain resource (step S802b) includes:

when an open-loop power control parameter corresponding to the first frequency domain resource is configured for the first terminal device, and an open-loop power control parameter corresponding to the second frequency domain resource is not configured for the first terminal device, the first terminal device determines, based on the open-loop power control parameter, a ratio relationship between a quantity of frequency domain sub-resources of the first frequency domain resource and a total quantity corresponding to a plurality of frequency domain sub-resources, and remaining transmit power, the target transmit power corresponding to the first frequency domain resource.

Further, the first terminal device determines, based on the target transmit power corresponding to the first frequency domain resource and a ratio relationship between a quantity of frequency domain sub-resources of the second frequency domain resource and the quantity of frequency domain sub-resources of the first frequency domain resource, the target transmit power corresponding to the second frequency domain resource.

The remaining transmit power is determined based on transmit power allocated to at least one signal or channel whose priority is higher than that of the reference signal and allowed maximum transmit power of the first terminal device, and the plurality of frequency domain sub-resources include each frequency domain sub-resource in the first frequency domain resource and each frequency domain sub-resource in the second frequency domain resource.

The following describes an example of the foregoing manner of calculating the target transmit power.

In a possible implementation, the first frequency domain resource is the resource corresponding to the active BWP of the first cell to which the first terminal device is connected, the second frequency domain resource is the resource corresponding to the active BWP of the second cell to which the first terminal device is connected, and the open-loop power control parameter includes target receive power of the reference signal, a path loss reference signal resource index corresponding to the reference signal, and a path loss compensation factor corresponding to the reference signal.

The target transmit power corresponding to the first frequency domain resource is $P'_{SRS,b\_m,f\_m,c\_m}(i, q_{s\_m})$, and the target transmit power corresponding to the second frequency domain resource is $P'_{SRS,b\_n,f\_n,c\_n}(i, q_{s\_n})$. $P'_{SRS,b\_m,f\_m,c\_m}(i, q_{s\_m})$ may be determined according to formula (57) or formula (58), and $P'_{SRS,b\_n,f\_n,c\_n}(i, q_{s\_n})$ may be determined according to formula (59).

$$P'_{SRS,b\_m,f\_m,c\_m}(i, q_{s\_m}) =$$

$$\min \left\{ \begin{array}{c} \Delta P(i) + 10 log_{10}\left(\frac{M_{SRS,b\_m,f\_m,c\_m}(i)}{\sum M_{SRS}(i)}\right) \\ P_{0\,SRS,b\_m,f\_m,c\_m}(q_{s\_m}) + 10\,log_{10}\left(2^{\mu\_m} \cdot M_{SRS,b\_m,f\_m,c\_m}(i)\right) + \\ \alpha_{SRS,b\_m,f\_m,c\_m}(q_{s\_m}) \cdot PL_{b\_m,f\_m,c\_m}(q_{d\_m}) \end{array} \right\} \quad \text{Formula (57)}$$

$$P'_{SRS, b\_m, f\_m, c\_m}\left(i, q_{s\_m}\right) =$$

$$min \begin{cases} P_{CMAX}(i) \\ \Delta P(i) + 10log_{10}\left(\frac{M_{SRS, b\_m, f\_m, c\_m}(i)}{\sum M_{SRS}(i)}\right) \\ P_{0\,SRS, b\_m, f\_m, c\_m}\left(q_{s\_m}\right) + 10\,log_{10}\left(2^{\mu\_m} \cdot M_{SRS, b\_m, f\_m, c\_m}(i)\right) + \\ \alpha_{SRS, b\_m, f\_m, c\_m}\left(q_{s\_m}\right) \cdot PL_{b\_m, f\_m, c\_m}\left(q_{d\_m}\right) \end{cases} \quad \text{Formula (58)}$$

$$P'_{SRS, b\_n, f\_n, c\_n}\left(i, q_{s\_n}\right) = P'_{SRS, b\_m, f\_m, c\_m}\left(i, q_{s\_m}\right) + 10log_{10}\left(\frac{M_{SRS, b\_n, f\_n, c\_n}(i)}{M_{SRS, b\_m, f\_m, c\_m}(i)}\right) \quad \text{Formula (59)}$$

$P_{CMAX}(i)$ may be allowed maximum transmit power of the first terminal device on a transmission occasion $i$. This is uniformly described herein, and details are not described below again.

$\sum M_{SRS}(i)$ is a sum of a quantity of frequency domain sub-resources in the active BWP of the first cell and a quantity of frequency domain sub-resources in the active BWP of the second cell on a transmission occasion $i$.

$M_{SRS, b\_m, f\_m, c\_m}(i)$ is a quantity of frequency domain sub-resources in an active BWP $b\_m$ of a carrier $f\_m$ of the first cell $c\_m$ on a transmission occasion $i$.

$q_{s\_m}$ is an index corresponding to a resource or a resource set of the reference signal in the first cell $c\_m$.

$\mu\_m$ is a subcarrier spacing configuration corresponding to the active BWP $b\_m$ of the carrier $f\_m$ of the first cell $c\_m$.

$P_{0\,SRS, b\_m, f\_m, c\_m}\left(q_{s\_m}\right)$ is target receive power of the reference signal in the active BWP $b\_m$ of the carrier $f\_m$ of the first cell $c\_m$.

$\alpha_{SRS, b\_m, f\_m, c\_m}\left(q_{s\_m}\right)$ is a path loss compensation factor corresponding to the reference signal in the active BWP $b\_m$ of the carrier $f\_m$ of the first cell $c\_m$.

$PL_{b\_m, f\_m, c\_m}\left(q_{d\_m}\right)$ is a path loss estimation value corresponding to the reference signal in the active BWP $b\_m$ of the carrier $f\_m$ of the first cell $c\_m$.

$q_{s\_n}$ is an index corresponding to a resource or a resource set of the reference signal in the second cell $c\_n$.

$M_{SRS, b\_n, f\_n, c\_n}(i)$ is a quantity of frequency domain sub-resources in an active BWP $b\_n$ of a carrier $f\_n$ of the second cell $c\_n$ on a transmission occasion $i$.

It may be understood that when an open-loop power control parameter corresponding to the second frequency domain resource is configured for the first terminal device, and an open-loop power control parameter corresponding to the first frequency domain resource is not configured for the first terminal device, the target transmit power corresponding to the second frequency domain resource may be determined according to formula (57) or formula (58), and then the target transmit power corresponding to the first frequency domain resource is determined according to formula (59).

Further, when three, four, or more frequency domain resources are configured for the first terminal device, formula (57) to formula (59) may also be used to determine the target transmit power corresponding to each frequency domain resource. For example, in scenario 1, an open-loop power control parameter corresponding to the first frequency domain resource is configured for the first terminal device, and open-loop power control parameters corresponding to the second frequency domain resource and the third frequency domain resource are not configured for the first terminal device. Therefore, the target transmit power corresponding to the first frequency domain resource may be determined according to formula (57). The target transmit power corresponding to the second frequency domain resource and the target transmit power corresponding to the third frequency domain resource may be determined according to formula (59).

For case B: In case B, an open-loop power control parameter corresponding to each of a plurality of frequency domain resources is configured for the first terminal device, and open-loop power control parameters corresponding to all the frequency domain resources are the same, so that the target transmit power corresponding to each frequency domain resource may be calculated based on the same open-loop power control parameter.

In a possible implementation, the first frequency domain unit is a frequency domain sub-resource of the first frequency domain resource, and the second frequency domain unit is a frequency domain sub-resource of the second frequency domain resource; and that the first terminal device determines, based on the information corresponding to the first frequency domain resource and/or the second frequency domain resource and the ratio relationship, the target transmit power corresponding to the first frequency domain resource and the target transmit power corresponding to the second frequency domain resource (step S802b) includes:

when an open-loop power control parameter corresponding to the first frequency domain resource is the same as an open-loop power control parameter corresponding to the second frequency domain resource, the first terminal device determines, based on the open-loop power control parameter, a ratio relationship between a quantity of frequency domain sub-resources of the first frequency domain resource and a total quantity corresponding to a plurality of frequency domain sub-resources, a ratio relationship between a quantity of frequency domain sub-resources of the second frequency domain resource and the total quantity corresponding to the plurality of frequency domain sub-resources, and remaining transmit power, the target transmit power corresponding to the first frequency domain resource and the target transmit power corresponding to the second frequency domain resource.

The remaining transmit power is determined based on transmit power allocated to at least one signal or channel whose priority is higher than that of the reference signal and allowed maximum transmit power of the first terminal device, and the plurality of frequency domain sub-resources include each frequency domain sub-resource in the first frequency domain resource and each frequency domain sub-resource in the second frequency domain resource.

The following describes an example of the foregoing manner of calculating the target transmit power.

In a possible implementation, the first frequency domain resource is the resource corresponding to the active BWP of the first cell to which the first terminal device is connected, the second frequency domain resource is the resource corresponding to the active BWP of the second cell to which the first terminal device is connected, and the open-loop power control parameter includes target receive power of the reference signal, a path loss reference signal resource index corresponding to the reference signal, and a path loss compensation factor corresponding to the reference signal.

The target transmit power corresponding to the first frequency domain resource or the second frequency domain resource is $P'_{SRS,b\_m,f\_m,c\_m}(i, q_{s\_m})$. $P'_{SRS,b\_m,f\_m,c\_m}(i, q_{s\_m})$ may be determined according to formula (60) or formula (61).

$$P'_{SRS,b\_m,f\_m,c\_m}(i, q_{s\_m}) =$$

$$\min \begin{cases} \Delta P(i) + 10log_{10}\left(\frac{M_{SRS,b\_m,f\_m,c\_m}(i)}{\sum M_{SRS}(i)}\right) \\ P_{O_{SRS,b\_m,f\_m,c\_m}}(q_{s\_m}) + 10\,log_{10}\left(2^{\mu\_m} \cdot M_{SRS,b\_m,f\_m,c\_m}(i)\right) + \\ \alpha_{SRS,b\_m,f\_m,c\_m}(q_{s\_m}) \cdot PL_{b\_m,f\_m,c\_m}(q_{d\_m}) \end{cases} \quad \text{Formula (60)}$$

$$P'_{SRS,b\_m,f\_m,c\_m}(i, q_{s\_m}) =$$

$$\min \begin{cases} P_{CMAX}(i) \\ \Delta P(i) + 10log_{10}\left(\frac{M_{SRS,b\_m,f\_m,c\_m}(i)}{\sum M_{SRS}(i)}\right) \\ P_{O_{SRS,b\_m,f\_m,c\_m}}(q_{s\_m}) + 10\,log_{10}\left(2^{\mu\_m} \cdot M_{SRS,b\_m,f\_m,c\_m}(i)\right) + \\ \alpha_{SRS,b\_m,f\_m,c\_m}(q_{s\_m}) \cdot PL_{b\_m,f\_m,c\_m}(q_{d\_m}) \end{cases} \quad \text{Formula (61)}$$

It may be understood that when m in $c\_m$ is an index of the first cell, parameters in formula (60) or formula (61) are defined as follows:

$P'_{SRS,b\_m,f\_m,c\_m}(i, q_{s\_m})$ is the target transmit power corresponding to the first frequency domain resource.

$M_{SRS,b\_m,f\_m,c\_m}(i)$ is a quantity of frequency domain sub-resources in an active BWP $b\_m$ of a carrier $f\_m$ of the first cell $c\_m$ on a transmission occasion $i$.

$q_{s\_m}$ is an index corresponding to a resource or a resource set of the reference signal in the first cell $c\_m$.

$\mu\_m$ is a subcarrier spacing configuration corresponding to the active BWP $b\_m$ of the carrier $f\_m$ of the first cell $c\_m$.

$P_{O_{SRS,b\_m,f\_m,c\_m}}(q_{s\_m})$ is target receive power of the reference signal in the active BWP $b\_m$ of the carrier $f\_m$ of the first cell $c\_m$.

$\alpha_{SRS,b\_m,f\_m,c\_m}(q_{s\_m})$ is a path loss compensation factor corresponding to the reference signal in the active BWP $b\_m$ of the carrier $f\_m$ of the first cell $c\_m$.

$PL_{b\_m,f\_m,c\_m}(q_{d\_m})$ is a path loss estimation value corresponding to the reference signal in the active BWP $b\_m$ of the carrier $f\_m$ of the first cell $c\_m$.

Further, when m in $c\_m$ is an index of the second cell, parameters in formula (60) or formula (61) are defined as follows:

$P'_{SRS,b\_m,f\_m,c\_m}(i, q_{s\_m})$ is the target transmit power corresponding to the second frequency domain resource.

$M_{SRS,b\_m,f\_m,c\_m}(i)$ is a quantity of frequency domain sub-resources in an active BWP $b\_m$ of a carrier $f\_m$ of the second cell $c\_m$ on a transmission occasion $i$.

$q_{s\_m}$ is an index corresponding to a resource or a resource set of the reference signal in the second cell $c\_m$.

$\mu\_m$ is a subcarrier spacing configuration corresponding to the active BWP $b\_m$ of the carrier $f\_m$ of the second cell $c\_m$.

$P_{O_{SRS},b\_m,f\_m,c\_m}}(q_{s\_m})$ is target receive power of the reference signal in the active BWP $b\_m$ of the carrier $f\_m$ of the second cell $c\_m$.

$\alpha_{SRS,b\_m,f\_m,c\_m}}(q_{s\_m})$ is a path loss compensation factor corresponding to the reference signal in the active BWP $b\_m$ of the carrier $f\_m$ of the second cell $c\_m$.

$PL_{b\_m,f\_m,c\_m}}(q_{d\_m})$ is a path loss estimation value corresponding to the reference signal in the active BWP $b\_m$ of the carrier $f\_m$ of the second cell $c\_m$.

It may be understood that when three, four, or more frequency domain resources are configured for the first terminal device, formula (60) or formula (61) may also be used to determine the target transmit power corresponding to each frequency domain resource. For example, in scenario 1, an open-loop power control parameter corresponding to the first frequency domain resource, an open-loop power control parameter corresponding to the second frequency domain resource, and an open-loop power control parameter corresponding to the third frequency domain resource are the same, and then the target transmit power corresponding to the first frequency domain resource to the third frequency domain resource may be determined according to formula (60).

The target transmit power corresponding to each of the plurality of frequency domain resources determined in manner A or manner B can avoid that a sum of target transmit power corresponding to the plurality of frequency domain resources exceeds the foregoing remaining transmit power, and can also avoid that the terminal device preferentially allocates transmit power to a frequency domain resource with a relatively high priority (for example, a frequency domain resource corresponding to a PCell), thereby avoiding an excessively large difference between transmit power of reference signals on different frequency domain resources, so that a position estimation error can be reduced. Further, the first terminal device sends the reference signal at same transmit power in all of the plurality of frequency domain units, so that consistency of receive power of the reference signal arriving at the second device on the plurality of frequency domain resources can be improved, thereby further reducing the position estimation error.

In a possible implementation, the power control method shown in FIG. 8 further includes:
The first terminal device sends third indication information to the second device. Correspondingly, the second device receives the third indication information from the first terminal device. The third indication information indicates that the first terminal device simultaneously sends the reference signal and the at least one signal or channel whose priority is higher than that of the reference signal; or the third indication information indicates that data is sent on the transmission occasion for sending the reference signal; or the third indication information indicates that the at least one signal or channel whose priority is higher than that of the reference signal is sent on the transmission occasion; or the third indication information indicates that EPRE corresponding to the first frequency domain resource and/or the second frequency domain resource decreases on the transmission occasion; or the third indication information indicates that the allocable transmit power of the first terminal device decreases on the transmission occasion; or the third indication information indicates that a power level of the first terminal device decreases on the transmission occasion; or the third indication information indicates that power reduction exists on the first terminal device on the transmission occasion.

It may be understood that positioning accuracy of a time difference-based positioning technology is related to a bandwidth and power for sending a reference signal by a terminal device. Therefore, when transmit power of the reference signal decreases, the positioning accuracy decreases. In other words, the second device may determine, by receiving the third indication information from the first terminal device, that the transmit power of the reference signal is low transmit power or decreases. In other words, a positioning measurement result determined by using the reference signal has relatively low accuracy and relatively low reliability. In this case, the second device may measure, based on the third indication information, a reliability degree of the positioning measurement result corresponding to the reference signal.

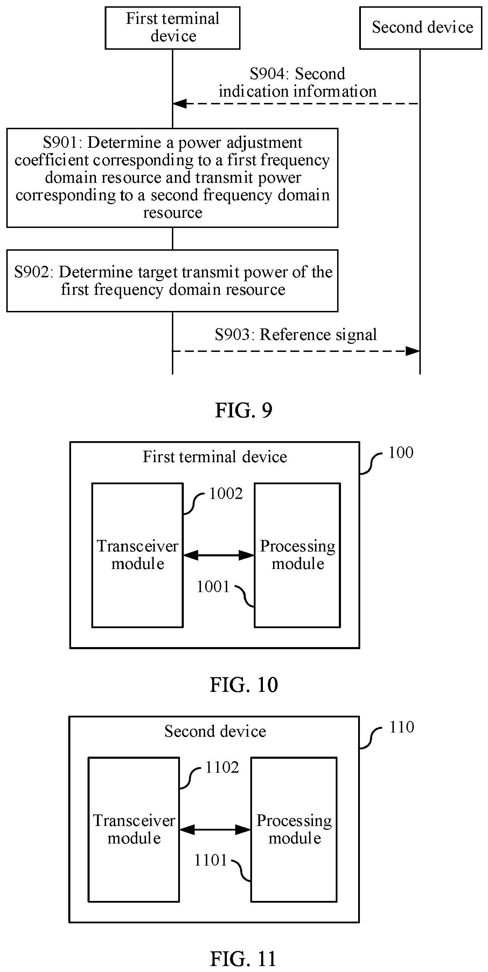

In a possible implementation, based on an SL communication scenario, an embodiment of this application provides a power control method. As shown in FIG. 9, the power control method includes the following steps.

S901: A first terminal device determines a power adjustment coefficient corresponding to a first frequency domain resource and transmit power corresponding to a second frequency domain resource. The first frequency domain resource and the second frequency domain resource are used to send a reference signal.

Optionally, the first frequency domain resource may be a frequency domain resource corresponding to a first carrier to which the first terminal device is connected, and the second frequency domain resource may be a frequency domain resource corresponding to a second carrier to which a second terminal device is connected.

Optionally, the power adjustment coefficient corresponding to the first frequency domain resource may be a power adjustment coefficient expected by the first terminal device. For example, the first terminal device may determine, based on a current DL path loss estimation or SL path loss estimation, expected receive power of the reference signal sent on the first frequency domain resource.

Optionally, there may be one or more first frequency domain resources. This is not specifically limited in embodiments of this application.

S902: The first terminal device determines target transmit power of the first frequency domain resource based on the power adjustment coefficient corresponding to the first frequency domain resource and the transmit power corresponding to the second frequency domain resource. In this embodiment of this application, the first terminal device may determine, based on the power adjustment coefficient corresponding to the first frequency domain resource and the transmit power corresponding to the second frequency domain resource, the target transmit power corresponding to the first frequency domain resource. In this way, the first terminal device may send the reference signal at the target transmit power corresponding to expected receive power, to reduce a difference between receive power of the reference signal on different frequency domain resources, thereby reducing a position estimation error, and improving positioning accuracy.

The actions of the first terminal device in steps S901 and S902 may be performed by the network device instructed by the processor 701 in the communication apparatus 700 shown in FIG. 7 by invoking the application program code stored in the memory 702. This is not limited in this embodiment.

Optionally, as shown in FIG. 9, the power control method provided in this embodiment of this application further includes:

S903: The first terminal device sends the reference signal on the first frequency domain resource at the target transmit power corresponding to the first frequency domain resource, and the first terminal device sends the reference signal on the second frequency domain resource at the transmit power corresponding to the second frequency domain resource.

Optionally, the first terminal device may send the reference signal to a second device. The second device may be a second terminal device.

Optionally, as shown in FIG. 9, the power control method provided in this embodiment of this application further includes:

S904: The second device sends second indication information to the first terminal device, where the second indication information indicates the first terminal device to determine the target transmit power of the first frequency domain resource based on the power adjustment coefficient corresponding to the first frequency domain resource and the transmit power corresponding to the second frequency domain resource. Correspondingly, the first terminal device receives the second indication information from the second device, and performs step S902 based on the second indication information.

Optionally, in this embodiment of this application, the second indication information may be carried in a PC5-RRC message or sidelink control information (sidelink control information, SCI).

Optionally, the first frequency domain resource may be a frequency domain resource on which the second device indicates that power adjustment needs to be performed, or the first frequency domain resource may be a frequency domain resource on which the second device expects to perform adjustment.

Optionally, the first frequency domain resource may be a resource other than the second frequency domain resource in a plurality of frequency domain resources. The second frequency domain resource may be indicated by the second device, or the second frequency domain resource may be determined by the first terminal device. This is not specifically limited in embodiments of this application.

For example, the first frequency domain resource includes a frequency domain resource #1 corresponding to a carrier #1, a frequency domain resource #2 corresponding to a carrier #2, and a frequency domain resource #3 corresponding to a carrier #3, and the frequency domain resource #1 corresponding to the carrier #1 and the frequency domain resource #2 corresponding to the carrier #2 are target frequency domain resources. The second indication information includes power adjustment coefficients K1 and K2 that are in a one-to-one correspondence with the carrier #1 and the carrier #2. K1 is a power adjustment coefficient corresponding to the carrier #1, and K2 is a power adjustment coefficient corresponding to the carrier #2. In addition, the second frequency domain resource is the frequency domain resource corresponding to the carrier #3.

Optionally, in this embodiment of this application, the second indication information includes the power adjustment coefficient corresponding to the first frequency domain resource. In other words, the second device may determine, based on the expected receive power of the reference signal, the power adjustment coefficient corresponding to the first frequency domain resource.

Optionally, in this embodiment of this application, before the first terminal device receives the second indication information from the second device, the method further includes:

the first terminal device sends capability information to the second device, where the capability information indicates that the first terminal device has a capability of sending the reference signal based on a power adjustment coefficient corresponding to a frequency domain resource.

Optionally, in this embodiment of this application, the target transmit power corresponding to the first frequency domain resource may be determined according to formula (62).

$$P_{PRS\_n}(i) = K\_n \cdot P_{PRS}(i) \qquad\qquad \text{Formula (62)}$$

Definitions of parameters in formula (62) are as follows:

$P_{PRS\_n}$ *(i)* represents the target transmit power corresponding to the first frequency domain resource.

$P_{PRS}(i)$ represents the transmit power corresponding to the second frequency domain resource, and may be determined according to formulas (3) to (7).

$K\_n$ represents the power adjustment coefficient corresponding to the first frequency domain resource.

Optionally, in this embodiment of this application, the target transmit power corresponding to the first frequency domain resource may be determined according to formula (63).

$$P_{PRS\_n}(i) = P_{PRS}(i) + K\_n \qquad \text{Formula (63)}$$

For definitions of parameters in formula (63), refer to related descriptions of formula (62).

Optionally, in this embodiment of this application, the target transmit power corresponding to the first frequency domain resource may be determined according to formula (64).

$$P_{PRS\_n}(i) = min\{P_{CMAX}, P_{MAX,CBR}, min(P_{PRS\_n,D}(i), P_{PRS\_n,SL}(i)\} \quad \text{Formula (64)}$$

For definitions of parameters in formula (64), refer to formula (3) to formula (7) and formula *(62)*. $P_{PRS\_n,D}(i)$ corresponds to a DL path loss $PL_{D-n} = PL_D K\_n$, or $PL_{D\_n} = PL_D + K\_n \cdot lg(\frac{f\_n}{f})$, $f$ is a carrier corresponding to the second frequency domain resource, and $P_{PRS\_n,SL}(i)$ corresponds to an SL path loss $PL_{SL\_n} = PL_{SL} \cdot K\_n$, or $PL_{SL\_n} = PL_{SL} + K \cdot lg(\frac{f\_n}{f})$.

In this embodiment of this application, the first terminal device may determine, based on the power adjustment coefficient corresponding to the first frequency domain resource and the transmit power corresponding to the second frequency domain resource, the target transmit power corresponding to the first frequency domain resource. In this way, the first terminal device may send the reference signal at the target transmit power corresponding to the receive power expected by the second device, to reduce a difference between receive power of the reference signal on different frequency domain resources, thereby reducing a position estimation error, and improving positioning accuracy.

The actions of the first terminal device in steps S901 to S904 may be performed by the network device instructed by the processor 701 in the communication apparatus 700 shown in FIG. 7 by invoking the application program code stored in the memory 702. When the second device is a first network device, the actions of the second device in steps S901 to S904 may be performed by the terminal device instructed by the processor 801 in the network device 800 shown in FIG. 7 by invoking the application program code stored in the memory 802. When the second device is a second terminal device, the actions of the second device in steps S901 to S904 may be performed by the terminal device instructed by the processor 701 in the terminal device 700 shown in FIG. 7 by invoking the application program code stored in the memory 702. This is not limited in this embodiment. It may be understood that, in the foregoing embodiment, the methods and/or steps implemented by the first terminal device may also be implemented by a component (for example, a processor, a chip, a chip system, a circuit, a logical module, or software) that may be used in the first terminal device. The methods and/or steps implemented by the second device may also be implemented by a component (for example, a processor, a chip, a chip system, a circuit, a logical module, or software) that may be used in the second device.

The foregoing mainly describes the solution provided in this application. Correspondingly, this application further provides a communication apparatus. The communication apparatus is configured to implement the methods in the foregoing method embodiments. The communication apparatus may be the first terminal device in the method embodiments, or an apparatus including the first terminal device, or a component that can be used in the first terminal device, for example, a chip or a chip system. Alternatively, the communication apparatus may be the second device in the method embodiments, an apparatus including the second device, or a component that can be used in the second device, for example, a chip or a chip system.

It may be understood that, to implement the foregoing functions, the communication apparatus includes a corresponding hardware structure and/or software module for performing the functions. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, the communication apparatus is the first terminal device in the foregoing method embodiments.

FIG. 10 is a diagram of a structure of a first terminal device 100. The first terminal device 100 includes a processing module 1001 and a transceiver module 1002.

In some embodiments, the first terminal device 100 may further include a storage module (not shown in FIG. 10), configured to store program instructions and data.

In some embodiments, the processing module 1001 is configured to determine a ratio relationship between target transmit power corresponding to a first frequency domain unit and target transmit power corresponding to a second frequency domain unit. The processing module 1001 is further configured to determine, based on the ratio relationship, target transmit power corresponding to a first frequency domain resource and target transmit power corresponding to a second frequency domain resource. The first frequency domain unit is the first frequency domain resource, and the second frequency domain unit is the second frequency domain resource; or the first frequency domain unit is a frequency domain sub-resource of the first frequency domain resource, and the second frequency domain unit is a frequency domain sub-resource of the second frequency domain resource; and the first frequency domain resource and the second frequency domain resource are used to send a reference signal.

In a possible implementation, the transceiver module 1002 is configured to receive first indication information from a second device. The first indication information indicates the first terminal device to determine, based on the ratio relationship, the target transmit power corresponding to the first frequency domain resource and the target transmit power corresponding to the second frequency domain resource.

Optionally, the first indication information includes the ratio relationship between the target transmit power corresponding to the first frequency domain unit and the target transmit power corresponding to the second frequency domain unit.

Optionally, the transceiver module 1002 is further configured to send capability information to the second device before receiving the first indication information from the second device. The capability information indicates that the first terminal device has a capability of sending the reference signal based on a ratio relationship between target transmit power corresponding to different frequency domain units.

Optionally, the transceiver module 1002 is further configured to: send the reference signal on the first frequency domain resource at the target transmit power corresponding to the first frequency domain resource, and send the reference signal on the second frequency domain resource at the target transmit power corresponding to the second frequency domain resource.

Optionally, the first frequency domain resource is a resource corresponding to an active BWP of a first cell to which the first terminal device is connected, and the second frequency domain resource is a resource corresponding to an active BWP of a second cell to which the first terminal device is connected; or the first frequency domain resource is a frequency domain resource corresponding to a first carrier to which the first terminal device is connected, and the second frequency domain resource is a frequency domain resource corresponding to a second carrier to which the first terminal device is connected.

Optionally, the frequency domain sub-resource is a resource block RB or a resource element RE.

Optionally, the processing module 1001 is configured to: obtain information corresponding to the first frequency domain resource and/or the second frequency domain resource, and determine, based on the information corresponding to the first frequency domain resource and/or the second frequency domain resource and the ratio relationship between the target power corresponding to the first frequency domain unit and the target power corresponding to the second frequency domain unit, the target transmit power corresponding to the first frequency domain resource and the target transmit power corresponding to the second frequency domain resource.

Optionally, the ratio relationship between the target power corresponding to the first frequency domain unit and the target power corresponding to the second frequency domain unit includes that the target transmit power corresponding to the first frequency domain unit is the same as the target transmit power corresponding to the second frequency domain unit.

Optionally, the first frequency domain unit is the first frequency domain resource, and the second frequency domain unit is the second frequency domain resource; and that the processing module 1001 is configured to determine, based on the information corresponding to the first frequency domain resource and/or the second frequency domain resource and the ratio relationship between the target power corresponding to the first frequency domain unit and the target power corresponding to the second frequency domain unit, the target transmit power corresponding to the first frequency domain resource and the target transmit power corresponding to the second frequency domain resource includes: determining, based on transmit power corresponding to the first frequency domain resource and/or the second frequency domain resource and the ratio relationship between the target power corresponding to the first frequency domain unit and the target power corresponding to the second frequency domain unit, the target transmit power corresponding to the first frequency domain resource and the target transmit power corresponding to the second frequency domain resource. The target transmit power corresponding to the second frequency domain resource is the same as the target transmit power corresponding to the first frequency domain resource, and the target transmit power corresponding to the first frequency domain resource is a smallest value in first transmit power and second transmit power.

The first frequency domain resource is the resource corresponding to the active BWP of the first cell to which the first terminal device is connected, the second frequency domain resource is the resource corresponding to the active BWP of the second cell to which the first terminal device is connected, and the first transmit power is allowed maximum average transmit power of the first terminal device on a transmission occasion i. Alternatively, the first frequency domain resource is the frequency domain resource corresponding to the first carrier to which the first terminal device is connected, the second frequency domain resource is the frequency domain resource corresponding to the second carrier to which the first terminal device is connected, and the first transmit power is allowed maximum average transmit power of the first terminal device. The second transmit power is an average value of or a largest value in the transmit power corresponding to the first frequency domain resource and the transmit power corresponding to the second frequency domain resource; or the second transmit power is the transmit power corresponding to the first frequency domain resource or the second frequency domain resource; or the second transmit power is determined by the first terminal device based on the transmit power corresponding to the first frequency domain resource or the second frequency domain resource.

Optionally, the first frequency domain unit is the frequency domain sub-resource of the first frequency domain resource, and the second frequency domain unit is the frequency domain sub-resource of the second frequency domain resource; and that the processing module 1001 is configured to determine, based on the information corresponding to the first frequency domain resource and/or the second frequency domain resource and the ratio relationship between the target power corresponding to the first frequency domain unit and the target power corresponding to the second frequency domain unit, the target transmit power corresponding to the first frequency domain resource and the target transmit power corresponding to the second frequency domain resource includes: determining, based on size information of the first frequency domain resource, size information of the second frequency domain resource, and the ratio relationship, the target transmit power corresponding to the first frequency domain resource and the target transmit power corresponding to the second frequency domain resource. The first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource includes a quantity of frequency domain sub-resources in the active BWP of the first cell, and the size information of the second frequency domain resource includes a quantity of frequency domain sub-resources in the active BWP of the second cell. The target transmit power corresponding to the first frequency domain resource or the second frequency domain resource is

$$\frac{M_{SRS,b\_m,f\_m,c\_m}(i)}{\sum M_{SRS}(i)} \cdot P_{CMAX}(i)$$

; or the target transmit power corresponding to the first frequency domain resource or the second frequency domain resource is $P_{CMAX}(i) + 10log_{10}$ $(M_{SRS,b\_m,f\_m,c\_m}(i)/\sum M_{SRS}(i))$. $P_{CMAX}(i)$ is allowed maximum transmit power of the first terminal device on a transmission occasion i, $\sum M_{SRS}(i)$ is a sum of the quantity of frequency domain sub-resources in the active BWP of the first cell and the quantity of frequency domain sub-resources in the active BWP of the second cell on the transmission occasion $i$; and when $m$ in $c\_m$ is an index of the first cell, $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$; or when m in $c\_m$ is an index of the second cell, $M_{SRS,b\_m,f,c\_m}(i)$ is a quantity of frequency domain sub-resources in an active BWP $b\_m$ of a carrier $f\_m$ of the second cell $c\_m$ on the transmission occasion $i$.

Alternatively, the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource includes a quantity of frequency domain sub-resources of the first carrier, the size information of the second frequency domain resource includes a quantity of frequency domain sub-resources of the second carrier, and the target transmit power corresponding to the first frequency domain resource or the second frequency domain resource is

$$\frac{M_{PRS\_n}(i)}{\sum M_{PRS}(i)} \cdot P_{CMAX}$$

, or the target transmit power corresponding to the first frequency domain resource or the second frequency domain resource is $P_{CMAX} + 10log_{10}(M_{PRS\_n}(i)/\sum M_{PRS}(i))$. $P_{CMAX}$ is the allowed maximum transmit power of the first terminal device, and $\sum M_{PRS}(i)$ is a sum of the quantity of frequency domain sub-resources of the first carrier and the quantity of frequency domain sub-resources of the second carrier on a transmission occasion $i$; and when $n$ in $PRS\_n$ is an index of the first carrier, $M_{PRS\_n}(i)$ is a quantity of frequency domain sub-resources of the first carrier $f\_n$ on the transmission occasion $i$; or when $n$ in $PRS\_n$ is an index of the second carrier, $M_{PRS\_n}(i)$ is a quantity of frequency domain sub-resources of the second carrier $f\_n$ on the transmission occasion $i$.

Optionally, the first frequency domain unit is the frequency domain sub-resource of the first frequency domain resource, and the second frequency domain unit is the frequency domain sub-resource of the second frequency domain resource; and that the processing module 1001 is configured to determine, based on the information corresponding to the first frequency domain resource and/or the second frequency domain resource and the ratio relationship between the target power corresponding to the first frequency domain unit and the target power corresponding to the second frequency domain unit, the target transmit power corresponding to the first frequency domain resource and the target transmit power corresponding to the second frequency domain resource includes: determining, based on size information of the first frequency domain resource, size information of the second frequency domain resource, transmit power corresponding to the first frequency domain resource and/or the second frequency domain resource, and the ratio relationship, the target transmit power corresponding to the first frequency domain resource and the target transmit power corresponding to the second frequency domain resource. The first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource includes a quantity of frequency domain sub-resources in the active BWP of the first cell, the size information of the second frequency domain resource includes a quantity of frequency domain sub-resources in the active BWP of the second cell, the target transmit power corresponding to the first frequency domain resource or the second frequency domain resource is $P'_{SRS,b\_m,f\_m,c\_m}(i, q_{s\_m})$, and $P'_{SRS,b\_m,f\_m,c\_m}(i, q_{s\_m})$ satisfies the following relationship:

$$P'_{SRS,b\_m,f\_m,c\_m}(i, q_{s\_m}) = \frac{P_{SRS,b\_m,f\_m,c\_m}(i,q_{s\_m})}{\sum P_{SRS}(i)} \cdot P_{CMAX}(i) \quad ;$$

or

$$P'_{SRS,b\_m,f\_m,c\_m}(i, q_{s\_m}) = \beta_{SRS,b\_m,f\_m,c\_m} \cdot P_{SRS,b\_m,f\_m,c\_m}(i, q_{s\_m}).$$

$\beta_{SRS,b\_m,f\_m,c\_m}$ satisfies the following relationship:

$$\beta_{SRS,b\_m,f\_m,c\_m} = \frac{P_{CMAX}(i)}{P_{SRS,b\_m,f\_m,c\_m}(i,q_{s\_m})} \cdot \frac{M_{SRS,b\_m,f\_m,c\_m}(i)}{\sum M_{SRS}(i)} \quad ; \quad \text{or} \quad \beta_{SRS,b\_m,f\_m,c\_m} =$$

$$\frac{1}{P_{SRS,b\_m,f\_m,c\_m}(i,q_{s\_m})} \cdot \left( P_{CMAX}(i) + 10log_{10}\left(\frac{M_{SRS,b\_m,f\_m,c\_m}(i)}{\sum M_{SRS}(i)}\right) \right).$$

$P_{CMAX}(i)$ is allowed maximum transmit power of the first terminal device on a transmission occasion i, $\Sigma P_{SRS}(i)$ is a sum of transmit power corresponding to the active BWP of the first cell and transmit power corresponding to the active BWP of the second cell on the transmission occasion $i$, and $\Sigma M_{SRS}(i)$ is a sum of the quantity of frequency domain sub-resources in the active BWP of the first cell and the quantity of frequency domain sub-resources in the active BWP of the second cell on the transmission occasion $i$; and when $m$ in $c\_m$ is an index of the first cell, $P'_{SRS,b\_m,f\_m,c\_m}(i, q_{s\_m})$ is the target transmit power corresponding to the first frequency domain resource, $P_{SRS,b\_m,f\_m,c\_m}(i, q_{s\_m})$ is the transmit power corresponding to the first frequency domain resource, $q_{s\_m}$ is an index corresponding to a resource or a resource set of the reference signal in the first cell, and $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$; or when m in $c\_m$ is an index of the second cell, $P'_{SRS,b\_m,f\_m,c\_m}(i, q_{s\_m})$ is the target transmit power corresponding to the second frequency domain resource, $P_{SRS,b\_m,f\_m,c\_m}(i, q_{s\_m})$ is the transmit power corresponding to the second frequency domain resource, $q_{s\_m}$ is an index corresponding to a resource or a resource set of the reference signal in the second cell, and $M_{SRS,b\_m,f\_m,c\_m}(i)$ is a quantity of frequency domain sub-resources in an active BWP $b\_m$ of a carrier $f\_m$ of the second cell $c\_m$ on the transmission occasion $i$. Alternatively, the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource includes a quantity of frequency domain sub-resources of the first carrier, the size information of the second frequency domain resource includes a quantity of frequency domain sub-resources of the second carrier, and the target transmit power corresponding to the first frequency domain resource or the second frequency domain resource is $P'_{PRS\_n}(i)$, and $P'_{PRS\_n}(i)$ satisfies the following relationship:

$$P'_{PRS\_n}(i) = \frac{P_{PRS\_n}(i)}{\sum P_{PRS}(i)} \cdot P_{CMAX}; \text{ or } P'_{PRS\_n}(i) = \beta_{PRS\_n} \cdot P_{PRS\_n}(i).$$

$\beta_{PRS\_n}$ satisfies the following relationship:

60

$$\beta_{PRS\_n} = \frac{P_{CMAX}}{P_{PRS\_n}(i)} \cdot \frac{M_{PRS\_n}(i)}{\sum M_{PRS}(i)}; \text{ or } \beta_{PRS\_n} = \frac{1}{P_{PRS\_n}(i)} \cdot \left( P_{CMAX} + 10log_{10}\left(\frac{M_{PRS\_n}(i)}{\sum M_{PRS}(i)}\right)\right).$$

$P_{CMAX}$ is the allowed maximum transmit power of the first terminal device, $\sum P_{PRS}(i)$ is a sum of transmit power corresponding to the first carrier and transmit power corresponding to the second carrier on a transmission occasion $i$, and $\sum M_{PRS}(i)$ is a sum of the quantity of frequency domain sub-resources of the first carrier and the quantity of frequency domain sub-resources of the second carrier on the transmission occasion $i$; and when n in $PRS\_n$ is an index of the first carrier, $P'_{PRS\_n}(i)$ is the target transmit power corresponding to the first frequency domain resource, $P_{PRS\_n}(i)$ is the transmit power corresponding to the first frequency domain resource, and $M_{PRS\_n}(i)$ is a quantity of frequency domain sub-resources of the first carrier $f\_n$ on the transmission occasion $i$; or when $n$ in $PRS\_n$ is an index of the second carrier, $P'_{PRS\_n}(i)$ is the target transmit power corresponding to the second frequency domain resource, $P_{PRS\_n}(i)$ is the transmit power corresponding to the second frequency domain resource, and $M_{PRS\_n}(i)$ is a quantity of frequency domain sub-resources of the second carrier $f\_n$ on the transmission occasion $i$.

In another possible implementation, the processing module 1001 is configured to: determine a power adjustment coefficient corresponding to a first frequency domain resource and transmit power corresponding to a second frequency domain resource, and determine, based on the power adjustment coefficient corresponding to the first frequency domain resource and the transmit power corresponding to the second frequency domain resource, target transmit power of the first frequency domain resource, where the first frequency domain resource and the second frequency domain resource are used to send a reference signal. The first frequency domain resource and the second frequency domain resource are used to send a reference signal.

Optionally, the transceiver module 1002 is configured to receive second indication information from a second device. The second indication information indicates the first terminal device to determine the target transmit power of the first frequency domain resource based on the power adjustment coefficient corresponding to the first frequency domain resource and the transmit power corresponding to the second frequency domain resource.

Optionally, the second indication information includes the power adjustment coefficient corresponding to the first frequency domain resource.

Optionally, the transceiver module 1002 is configured to send capability information to the second device before receiving the second indication information from the second device. The capability information indicates that the first terminal device has a capability of sending the reference signal based on a power adjustment coefficient corresponding to a frequency domain resource.

Optionally, the transceiver module 1002 is configured to: send the reference signal on the first frequency domain resource at the target transmit power corresponding to the first frequency domain resource, and send the reference signal on the second frequency domain resource at the transmit power corresponding to the second frequency domain resource.

All related content of each step in the foregoing method embodiment may be cited to a function description of a corresponding function module, and details are not described herein again.

In this application, the first terminal device 100 is presented in a form of functional modules obtained through division in an integrated manner. The "module" herein may be an application-specific integrated circuit ASIC, a circuit, a processor that executes one or more software or firmware programs and a memory, an integrated logic circuit, and/or another component that can provide the foregoing functions.

In some embodiments, in hardware implementation, a person skilled in the art may figure out that the first terminal device 100 may be in a form of the communication apparatus 700 shown in FIG. 7.

In an example, functions/implementation processes of the processing module 1001 in FIG. 10 may be implemented by the processor 701 in the communication apparatus 700 shown in FIG. 7 by invoking the computer-executable instructions stored in the memory 702. Functions/implementation processes of the transceiver module 1002 in FIG. 10 may be implemented by the transceiver 703 in the communication apparatus 700 shown in FIG. 7.

In some embodiments, when the first terminal device 100 in FIG. 10 is a chip or a chip system, the functions/implementation processes of the transceiver module 1002 may be implemented by an input/output interface (or a communication interface) of the chip or the chip system, and the functions/implementation processes of the processing module 1001 may be implemented by a processor (or a processing circuit) of the chip or the chip system.

The first terminal device 100 provided in this embodiment may perform the foregoing power control methods. Therefore, for technical effects that can be achieved by the first terminal device, refer to the foregoing method embodiments. Details are not described herein again.

For example, the communication apparatus is the second device in the foregoing method embodiments. FIG. 11 is a diagram of a structure of a second device 110. The second device 110 includes a processing module 1101 and a transceiver module 1102.

In some embodiments, the second device 110 may further include a storage module (not shown in FIG. 11), configured to store program instructions and data.

In some embodiments, the transceiver module 1102 may also be referred to as a transceiver unit, configured to implement a sending function and/or a receiving function. The transceiver module 1102 may include a transceiver circuit, a transceiver machine, a transceiver, or a communication interface.

In some embodiments, the transceiver module 1102 may include a receiving module and a sending module, respectively configured to perform receiving steps and sending steps performed by the second device in the foregoing method embodiments, and/or configured to support other processes of the technologies described in this specification. The processing module 1101 may be configured to perform processing (for example, determining) steps performed by the second device in the foregoing method embodiments, and/or configured to support other processes of the technologies described in this specification. Examples are as follows:

The transceiver module 1102 is configured to send first indication information to a first terminal device. The first indication information indicates the first terminal device to determine, based on a ratio relationship between target transmit power corresponding to a first frequency domain unit and target transmit power corresponding to a second frequency domain unit, target transmit power corresponding to a first frequency domain resource and target transmit power corresponding to a second frequency domain resource. The first frequency domain unit is the first frequency domain resource, and the second frequency domain unit is the second frequency domain resource; or the first frequency domain unit is a frequency domain sub-resource of the first frequency domain resource, and the second frequency domain unit is a frequency domain sub-resource of the second frequency domain resource. The first frequency domain resource and the second frequency domain resource are used to send a reference signal.

Optionally, the first indication information includes the ratio relationship between the target transmit power corresponding to the first frequency domain unit and the target transmit power corresponding to the second frequency domain unit.

Optionally, the transceiver module 1102 is configured to receive capability information from the first terminal device before sending the first indication information to the first terminal device. The capability information indicates that the first terminal device has a capability of sending the reference signal based on a ratio relationship between target transmit power corresponding to different frequency domain units.

In another possible implementation, the transceiver module 1102 is configured to send second indication information to a first terminal device. The second indication information indicates the first terminal device to determine target transmit power of a first frequency domain resource based on a power adjustment coefficient corresponding to the first frequency domain resource and transmit power corresponding to a second frequency domain resource. The first frequency domain resource and the second frequency domain resource are used to send a reference signal.

Optionally, the second indication information includes the power adjustment coefficient corresponding to the first frequency domain resource.

Optionally, the transceiver module 1102 is further configured to receive capability information from the first terminal device before sending the second indication information to the first terminal device. The capability information indicates that the first terminal device has a capability of sending the reference signal based on a power adjustment coefficient corresponding to a frequency domain resource.

All related content of each step in the foregoing method embodiment may be cited to a function description of a corresponding function module, and details are not described herein again.

In this application, the second device 110 is presented in a form of functional modules obtained through division in an integrated manner. The "module" herein may be an application-specific integrated circuit ASIC, a circuit, a processor that executes one or more software or firmware programs and a memory, an integrated logic circuit, and/or another component that can provide the foregoing functions.

In some embodiments, in hardware implementation, a person skilled in the art may figure out that the second device 110 may be in a form of the communication apparatus 700 shown in FIG. 7.

In an example, functions/implementation processes of the processing module 1101 in FIG. 11 may be implemented by the processor 701 in the communication apparatus 700 shown in FIG. 7 by invoking the computer-executable instructions stored in the memory 702. Functions/implementation processes of the transceiver module 1102 in FIG. 11 may be implemented by the transceiver 703 in the communication apparatus 700 shown in FIG. 7.

In some embodiments, when the second device 110 in FIG. 11 is a chip or a chip system, the functions/implementation processes of the transceiver module 1102 may be implemented by an input/output interface (or a communication interface) of the chip or the chip system, and the functions/implementation processes of the processing module 1101 may be implemented by a processor (or a processing circuit) of the chip or the chip system.

The second device 110 provided in this embodiment may perform the foregoing power control methods. Therefore, for technical effects that can be achieved by the second device, refer to the foregoing method embodiments. Details are not described herein again.

In some embodiments, the first terminal device or the second device in this application may be alternatively implemented by using the following: one or more field-programmable gate arrays (field-programmable gate array, FPGA), a programmable logic device (programmable logic device, PLD), a controller, a state machine, gate logic, a discrete hardware component, any other suitable circuit, or any combination of circuits that can perform various functions described in this application.

In some embodiments, this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code or data read/write interface circuit, and the interface circuit is configured to receive computer-executable instructions (where the computer-executable instructions are stored in a memory, and may be directly read from the memory, or may be read via another component) and transmit the computer-executable instructions to the processor.

In another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may be physically separated or not, this is, may be located in the same place or distributed on a plurality of network units. A component displayed as a unit may or may not be a physical unit. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprise" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

Although this application is described with reference to specific features and embodiments, it is clear that various modifications and combinations may be made to this application without departing from the scope of this application. Correspondingly, this specification and the accompanying drawings are merely example description of this application defined by the appended claims and are considered to cover any and all modifications, variations, combinations, or equivalents in the scope of this application. It is clear that a person skilled in the art may make various modifications and variations to this application without departing from the scope of this application. Thus, this application is intended to cover these modifications and variations, provided that they fall within the scope of the claims of this application and their equivalent technologies.

**Claims**

1.    A power control method, wherein the method comprises:

determining, by a first terminal device, a ratio relationship between target transmit power corresponding to a first frequency domain unit and target transmit power corresponding to a second frequency domain unit, wherein the first frequency domain unit is a first frequency domain resource, and the second frequency domain unit is a second frequency domain resource; or the first frequency domain unit is a frequency domain sub-resource of the first frequency domain resource, and the second frequency domain unit is a frequency domain sub-resource of the second frequency domain resource; and the first frequency domain resource and the second frequency domain resource are used to send a reference signal; and
determining, by the first terminal device based on the ratio relationship, target transmit power corresponding to the first frequency domain resource and target transmit power corresponding to the second frequency domain resource.

2.    The method according to claim 1, wherein the method further comprises:
receiving, by the first terminal device, first indication information from a second device, wherein the first indication information indicates the first terminal device to determine, based on the ratio relationship, the target transmit power corresponding to the first frequency domain resource and the target transmit power corresponding to the second frequency domain resource.

3.    The method according to claim 2, wherein the first indication information comprises the ratio relationship.

4.    The method according to claim 2 or 3, wherein before the receiving, by the first terminal device, first indication information from a second device, the method further comprises:
sending, by the first terminal device, capability information to the second device, wherein the capability information indicates that the first terminal device has a capability of sending the reference signal based on a ratio relationship between target transmit power corresponding to different frequency domain units.

5.    The method according to any one of claims 1 to 4, wherein the method further comprises:
sending, by the first terminal device, the reference signal on the first frequency domain resource at the target transmit power corresponding to the first frequency domain resource, and sending the reference signal on the second frequency domain resource at the target transmit power corresponding to the second frequency domain resource.

6.    The method according to any one of claims 1 to 5, wherein the first frequency domain resource is a resource corresponding to an active bandwidth part BWP of a first cell to which the first terminal device is connected, and the second frequency domain resource is a resource corresponding to an active BWP of a second cell to which the first terminal device is connected; or
the first frequency domain resource is a frequency domain resource corresponding to a first carrier to which the first terminal device is connected, and the second frequency domain resource is a frequency domain resource corresponding to a second carrier to which the first terminal device is connected.

7.    The method according to any one of claims 1 to 6, wherein the frequency domain sub-resource is a resource block RB or a resource element RE.

8. The method according to any one of claims 1 to 7, wherein the determining, by the first terminal device based on the ratio relationship, target transmit power corresponding to the first frequency domain resource and target transmit power corresponding to the second frequency domain resource comprises:

obtaining, by the first terminal device, information corresponding to the first frequency domain resource and/or the second frequency domain resource; and
determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource.

9. The method according to any one of claims 1 to 8, wherein the ratio relationship comprises that the target transmit power corresponding to the first frequency domain unit is the same as the target transmit power corresponding to the second frequency domain unit.

10. The method according to claim 9, wherein the first frequency domain unit is the first frequency domain resource, and the second frequency domain unit is the second frequency domain resource; and
the determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource comprises:

determining, by the first terminal device based on transmit power corresponding to the first frequency domain resource and/or the second frequency domain resource and the ratio relationship, the target transmit power corresponding to the first frequency domain resource and the target transmit power corresponding to the second frequency domain resource, wherein the target transmit power corresponding to the second frequency domain resource is the same as the target transmit power corresponding to the first frequency domain resource, and the target transmit power corresponding to the first frequency domain resource is a smallest value in first transmit power and second transmit power;
the first transmit power is maximum average transmit power determined based on allowed maximum transmit power of the first terminal device, or the first transmit power is remaining average transmit power determined based on transmit power allocated to at least one signal or channel whose priority is higher than that of the reference signal and the allowed maximum transmit power of the first terminal device; and
the second transmit power is an average value of or a largest value in the transmit power corresponding to the first frequency domain resource and the transmit power corresponding to the second frequency domain resource; or the second transmit power is the transmit power corresponding to the first frequency domain resource or the second frequency domain resource; or the second transmit power is determined by the first terminal device based on the transmit power corresponding to the first frequency domain resource or the second frequency domain resource.

11. The method according to claim 9, wherein the first frequency domain unit is the frequency domain sub-resource of the first frequency domain resource, and the second frequency domain unit is the frequency domain sub-resource of the second frequency domain resource; and
the determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource comprises:

determining, by the first terminal device based on size information of the first frequency domain resource, size information of the second frequency domain resource, and the ratio relationship, the target transmit power corresponding to the first frequency domain resource and the target transmit power corresponding to the second frequency domain resource, wherein
the first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource comprises a quantity of frequency domain sub-resources in the active BWP of the first cell, and the size information of the second frequency domain resource comprises a quantity of frequency domain sub-resources in the active BWP of the second cell; or

the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource comprises a quantity of frequency domain sub-resources of the first carrier, and the size information of the second frequency domain resource comprises a quantity of frequency domain sub-resources of the second carrier.

12. The method according to any one of claims 1 to 9, wherein the first frequency domain unit is the frequency domain sub-resource of the first frequency domain resource, and the second frequency domain unit is the frequency domain sub-resource of the second frequency domain resource; and

the determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource comprises:

determining, by the first terminal device based on a ratio relationship between a quantity of frequency domain sub-resources of the first frequency domain resource and a total quantity corresponding to a plurality of frequency domain sub-resources, a ratio relationship between a quantity of frequency domain sub-resources of the second frequency domain resource and the total quantity corresponding to the plurality of frequency domain sub-resources, and allocable transmit power of the first terminal device, the target transmit power corresponding to the first frequency domain resource and the target transmit power corresponding to the second frequency domain resource, wherein

the plurality of frequency domain sub-resources comprise each frequency domain sub-resource in the first frequency domain resource and each frequency domain sub-resource in the second frequency domain resource.

13. The method according to claim 12, wherein the allocable transmit power of the first terminal device is allowed maximum transmit power of the first terminal device, or the allocable transmit power of the first terminal device is remaining transmit power determined based on transmit power allocated to at least one signal or channel whose priority is higher than that of the reference signal and the allowed maximum transmit power of the first terminal device.

14. The method according to any one of claims 11 to 13, wherein the first frequency domain resource is the resource corresponding to the active BWP of the first cell to which the first terminal device is connected, and the second frequency domain resource is the resource corresponding to the active BWP of the second cell to which the first terminal device is connected; and

the target transmit power corresponding to the first frequency domain resource or the second frequency domain resource is $\dfrac{M_{SRS,b\_m,f\_m,c\_m}(i)}{\sum M_{SRS}(i)} \cdot P_{CMAX}(i)$; or the target transmit power corresponding to the first frequency domain resource or the second frequency domain resource is $P_{CMAX}(i) + 10log_{10}(M_{SRS,b\_m,f\_m,c\_m}(i)/\sum M_{SRS}(i))$; or

the target transmit power corresponding to the first frequency domain resource or the second frequency domain resource is $\dfrac{M_{SRS,b\_m,f\_m,c\_m}(i)}{\sum M_{SRS}(i)} \cdot \Delta P(i)$; or the target transmit power corresponding to the first frequency domain resource or the second frequency domain resource is $\Delta P(i) + 10log_{10}(M_{SRS,b\_m,f\_m,c\_m}(i)/\sum M_{SRS}(i))$, wherein

$P_{CMAX}(i)$ is allowed maximum transmit power of the first terminal device on a transmission occasion i for sending the reference signal, $\Delta P(i)$ is remaining transmit power determined based on the transmit power allocated to the at least one signal or channel whose priority is higher than that of the reference signal and $P_{CMAX}(i)$, and $\sum M_{SRS}(i)$ is a sum of the quantity of frequency domain sub-resources in the active BWP of the first cell and the quantity of frequency domain sub-resources in the active BWP of the second cell on the transmission occasion $i$; and when $m$ in $c\_m$ is an index of the first cell, $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$; or when $m$ in $c\_m$ is an index of the second cell, $M_{SRS,b\_m,f\_m,c\_m}(i)$ is a quantity of frequency domain sub-resources in an active BWP $b\_m$ of a carrier $f\_m$ of the second cell $c\_m$ on the transmission occasion $i$.

15. The method according to any one of claims 11 to 13, wherein the first frequency domain resource is the resource corresponding to the active BWP of the first cell to which the first terminal device is connected, and the second frequency domain resource is the resource corresponding to the active BWP of the second cell to which the first terminal device is connected; and

the target transmit power corresponding to the first frequency domain resource or the second frequency domain resource is $P'_{SRS,b\_m,f\_m,c\_m}(i, q_{s\_m})$, $P'_{SRS,b\_m,f\_m,c\_m}(i, q_{s\_m}) = \beta_{SRS,b\_m,f\_m,c\_m} \cdot P_{SRS,b\_m,f\_m,c\_m}(i, q_{s\_m})$, or $P'_{SRS,b\_m,f\_m,c\_m}(i, q_{s\_m}) = \beta_{SRS,b\_m,f\_m,c\_m} + P_{SRS,b\_m,f\_m,c\_m}(i, q_{s\_m})$; and $\beta_{SRS,b\_m,f\_m,c\_m}$ satisfies the following relationship:

$$\beta_{SRS,b\_m,f\_m,c\_m} = \frac{P_{CMAX}(i)}{P_{SRS,b\_m,f\_m,c\_m}(i,q_{s\_m})} \cdot \frac{M_{SRS,b\_m,f\_m,c\_m}(i)}{\sum M_{SRS}(i)} \quad ; \quad \text{or} \quad \beta_{SRS,b\_m,f\_m,c\_m} =$$

$$\frac{1}{P_{SRS,b\_m,f\_m,c\_m}(i,q_{s\_m})} \cdot \left( P_{CMAX}(i) + 10log_{10}\left(\frac{M_{SRS,b\_m,f\_m,c\_m}(i)}{\sum M_{SRS}(i)}\right) \right) \quad ; \quad \text{or} \quad \beta_{SRS,b\_m,f\_m,c\_m} =$$

$$P_{CMAX}(i) + 10log_{10}\left(\frac{M_{SRS,b\_m,f\_m,c\_m}(i)}{\sum M_{SRS}(i)}\right) - P_{SRS,b\_m,f\_m,c\_m}(i, q_{s\_m}); \text{ or}$$

$$\beta_{SRS,b\_m,f\_m,c\_m} = \frac{\Delta P(i)}{P_{SRS,b\_m,f\_m,c\_m}(i,q_{s\_m})} \cdot \frac{M_{SRS,b\_m,f\_m,c\_m}(i)}{\sum M_{SRS}(i)} \quad ; \quad \text{or} \quad \beta_{SRS,b\_m,f\_m,c\_m} =$$

$$\frac{1}{P_{SRS,b\_m,f\_m,c\_m}(i,q_{s\_m})} \cdot \left( \Delta P(i) + 10log_{10}\left(\frac{M_{SRS,b\_m,f\_m,c\_m}(i)}{\sum M_{SRS}(i)}\right) \right); \text{ or } \beta_{SRS,b\_m,f\_m,c\_m} = \Delta P(i) +$$

$$10log_{10}\left(\frac{M_{SRS,b\_m,f\_m,c\_m}(i)}{\sum M_{SRS}(i)}\right) - P_{SRS,b\_m,f\_m,c\_m}(i, q_{s\_m}),$$

wherein
$P_{CMAX}(i)$ is allowed maximum transmit power of the first terminal device on a transmission occasion i for sending the reference signal, $\Delta P(i)$ is remaining transmit power determined based on the transmit power allocated to the at least one signal or channel whose priority is higher than that of the reference signal and $P_{CMAX}(i)$, and $\Sigma M_{SRS}(i)$ is a sum of the quantity of frequency domain sub-resources in the active BWP of the first cell and the quantity of frequency domain sub-resources in the active BWP of the second cell on the transmission occasion $i$; and when $m$ in $c\_m$ is an index of the first cell, $P'_{SRS,b\_m,f\_m,c\_m}(i, q_{s\_m})$ is the target transmit power corresponding to the first frequency domain resource, $P_{SRS,b\_m,f\_m,c\_m}(i, q_{s\_m})$ is the transmit power corresponding to the first frequency domain resource, $q_{s\_m}$ is an index corresponding to a resource or a resource set of the reference signal in the first cell, and $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$ ; or when $m$ in $c\_m$ is an index of the second cell, $P'_{SRS,b\_m,f\_m,c\_m}(i, q_{s\_m})$ is the target transmit power corresponding to the second frequency domain resource, $P_{SRS,b\_m,f\_m,c\_m}(i, q_{s\_m})$ is the transmit power corresponding to the second frequency domain resource, $q_{s\_m}$ is an index corresponding to a resource or a resource set of the reference signal in the second cell, and $M_{SRS,b\_m,f\_m,c\_m}(i)$ is a quantity of frequency domain sub-resources in an active BWP $b\_m$ of a carrier $f\_m$ of the second cell $c\_m$ on the transmission occasion $i$.

16. The method according to any one of claims 11 to 13, wherein the first frequency domain resource is the frequency domain resource corresponding to the first carrier to which the first terminal device is connected, and the second frequency domain resource is the frequency domain resource corresponding to the second carrier to which the first terminal device is connected; and

the target transmit power corresponding to the first frequency domain resource or the second frequency domain resource is $\frac{M_{PRS\_n}(i)}{\sum M_{PRS}(i)} \cdot P_{CMAX}$ ; or the target transmit power corresponding to the first frequency domain resource or the second frequency domain resource is $P_{CMAX} + 10log_{10}(M_{PRS\_n}(i)/\Sigma M_{PRS}(i))$; or
the target transmit power corresponding to the first frequency domain resource or the second frequency domain resource is $\frac{M_{PRS\_n}(i)}{\sum M_{PRS}(i)} \cdot \Delta P$ ; or the target transmit power corresponding to the first frequency domain resource or the second frequency domain resource is $\Delta P + 10log_{10}(M_{PRS\_n}(i)/\Sigma M_{PRS}(i))$, wherein

$P_{CMAX}$ is the allowed maximum transmit power of the first terminal device, $\Delta P$ is the remaining transmit power determined based on the transmit power allocated to the at least one signal or channel whose priority is higher than that of the reference signal and $P_{CMAX}$, and $\Sigma M_{PRS}(i)$ is a sum of the quantity of frequency domain sub-resources of the first carrier and the quantity of frequency domain sub-resources of the second carrier on a transmission occasion $i$; and when $n$ in PRS_n is an index of the first carrier, $M_{PRS\_n}(i)$ is a quantity of frequency domain sub-resources of the first carrier $f\_n$ on the transmission occasion $i$; or when $n$ in PRS_n is an index of the second carrier, $M_{PRS\_n}(i)$ is a quantity of frequency domain sub-resources of the second carrier $f\_n$ on the transmission occasion $i$.

17. The method according to any one of claims 11 to 13, wherein the first frequency domain resource is the frequency domain resource corresponding to the first carrier to which the first terminal device is connected, and the second frequency domain resource is the frequency domain resource corresponding to the second carrier to which the first terminal device is connected; and

the target transmit power corresponding to the first frequency domain resource or the second frequency domain resource is $P'_{PRS\_n}(i)$, $P'_{PRS\_n}(i) = \beta_{PRS\_n} \cdot P_{PRS\_n}(i)$, or $P'_{PRS\_n}(i) = \beta_{PRS\_n} + P_{PRS\_n}(i)$; and $\beta_{PRS\_n}$ satisfies the following relationship:

$$\beta_{PRS\_n} = \frac{P_{CMAX}}{P_{PRS\_n}(i)} \cdot \frac{M_{PRS\_n}(i)}{\Sigma M_{PRS}(i)} \; ; \quad \text{or} \quad \beta_{PRS\_n} = \frac{1}{P_{PRS\_n}(i)} \cdot \left( P_{CMAX} + 10log_{10} \left( \frac{M_{PRS\_n}(i)}{\Sigma M_{PRS}(i)} \right) \right) \; ;$$

or

$$\beta_{PRS\_n} = P_{CMAX} + 10log_{10} \left( \frac{M_{PRS\_n}(i)}{\Sigma M_{PRS}(i)} \right) - P_{PRS\_n}(i);$$

or

$$\beta_{PRS\_n} = \frac{\Delta P}{P_{PRS\_n}(i)} \cdot \frac{M_{PRS\_n}(i)}{\Sigma M_{PRS}(i)} \; ; \quad \text{or} \quad \beta_{PRS\_n} = \frac{1}{P_{PRS\_n}(i)} \cdot \left( \Delta P + 10log_{10} \left( \frac{M_{PRS\_n}(i)}{\Sigma M_{PRS}(i)} \right) \right) \; ;$$

or

$$\beta_{PRS\_n} = \Delta P + 10log_{10} \left( \frac{M_{PRS\_n}(i)}{\Sigma M_{PRS}(i)} \right) - P_{PRS\_n}(i),$$

wherein

$P_{CMAX}$ is the allowed maximum transmit power of the first terminal device, $\Delta P$ is the remaining transmit power determined based on the transmit power allocated to the at least one signal or channel whose priority is higher than that of the reference signal and $P_{CMAX}$, and $\Sigma M_{PRS}(i)$ is a sum of the quantity of frequency domain sub-resources of the first carrier and the quantity of frequency domain sub-resources of the second carrier on the transmission occasion $i$; and when $n$ in PRS_n is an index of the first carrier, $P'_{PRS\_n}(i)$ is the target transmit power corresponding to the first frequency domain resource, $P_{PRS\_n}(i)$ is the transmit power corresponding to the first frequency domain resource, and $M_{PRS\_n}(i)$ is a quantity of frequency domain sub-resources of the first carrier $f\_n$ on the transmission occasion $i$; or when $n$ in PRS_n is an index of the second carrier, $P'_{PRS\_n}(i)$ is the target transmit power corresponding to the second frequency domain resource, $P_{PRS\_n}(i)$ is the transmit power corresponding to the second frequency domain resource, and $M_{PRS\_n}(i)$ is a quantity of frequency domain sub-resources of the second carrier $f\_n$ on the transmission occasion $i$.

18. The method according to claim 9, wherein the first frequency domain unit is the frequency domain sub-resource of the first frequency domain resource, and the second frequency domain unit is the frequency domain sub-resource of the second frequency domain resource; and
the determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource comprises:

determining, by the first terminal device based on size information of the first frequency domain resource, size information of the second frequency domain resource, transmit power corresponding to the first frequency domain resource and/or the second frequency domain resource, and the ratio relationship, the target transmit power corresponding to the first frequency domain resource and the target transmit power corresponding to the second frequency domain resource, wherein

the first frequency domain resource is the resource corresponding to the active BWP of the first cell to which the first terminal device is connected, the second frequency domain resource is the resource corresponding to the active BWP of the second cell to which the first terminal device is connected, the size information of the first frequency domain resource comprises a quantity of frequency domain sub-resources in the active BWP of the first cell, and the size information of the second frequency domain resource comprises a quantity of frequency domain sub-resources in the active BWP of the second cell; or

the first frequency domain resource is the frequency domain resource corresponding to the first carrier to which the first terminal device is connected, the second frequency domain resource is the frequency domain resource corresponding to the second carrier to which the first terminal device is connected, the size information of the first frequency domain resource comprises a quantity of frequency domain sub-resources of the first carrier, and the size information of the second frequency domain resource comprises a quantity of frequency domain sub-resources of the second carrier.

19. The method according to any one of claims 1 to 9, wherein the first frequency domain unit is the frequency domain sub-resource of the first frequency domain resource, and the second frequency domain unit is the frequency domain sub-resource of the second frequency domain resource; and

the determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource comprises:

determining, by the first terminal device based on a ratio relationship between transmit power corresponding to the first frequency domain resource and total transmit power corresponding to a plurality of frequency domain resources, a ratio relationship between transmit power of the second frequency domain resource and the total transmit power corresponding to the plurality of frequency domain resources, and allocable transmit power of the first terminal device, the target transmit power corresponding to the first frequency domain resource and the target transmit power corresponding to the second frequency domain resource, wherein

the plurality of frequency domain resources comprise the first frequency domain resource and the second frequency domain resource.

20. The method according to claim 18 or 19, wherein the first frequency domain resource is the resource corresponding to the active BWP of the first cell to which the first terminal device is connected, and the second frequency domain resource is the resource corresponding to the active BWP of the second cell to which the first terminal device is connected; and

the target transmit power corresponding to the first frequency domain resource or the second frequency domain resource is $P'_{SRS,b\_m,f\_m,c\_m}(i, q_{s\_m})$; and $P'_{SRS,b\_m,f\_m,c\_m}(i, q_{s\_m}) = \frac{P_{SRS,b\_m,f\_m,c\_m}(i,q_{s\_m})}{\sum P_{SRS}(i)} \cdot P_{CMAX}(i)$; or $P'_{SRS,b\_m,f\_m,c\_m}(i, q_{s\_m}) = P_{SRS,b\_m,f\_m,c\_m}(i, q_{s\_m}) = \sum P_{SRS}(i)$

$P'_{SRS,b\_m,f\_m,c\_m}(i, q_{s\_m}) = \frac{P_{SRS,b\_m,f\_m,c\_m}(i,q_{s\_m})}{\sum P_{SRS}(i)} \cdot \Delta P(i)$

$+ P_{CMAX}(i)$; or $P'_{SRS,b\_m,f\_m,c\_m}(i, q_{s\_m}) = P_{SRS,b\_m,f\_m,c\_m}(i, q_{s\_m}) - \sum P_{SRS}(i) + \Delta P(i)$, wherein

$P_{CMAX}(i)$ is allowed maximum transmit power of the first terminal device on the transmission occasion $i$, $\Delta P(i)$ is remaining transmit power determined based on transmit power allocated to at least one signal or channel whose priority is higher than that of the reference signal and $P_{CMAX}(i)$, and $\sum P_{SRS}(i)$ is a sum of transmit power corresponding to the active BWP of the first cell and transmit power corresponding to the active BWP of the second cell on the transmission occasion $i$; and when m in $c\_m$ is an index of the first cell, $P'_{SRS,b\_m,f\_m,c\_m}(i,$

$q_{s\_m}$) is the target transmit power corresponding to the first frequency domain resource, $P_{SRS,b\_m,f\_m,c\_m}(i, q_{s\_m})$ is the transmit power corresponding to the first frequency domain resource, and $q_{s\_m}$ is an index corresponding to a resource or a resource set of the reference signal in the first cell; or when m in $c\_m$ is an index of the second cell, $P'_{SRS,b\_m,f\_m,c\_m}(i, q_{s\_m})$ is the target transmit power corresponding to the second frequency domain resource, $P_{SRS,b\_m,f\_m,c\_m}(i, q_{s\_m})$ is the transmit power corresponding to the second frequency domain resource, and $q_{s\_m}$ is an index corresponding to a resource or a resource set of the reference signal in the second cell.

21. The method according to claim 18 or 19, wherein the first frequency domain resource is the frequency domain resource corresponding to the first carrier to which the first terminal device is connected, and the second frequency domain resource is the frequency domain resource corresponding to the second carrier to which the first terminal device is connected; and

the target transmit power corresponding to the first frequency domain resource or the second frequency domain resource is $P'_{PRS\_n}(i)$, and
$$P'_{PRS\_n}(i) = \frac{P_{PRS\_n}(i)}{\sum P_{PRS}(i)} \cdot P_{CMAX}$$
; or $P'_{PRS\_n}(i) = P_{PRS\_n}(i) - \Sigma P_{PRS}(i) + P_{CMAX}$;
or

$$P'_{PRS\_n}(i) = \frac{P_{PRS\_n}(i)}{\sum P_{PRS}(i)} \cdot \Delta P; \text{ or } P'_{PRS\_n}(i) = P_{PRS\_n}(i) - \sum P_{PRS}(i) + \Delta P,$$

wherein
$P_{CMAX}$ is allowed maximum transmit power of the first terminal device, $\Delta P$ is remaining transmit power determined based on transmit power allocated to at least one signal or channel whose priority is higher than that of the reference signal and $P_{CMAX}$, and $\Sigma P_{PRS}(i)$ is a sum of transmit power corresponding to the first carrier and transmit power corresponding to the second carrier on the transmission occasion $i$; and when $n$ in $PRS\_n$ is an index of the first carrier, $P'_{PRS\_n}(i)$ is the target transmit power corresponding to the first frequency domain resource, and $P_{PRS\_n}(i)$ is the transmit power corresponding to the first frequency domain resource; or when n in $PRS\_n$ is an index of the second carrier, $P'_{PRS\_n}(i)$ is the target transmit power corresponding to the second frequency domain resource, and $P_{PRS\_n}(i)$ is the transmit power corresponding to the second frequency domain resource.

22. The method according to any one of claims 1 to 9, wherein the first frequency domain unit is the frequency domain sub-resource of the first frequency domain resource, and the second frequency domain unit is the frequency domain sub-resource of the second frequency domain resource; and
the determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource comprises:

when an open-loop power control parameter corresponding to the first frequency domain resource is configured for the first terminal device, and an open-loop power control parameter corresponding to the second frequency domain resource is not configured for the first terminal device, determining, by the first terminal device based on the open-loop power control parameter, a ratio relationship between a quantity of frequency domain sub-resources of the first frequency domain resource and a total quantity corresponding to a plurality of frequency domain sub-resources, and remaining transmit power, the target transmit power corresponding to the first frequency domain resource; and
determining, by the first terminal device based on the target transmit power corresponding to the first frequency domain resource and a ratio relationship between a quantity of frequency domain sub-resources of the second frequency domain resource and the quantity of frequency domain sub-resources of the first frequency domain resource, the target transmit power corresponding to the second frequency domain resource, wherein the remaining transmit power is determined based on transmit power allocated to at least one signal or channel whose priority is higher than that of the reference signal and allowed maximum transmit power of the first terminal device, and the plurality of frequency domain sub-resources comprise each frequency domain sub-resource in the first frequency domain resource and each frequency domain sub-resource in the second frequency domain resource.

23. The method according to claim 22, wherein the first frequency domain resource is the resource corresponding to the active BWP of the first cell to which the first terminal device is connected, the second frequency domain resource is the resource corresponding to the active BWP of the second cell to which the first terminal device is connected, and the open-loop power control parameter comprises target receive power of the reference signal, a path loss reference signal resource index corresponding to the reference signal, and a path loss compensation factor corresponding to the reference signal;

the target transmit power corresponding to the first frequency domain resource is $P'_{SRS,b\_m,f\_m,c\_m}(i, q_{s\_m})$, the target transmit power corresponding to the second frequency domain resource is $P'_{SRS,b\_n,f\_n,c\_n}(i, q_{s\_n})$, and $P'_{SRS,b\_m,f\_m,c\_m}(i, q_{s\_m}) =$

$$min \begin{cases} \Delta P(i) + 10log_{10}\left(\frac{M_{SRS,b\_m,f\_m,c\_m}(i)}{\Sigma M_{SRS}(i)}\right) \\ P_{O_{SRS,b\_m,f\_m,c\_m}}(q_{s\_m}) + 10\,log_{10}\left(2^{\mu\_m} \cdot M_{SRS,b\_m,f\_m,c\_m}(i)\right) + \\ \alpha_{SRS,b\_m,f\_m,c\_m}(q_{s\_m}) \cdot PL_{b\_m,f\_m,c\_m}(q_{d\_m}) \end{cases} ;$$

or

$$P'_{SRS,b\_m,f\_m,c\_m}(i, q_{s\_m}) =$$

$$min \begin{cases} P_{CMAX}(i) \\ \Delta P(i) + 10log_{10}\left(\frac{M_{SRS,b\_m,f\_m,c\_m}(i)}{\Sigma M_{SRS}(i)}\right) \\ P_{O_{SRS,b\_m,f\_m,c\_m}}(q_{s\_m}) + 10\,log_{10}\left(2^{\mu\_m} \cdot M_{SRS,b\_m,f\_m,c\_m}(i)\right) + \\ \alpha_{SRS,b\_m,f\_m,c\_m}(q_{s\_m}) \cdot PL_{b\_m,f\_m,c\_m}(q_{d\_m}) \end{cases} ;$$

and

$$P'_{SRS,b\_n,f\_n,c\_n}(i, q_{s\_n}) = P'_{SRS,b\_m,f\_m,c\_m}(i, q_{s\_m}) + 10log_{10}\left(\frac{M_{SRS,b\_n,f\_n,c\_n}(i)}{M_{SRS,b\_m,f\_m,c\_m}(i)}\right) ,$$

wherein
$\Delta P(i)$ is the remaining transmit power, $\Sigma M_{SRS}(i)$ is a sum of a quantity of frequency domain sub-resources in the active BWP of the first cell and a quantity of frequency domain sub-resources in the active BWP of the second cell on a transmission occasion $i$ for sending the reference signal, $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$, $q_{s\_m}$ is an index corresponding to a resource or a resource set of the reference signal in the first cell $c\_m$, $\mu\_m$ is a subcarrier spacing configuration corresponding to the active BWP $b\_m$ of the carrier $f\_m$ of the first cell $c\_m$, $P_{O_{SRS,b\_m,f\_m,c\_m}}(q_{s\_m})$ is target receive power of the reference signal in the active BWP $b\_m$ of the carrier $f\_m$ of the first cell $c\_m$, $\alpha_{SRS,b\_m,f\_m,c\_m}(q_{s\_m})$ is a path loss compensation factor corresponding to the reference signal in the active BWP $b\_m$ of the carrier $f\_m$ of the first cell $c\_m$, $PL_{b\_m,f\_m,c\_m}(q_{d\_m})$ is a path loss estimation value corresponding to the reference signal in the active BWP $b\_m$ of the carrier $f\_m$ of the first cell $c\_m$, and $M_{SRS,b\_n,f\_n,c\_n}(i)$ is a quantity of frequency domain sub-resources in the active BWP $b\_n$ of the carrier $f\_n$ of the second cell $c\_n$ on the transmission occasion $i$.

24. The method according to any one of claims 1 to 9, wherein the first frequency domain unit is the frequency domain sub-resource of the first frequency domain resource, and the second frequency domain unit is the frequency domain sub-resource of the second frequency domain resource; and
the determining, by the first terminal device based on the information corresponding to the first frequency domain resource and/or the second frequency domain resource and the ratio relationship, the target transmit power corresponding to the first frequency domain resource and the target transmit power corresponding to the second frequency domain resource comprises:

when an open-loop power control parameter corresponding to the first frequency domain resource is the same as an open-loop power control parameter corresponding to the second frequency domain resource, determining, by the first terminal device based on the open-loop power control parameter, a ratio relationship between a quantity of frequency domain sub-resources of the first frequency domain resource and a total quantity corresponding to a plurality of frequency domain sub-resources, a ratio relationship between a quantity of frequency domain sub-resources of the second frequency domain resource and the total quantity corresponding to the plurality of frequency domain sub-resources, and remaining transmit power, the target transmit power corresponding to the first frequency domain resource and the target transmit power corresponding to the second frequency domain resource, wherein

the remaining transmit power is determined based on transmit power allocated to at least one signal or channel whose priority is higher than that of the reference signal and allowed maximum transmit power of the first terminal device, and the plurality of frequency domain sub-resources comprise each frequency domain sub-resource in the first frequency domain resource and each frequency domain sub-resource in the second frequency domain resource.

25. The method according to claim 24, wherein the first frequency domain resource is the resource corresponding to the active BWP of the first cell to which the first terminal device is connected, the second frequency domain resource is the resource corresponding to the active BWP of the second cell to which the first terminal device is connected, and the open-loop power control parameter comprises target receive power of the reference signal, a path loss reference signal resource index corresponding to the reference signal, and a path loss compensation factor corresponding to the reference signal;

the target transmit power corresponding to the first frequency domain resource or the second frequency domain resource is $P'_{SRS,b\_m,f\_m,c\_m}(i, q_{s\_m})$, and $P'_{SRS,b\_m,f\_m,c\_m}(i, q_{s\_m}) =$

$$
min \left\{
\begin{array}{l}
\Delta P(i) + 10log_{10}\left(\frac{M_{SRS,b\_m,f\_m,c\_m}(i)}{\Sigma M_{SRS}(i)}\right) \\
P_{O_{SRS,b\_m,f\_m,c\_m}}(q_{s\_m}) + 10\,log_{10}\left(2^{\mu\_m} \cdot M_{SRS,b\_m,f\_m,c\_m}(i)\right) + \\
\alpha_{SRS,b\_m,f\_m,c\_m}(q_{s\_m}) \cdot PL_{b\_m,f\_m,c\_m}(q_{d\_m})
\end{array}
\right\};
$$

or

$$
P'_{SRS,b\_m,f\_m,c\_m}(i, q_{s\_m}) =
$$
$$
min \left\{
\begin{array}{l}
P_{CMAX}(i) \\
\Delta P(i) + 10log_{10}\left(\frac{M_{SRS,b\_m,f\_m,c\_m}(i)}{\Sigma M_{SRS}(i)}\right) \\
P_{O_{SRS,b\_m,f\_m,c\_m}}(q_{s\_m}) + 10\,log_{10}\left(2^{\mu\_m} \cdot M_{SRS,b\_m,f\_m,c\_m}(i)\right) + \\
\alpha_{SRS,b\_m,f\_m,c\_m}(q_{s\_m}) \cdot PL_{b\_m,f\_m,c\_m}(q_{d\_m})
\end{array}
\right\},
$$

wherein
$\Delta P(i)$ is the remaining transmit power, and $\Sigma M_{SRS}(i)$ is a sum of a quantity of frequency domain sub-resources in the active BWP of the first cell and a quantity of frequency domain sub-resources in the active BWP of the second cell on a transmission occasion $i$ for sending the reference signal; and when $m$ in $c\_m$ is an index of the first cell, $P'_{SRS,b\_m,f\_m,c\_m}(i, q_{s\_m})$ is the target transmit power corresponding to the first frequency domain resource, $M_{SRS,b\_m,f\_m,c\_m}(i)$ is a quantity of frequency domain sub-resources in an active BWP $b\_m$ of a carrier $f\_m$ of the first cell $c\_m$ on the transmission occasion $i$, $q_{s\_m}$ is an index corresponding to a resource or a resource set of the reference signal in the first cell $c\_m$, $\mu\_m$ is a subcarrier spacing configuration corresponding to the active BWP $b\_m$ of the carrier $f\_m$ of the first cell $c\_m$, $P_{O_{SRS,b\_m,f\_m,c\_m}}(q_{s\_m})$ is target receive power of the reference signal in the active BWP $b\_m$ of the carrier $f\_m$ of the first cell $c\_m$, $\alpha_{SRS,b\_m,f\_m,c\_m}(q_{s\_m})$ is a path loss compensation factor corresponding to the reference signal in the active BWP $b\_m$ of the carrier $f\_m$ of the first cell $c\_m$, and $PL_{b\_m,f\_m,c\_m}(q_{d\_m})$ is a path loss estimation value corresponding to the reference signal in the active BWP $b\_m$ of the carrier $f\_m$ of the first cell $c\_m$; or when $m$ in $c\_m$ is an index of the second cell, $P'_{SRS,b\_m,f\_m,c\_m}(i, q_{s\_m})$ is the target transmit power corresponding to the second frequency domain resource, $M_{SRS,b\_m,f\_m,c\_m}(i)$ is a quantity of frequency domain sub-resources in an active BWP $b\_m$ of a carrier $f\_m$ of the second cell $c\_m$ on the transmission occasion $i$, $q_{s\_m}$ is an index corresponding to a resource or a resource set of the reference signal in the second cell $c\_m$, $\mu\_m$ is a subcarrier spacing configuration corresponding to the active BWP $b\_m$ of the carrier $f\_m$ of the second cell $c\_m$, $P_{OSRS,b\_m,f\_m,c\_m}(q_{s\_m})$ is target receive power of the reference signal in the active BWP $b\_m$ of the carrier $f\_m$ of the second cell $c\_m$, $\alpha_{SRS,b\_m,f\_m,c\_m}(q_{s\_m})$ is a path loss compensation factor corresponding to the reference signal in the active BWP $b\_m$ of the carrier $f\_m$ of the second cell $c\_m$, and $PL_{b\_m,f\_m,c\_m}(q_{d\_m})$ is a path loss estimation value corresponding to the reference signal in the active BWP $b\_m$ of the carrier $f\_m$ of the second cell $c\_m$,

26. The method according to any one of claims 1 to 25, wherein the method further comprises:
sending, by the first terminal device, third indication information to the second device, wherein the third indication information indicates that the first terminal device simultaneously sends the reference signal and the at least one signal or channel whose priority is higher than that of the reference signal; or the third indication information indicates that data is sent on the transmission occasion for sending the reference signal; or the third indication information indicates that the at least one signal or channel whose priority is higher than that of the reference signal is sent on the transmission occasion; or the third indication information indicates that transmit energy per resource element EPRE corresponding to the first frequency domain resource and/or the second frequency domain resource decreases on the transmission occasion; or the third indication information indicates that the allocable transmit power of the first terminal device decreases on the transmission occasion; or the third indication information indicates that a power level of the first terminal device decreases on the transmission occasion; or the third indication information indicates that power reduction exists on the first terminal device on the transmission occasion.

27. A power control method, wherein the method comprises:

determining, by a first terminal device, a power adjustment coefficient corresponding to a first frequency domain resource and transmit power corresponding to a second frequency domain resource, wherein the first frequency domain resource and the second frequency domain resource are used to send a reference signal; and
determining, by the first terminal device, target transmit power of the first frequency domain resource based on the power adjustment coefficient corresponding to the first frequency domain resource and the transmit power corresponding to the second frequency domain resource.

28. The method according to claim 27, wherein the method further comprises:
receiving, by the first terminal device, second indication information from a second device, wherein the second indication information indicates the first terminal device to determine the target transmit power of the first frequency domain resource based on the power adjustment coefficient corresponding to the first frequency domain resource and the transmit power corresponding to the second frequency domain resource.

29. The method according to claim 28, wherein the second indication information comprises the power adjustment coefficient corresponding to the first frequency domain resource.

30. The method according to claim 28 or 29, wherein before the receiving, by the first terminal device, second indication information from a second device, the method further comprises:
sending, by the first terminal device, capability information to the second device, wherein the capability information indicates that the first terminal device has a capability of sending the reference signal based on a power adjustment coefficient corresponding to a frequency domain resource.

31. The method according to any one of claims 27 to 30, wherein the method further comprises:
sending, by the first terminal device, the reference signal on the first frequency domain resource at the target transmit power corresponding to the first frequency domain resource, and sending, by the first terminal device, the reference signal on the second frequency domain resource at the transmit power corresponding to the second frequency domain resource.

32. A power control method, wherein the method comprises:
sending, by a second device, first indication information to a first terminal device, wherein the first indication information indicates the first terminal device to determine, based on a ratio relationship between target transmit power corresponding to a first frequency domain unit and target transmit power corresponding to a second frequency domain unit, target transmit power corresponding to the first frequency domain resource and target transmit power corresponding to the second frequency domain resource, wherein the first frequency domain unit is the first frequency domain resource, and the second frequency domain unit is the second frequency domain resource; or the first frequency domain unit is a frequency domain sub-resource of the first frequency domain resource, and the second frequency domain unit is a frequency domain sub-resource of the second frequency domain resource; and the first frequency domain resource and the second frequency domain resource are used to send a reference signal.

33. The method according to claim 32, wherein the first indication information comprises the ratio relationship.

34. The method according to claim 32 or 33, wherein before the sending, by a second device, first indication information to a first terminal device, the method further comprises:
receiving, by the second device, capability information from the first terminal device, wherein the capability information indicates that the first terminal device has a capability of sending the reference signal based on a ratio relationship between target transmit power corresponding to different frequency domain units.

35. The method according to any one of claims 32 to 34, wherein the method further comprises:
receiving third indication information from the first terminal device, wherein the third indication information indicates that the first terminal device simultaneously sends the reference signal and at least one signal or channel whose priority is higher than that of the reference signal; or the third indication information indicates that data is sent on a transmission occasion for sending the reference signal; or the third indication information indicates that the at least one signal or channel whose priority is higher than that of the reference signal is sent on the transmission occasion; or the third indication information indicates that transmit energy per resource element EPRE corresponding to the first frequency domain resource and/or the second frequency domain resource decreases on the transmission occasion; or the third indication information indicates that allocable transmit power of the first terminal device decreases on the transmission occasion; or the third indication information indicates that a power level of the first terminal device decreases on the transmission occasion; or the third indication information indicates that power reduction exists on the first terminal device on the transmission occasion.

36. A power control method, wherein the method comprises:
sending, by a second device, second indication information to a first terminal device, wherein the second indication information indicates the first terminal device to determine target transmit power of a first frequency domain resource based on a power adjustment coefficient corresponding to the first frequency domain resource and transmit power corresponding to a second frequency domain resource, wherein the first frequency domain resource and the second frequency domain resource are used to send a reference signal.

37. The method according to claim 36, wherein the second indication information comprises the power adjustment coefficient corresponding to the first frequency domain resource.

38. The method according to claim 36 or 37, wherein before the sending, by a second device, second indication information to a first terminal device, the method further comprises:
receiving, by the second device, capability information from the first terminal device, wherein the capability information indicates that the first terminal device has a capability of sending the reference signal based on a power adjustment coefficient corresponding to a frequency domain resource.

39. A communication apparatus, wherein the communication apparatus is configured to perform the power control method according to any one of claims 1 to 26.

40. A communication apparatus, wherein the communication apparatus is configured to perform the power control method according to any one of claims 27 to 31.

41. A communication apparatus, wherein the communication apparatus is configured to perform the power control method according to any one of claims 32 to 38.

42. A communication apparatus, comprising:

a processor, wherein the processor is coupled to a memory; and
the processor is configured to execute a computer program stored in the memory, so that the communication apparatus performs the power control method according to any one of claims 1 to 38.

**43.** A communication apparatus, comprising:

a processor and an interface circuit, wherein the interface circuit is configured to receive code instructions and transmit the code instructions to the processor; and
the processor is configured to run the code instructions to perform the power control method according to any one of claims 1 to 38.

**44.** A communication apparatus, wherein the communication apparatus comprises a processor and a transceiver, the transceiver is configured to exchange information between the communication apparatus and another communication apparatus, and the processor executes program instructions to perform the power control method according to any one of claims 1 to 38.

**45.** A computer-readable storage medium, wherein the computer-readable storage medium comprises a computer program or instructions, and when the computer program or the instructions are run on a computer, the computer is enabled to perform the power control method according to any one of claims 1 to 38.

AGC  PSCCH

PSSCH  Gap

Frequency
domain

One sub-
channel

One slot

Time
domain

**FIG. 1**

Network
device #1

Network
device #2

Terminal
device

Network
device #3

**FIG. 2**

Band #1

Band #2

Band #3

Bandwidth #1  Bandwidth #2  Bandwidth #3

Carrier #1  Carrier #2  Carrier #3

Frequency

**FIG. 3**

**FIG. 4**

**FIG. 5**

**FIG. 6**

Terminal
device 700

Network
device 800

701

Processor

703

Tx

Rx

702

Memory

Computer-
executable
instruction

704

Output
device

705

Input
device

803

Tx

Rx

801

Processor

802

Memory

Computer-
executable
instruction

Network
interface

804

Core network
device

**FIG. 7**

First terminal
device

Second device

S804: First indication information

S801: Determine a ratio relationship between
target transmit power corresponding to a first
frequency domain unit and target transmit
power corresponding to a second frequency
domain unit

S802: Determine target transmit power
corresponding to a first frequency domain
resource and target transmit power
corresponding to a second frequency domain
resource

S803: Reference signal

**FIG. 8**

First terminal device

Second device

S904: Second indication information

S901: Determine a power adjustment coefficient corresponding to a first frequency domain resource and transmit power corresponding to a second frequency domain resource

S902: Determine target transmit power of the first frequency domain resource

S903: Reference signal

FIG. 9

First terminal device ⌐ 100

Transceiver module ⌐ 1002

Processing module

1001 ⌐

FIG. 10

Second device ⌐ 110

Transceiver module ⌐ 1102

Processing module

1101 ⌐

FIG. 11

## INTERNATIONAL SEARCH REPORT

| International application No. |
|---|
| **PCT/CN2023/094058** |

| A. | CLASSIFICATION OF SUBJECT MATTER |
|---|---|

H04W 52/18(2009.01)i

According to International Patent Classification (IPC) or to both national classification and IPC

| B. | FIELDS SEARCHED |
|---|---|

Minimum documentation searched (classification system followed by classification symbols)

IPC: H04W H04Q

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN, CNKI: 倍数, 比例, 比率, 比值, 部分带宽, 参考信号, 成员载波, 带宽部, 定位, 分量载波, 功率, 频带, 频率单元, 频域单元, 频域资源, 双连接, 载波, 载波聚合, 之比, 资源单元, 资源块, 资源元素, 系数, bandwidth part?, BWP, CA, carrier, aggregat+, CC, CCs, component, DC, dual, connect+, frequency, power, PRB, PRS, ratio, RB, RE, reference signal, RS, SRS, coefficient?, locat+, position+, unit?, proportion+, band?, resource element?, resource block?, subband?, subcarrier?

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108702278 A (HUAWEI TECHNOLOGIES CO., LTD.) 23 October 2018 (2018-10-23) description, paragraphs 0009-0049 and 0068-0265, and figures 1-17 | 27-31, 36-38, 40-45 |
| A | CN 102687567 A (INTERDIGITAL PATENT HOLDINGS, INC.) 19 September 2012 (2012-09-19) entire document | 1-45 |
| A | CN 107113153 A (HUAWEI TECHNOLOGIES CO., LTD.) 29 August 2017 (2017-08-29) entire document | 1-45 |
| A | JP 2012169939 A (NTT DOCOMO, INC.) 06 September 2012 (2012-09-06) entire document | 1-45 |
| A | HUAWEI et al. "Rel-17 UE features for NR positioning enhancements" *3GPP TSG RAN WG1 Meeting #106bis-e R1-2109147*, 19 October 2021 (2021-10-19), entire document | 1-45 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 August 2023** | **05 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2023/094058**

| Patent document cited in search report | | | Publication date (day/month/year) | Patent family member(s) | | | Publication date (day/month/year) |
|---|---|---|---|---|---|---|---|
| CN | 108702278 | A | 23 October 2018 | WO | 2018227636 | A1 | 20 December 2018 |
| | | | | EP | 3618513 | A1 | 04 March 2020 |
| | | | | US | 2020374817 | A1 | 26 November 2020 |
| CN | 102687567 | A | 19 September 2012 | TW | 201635828 | A | 01 October 2016 |
| | | | | US | 2011081936 | A1 | 07 April 2011 |
| | | | | JP | 2013507070 | A | 28 February 2013 |
| | | | | EP | 2484156 | A1 | 08 August 2012 |
| | | | | JP | 2016105656 | A | 09 June 2016 |
| | | | | TW | 201138516 | A | 01 November 2011 |
| | | | | WO | 2011041700 | A1 | 07 April 2011 |
| | | | | JP | 2015043626 | A | 05 March 2015 |
| | | | | KR | 20120094923 | A | 27 August 2012 |
| | | | | KR | 20170013408 | A | 06 February 2017 |
| | | | | US | 2014362814 | A1 | 11 December 2014 |
| | | | | EP | 3209070 | A1 | 23 August 2017 |
| | | | | TW | 201517664 | A | 01 May 2015 |
| | | | | CN | 104981007 | A | 14 October 2015 |
| CN | 107113153 | A | 29 August 2017 | WO | 2017045205 | A1 | 23 March 2017 |
| JP | 2012169939 | A | 06 September 2012 | | None | | |

Form PCT/ISA/210 (patent family annex) (July 2022)

**REFERENCES CITED IN THE DESCRIPTION**

**Patent documents cited in the description**

- CN 202210968894